# EUROPEAN PATENT APPLICATION

(11) **EP 4 613 108 A1**
(43) Date of publication of application: **10.09.2025**
(21) Application number: 23885886.4
(22) Date of filing: 02.11.2023
(51) Int. Cl.: A23L 27/00, A23F 3/16, A23F 5/24, A23L 2/00, A23L 2/02, A23L 2/38, A23L 2/52, A23L 2/60, A23L 27/20, A23L 27/28, A23L 27/29

(54) **SWEETNESS AND/OR FLAVOR ENHANCER**

(30) Priority: 04.11.2022 JP 2022177647
(71) Applicant: AJINOMOTO CO., INC., Chuo-ku Tokyo 104-8315 (JP)
(72) Inventor: MIURA, Yoshimasa, Kawasaki-shi, Kanagawa 210-8681 (JP); KANNO, Kyoko, Kawasaki-shi, Kanagawa 210-8681 (JP); KITAJIMA, Seiji, Kawasaki-shi, Kanagawa 210-8681 (JP); SHIMOSUKA, Koji, Kawasaki-shi, Kanagawa 210-8681 (JP)
(74) Representative: Strehl & Partner mbB
(86) International application number: PCT/JP2023/039771
(87) International publication number: WO 2024/096132

(57) **Abstract**

The present invention aims to provide a sweetness and/or flavor enhancer, a food or drink containing the enhancer, and a method for enhancing sweetness and/or flavor of a food or drink, which can afford a sense of satisfaction at the time of eating even when the amount of sugar in the food or drink has been reduced. A sweetness and/or flavor enhancer containing any one of 4-methylpentanoic acid, cyclotene, and saturated aliphatic monocarboxylic acid having 8 to 12 carbon atoms alone or in combination of two or three of these, or a combination of these with naringenin or glutamylvalylglycine, as active ingredients. A food or drink containing the enhancer, and a component that imparts sweetness and/or a component that imparts flavor. A method for enhancing sweetness and/or flavor of a food or drink containing a component that imparts sweetness and/or a component that imparts flavor, including adding any of the above-mentioned active ingredients to the food or drink.

## Description

### [Technical Field]

The present invention relates to a sweetness and/or flavor enhancer, a food or drink containing the enhancer, and a method for enhancing sweetness and/or flavor of a food or drink by using the enhancer.

### [Background Art]

As excessive sugar intake can lead to various lifestyle-related diseases, attempts have been increasingly made around the world to reduce sugar intake. However, when the amount of sugar in foods and drinks is reduced, the intensity of sweetness and flavor of the foods and drinks is also reduced, thereby posing a problem of reduced satisfaction at the time of eating.

There is therefore a demand for the development of technology that enhances the sweetness and flavor of foods and drinks, so that satisfaction at the time of eating can be obtained even when the amount of sugar in the foods and drinks is reduced.

Patent Literature 1 discloses a method for producing a food or drink, which includes adding a flavoring material (A) containing 0.1 ppm or more of cyclotene, obtained by a production method including a step of heating an aqueous solution or suspension containing one or more amino acids or salts thereof selected from the group consisting of aspartic acid, glutamic acid, methionine, valine, histidine, and salts thereof at a final concentration of 0.1 to 8.5 M, and one or more sugars selected from the group consisting of ribose, xylose, arabinose, glucose, fructose, sucrose, maltose, and lactose at a final concentration of 0.1 to 6.7 M, to a food or drink containing sugar (B).

Patent Literature 2 discloses a flavor improver for a food or drink, which contains a triglyceride having a straight-chain saturated fatty acid with 6 to 12 carbon atoms as the fatty acid constituting the triglyceride, as an active ingredient, and characteristically reduces sourness and/or enhances sweetness.

Patent Literature 3 discloses a beer-tasting drink containing 4-methylpentanoic acid.

Patent Literature 4 discloses a method for enhancing a flavor of a food or drink, including adding a lower fatty acid at a concentration 0.01 to 0.5 times the threshold concentration thereof.

Patent Literature 5 discloses a method for producing a food or drink having improved aroma and/or flavor, including adding any of (i) decanoic acid, (ii) octanoic acid, and (iii) one or more of acetol, furfural, methyltetrahydrofuranone, and 2-acetyl-5-methylfuran, which is characterized in that (i), (ii), and (iii) are added to the food or drink to achieve a specific blend.

However, there has been no study on the effect of enhancing the sweetness and/or flavor of foods and drinks by adding any one of 4-methylpentanoic acid, cyclotene, or saturated aliphatic monocarboxylic acid having 8 to 12 carbon atoms (e.g., decanoic acid) alone or in combination of two or three of these, or a combination of these with naringenin or glutamylvalylglycine.

### [Citation List]

### [Patent Literature]

[Patent Literature 1]
   JP 2016-63759 A
[Patent Literature 2]
   JP 2017-212957 A
[Patent Literature 3]
   JP 2021-106512 A
[Patent Literature 4]
   JP 2008-263903 A
[Patent Literature 5]
   WO 2011/078376

### [Summary of Invention]

### [Technical Problem]

An object of the present invention is to provide a sweetness and/or flavor enhancer that can provide a sense of satisfaction at the time of eating a food or drink even when the amount of sugar in the food or drink has been reduced, a food or drink containing said enhancer, and a method for enhancing the sweetness and/or flavor of a food or drink.

### [Solution to Problem]

The present inventors have conducted intensive studies in an attempt to solve the above-mentioned problems and found that the sweetness and/or flavor of foods and drinks can be enhanced by adding any one of 4-methylpentanoic acid, cyclotene, and saturated aliphatic monocarboxylic acid having 8 to 12 carbon atoms (e.g., decanoic acid) alone or in combination of two or three of these, or a combination of these with naringenin or glutamylvalylglycine. Based on this finding, the present inventors have conducted further studies and completed the present invention.

Accordingly, the present invention provides the following.
[1] A sweetness and/or flavor enhancer comprising any of the following (1) to (21) as an active ingredient:
   (1) 4-methylpentanoic acid or a salt thereof
   (2) cyclotene
   (3) saturated aliphatic monocarboxylic acid having 8 to 12 carbon atoms or a salt thereof
   (4) 4-methylpentanoic acid or a salt thereof, and cyclotene
   (5) 4-methylpentanoic acid or a salt thereof, and saturated aliphatic monocarboxylic acid having 8 to 12 carbon atoms or a salt thereof
   (6) cyclotene, and saturated aliphatic monocarboxylic acid having 8 to 12 carbon atoms or a salt thereof
   (7) 4-methylpentanoic acid or a salt thereof, cyclotene, and saturated aliphatic monocarboxylic acid having 8 to 12 carbon atoms or a salt thereof
   (8) 4-methylpentanoic acid or a salt thereof, and naringenin
   (9) 4-methylpentanoic acid or a salt thereof, and glutamylvalylglycine
   (10) cyclotene, and naringenin
   (11) cyclotene, and glutamylvalylglycine
   (12) saturated aliphatic monocarboxylic acid having 8 to 12 carbon atoms or a salt thereof, and naringenin
   (13) saturated aliphatic monocarboxylic acid having 8 to 12 carbon atoms or a salt thereof, and glutamylvalylglycine
   (14) 4-methylpentanoic acid or a salt thereof, cyclotene, and naringenin
   (15) 4-methylpentanoic acid or a salt thereof, cyclotene, and glutamylvalylglycine
   (16) 4-methylpentanoic acid or a salt thereof, saturated aliphatic monocarboxylic acid having 8 to 12 carbon atoms or a salt thereof, and naringenin
   (17) 4-methylpentanoic acid or a salt thereof, saturated aliphatic monocarboxylic acid having 8 to 12 carbon atoms or a salt thereof, and glutamylvalylglycine
   (18) cyclotene, saturated aliphatic monocarboxylic acid having 8 to 12 carbon atoms or a salt thereof, and naringenin
   (19) cyclotene, saturated aliphatic monocarboxylic acid having 8 to 12 carbon atoms or a salt thereof, and glutamylvalylglycine
   (20) 4-methylpentanoic acid or a salt thereof, cyclotene, saturated aliphatic monocarboxylic acid having 8 to 12 carbon atoms or a salt thereof, and naringenin
   (21) 4-methylpentanoic acid or a salt thereof, cyclotene, saturated aliphatic monocarboxylic acid having 8 to 12 carbon atoms or a salt thereof, and glutamylvalylglycine.
[1'] A sweetness and/or flavor enhancer comprising any of the following (1) to (7) as an active ingredient:
   (1) 4-methylpentanoic acid or a salt thereof
   (2) cyclotene
   (3) decanoic acid or a salt thereof
   (4) 4-methylpentanoic acid or a salt thereof, and cyclotene
   (5) 4-methylpentanoic acid or a salt thereof, and decanoic acid or a salt thereof
   (6) cyclotene, and decanoic acid or a salt thereof
   (7) 4-methylpentanoic acid or a salt thereof, cyclotene, and decanoic acid or a salt thereof.
[2] The enhancer of the above-mentioned [1], wherein the active ingredient is the aforementioned (1) 4-methylpentanoic acid or a salt thereof, and the enhancer is to be added to a food or drink comprising a component that imparts sweetness and/or a component that imparts flavor such that the content of the 4-methylpentanoic acid or a salt thereof in the food or drink is 0.001 weight ppb or more (more preferably 0.003 weight ppb or more, further preferably 0.008 weight ppb or more, particularly preferably 0.01 weight ppb or more).
[3] The enhancer of the above-mentioned [1], wherein the active ingredient is the aforementioned (2) cyclotene, and the enhancer is to be added to a food or drink comprising a component that imparts sweetness and/or a component that imparts flavor such that the content of the cyclotene in the food or drink is 0.001 weight ppb or more (more preferably 0.003 weight ppb or more, further preferably 0.008 weight ppb or more, particularly preferably 0.01 weight ppb or more).
[4] The enhancer of the above-mentioned [1], wherein the active ingredient is the aforementioned (3) saturated aliphatic monocarboxylic acid having 8 to 12 carbon atoms (e.g., decanoic acid) or a salt thereof, and the enhancer is to be added to a food or drink comprising a component that imparts sweetness and/or a component that imparts flavor such that the content of the saturated aliphatic monocarboxylic acid having 8 to 12 carbon atoms (e.g., decanoic acid) or a salt thereof in the food or drink is 0.001 weight ppb or more (more preferably 0.003 weight ppb or more, further preferably 0.008 weight ppb or more, particularly preferably 0.01 weight ppb or more).
[5] The enhancer of the above-mentioned [1], wherein the active ingredient is the aforementioned (4) 4-methylpentanoic acid or a salt thereof, and cyclotene, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.001 weight ppb or more, further preferably 0.005 weight ppb or more, particularly preferably 0.01 weight ppb or more), and the content of the cyclotene in the food or drink is 0.0001 weight ppb or more (more preferably 0.001 weight ppb or more, further preferably 0.005 weight ppb or more, particularly preferably 0.01 weight ppb or more).
[6] The enhancer of the above-mentioned [1], wherein the active ingredient is the aforementioned (5) 4-methylpentanoic acid or a salt thereof, and saturated aliphatic monocarboxylic acid having 8 to 12 carbon atoms (e.g., decanoic acid) or a salt thereof, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.001 weight ppb or more, further preferably 0.005 weight ppb or more, particularly preferably 0.01 weight ppb or more), and the content of the saturated aliphatic monocarboxylic acid having 8 to 12 carbon atoms (e.g., decanoic acid) or a salt thereof in the food or drink is 0.0001 weight ppb or more (more preferably 0.001 weight ppb or more, further preferably 0.005 weight ppb or more, particularly preferably 0.01 weight ppb or more).
[7] The enhancer of the above-mentioned [1], wherein the active ingredient is the aforementioned (6) cyclotene, and saturated aliphatic monocarboxylic acid having 8 to 12 carbon atoms (e.g., decanoic acid) or a salt thereof, and the enhancer is to be added to a food or drink comprising a component that imparts sweetness and/or a component that imparts flavor such that the content of the cyclotene in the food or drink is 0.0001 weight ppb or more (more preferably 0.001 weight ppb or more, further preferably 0.005 weight ppb or more, particularly preferably 0.01 weight ppb or more), and the content of the saturated aliphatic monocarboxylic acid having 8 to 12 carbon atoms (e.g., decanoic acid) or a salt thereof in the food or drink is 0.0001 weight ppb or more (more preferably 0.001 weight ppb or more, further preferably 0.005 weight ppb or more, particularly preferably 0.01 weight ppb or more).
[8] The enhancer of the above-mentioned [1], wherein the active ingredient is the aforementioned (7) 4-methylpentanoic acid or a salt thereof, cyclotene, and saturated aliphatic monocarboxylic acid having 8 to 12 carbon atoms (e.g., decanoic acid) or a salt thereof, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.001 weight ppb or more, further preferably 0.005 weight ppb or more, particularly preferably 0.01 weight ppb or more), the content of the cyclotene in the food or drink is 0.0001 weight ppb or more (more preferably 0.001 weight ppb or more, further preferably 0.005 weight ppb or more, particularly preferably 0.01 weight ppb or more), and the content of the saturated aliphatic monocarboxylic acid having 8 to 12 carbon atoms (e.g., decanoic acid) or a salt thereof in the food or drink is 0.0001 weight ppb or more (more preferably 0.001 weight ppb or more, further preferably 0.005 weight ppb or more, particularly preferably 0.01 weight ppb or more).
[9] The enhancer of the above-mentioned [1], wherein the active ingredient is the aforementioned (8) 4-methylpentanoic acid or a salt thereof, and naringenin, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.0005 weight ppb or more, further preferably 0.001 weight ppb or more, particularly preferably 0.01 weight ppb or more), and the content of the naringenin in the food or drink is 0.001 weight ppm or more (more preferably 0.01 weight ppm or more, further preferably 0.1 weight ppm or more, particularly preferably 1 weight ppm or more).
[10] The enhancer of the above-mentioned [1], wherein the active ingredient is the aforementioned (9) 4-methylpentanoic acid or a salt thereof, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.001 weight ppb or more, further preferably 0.005 weight ppb or more, particularly preferably 0.01 weight ppb or more), and the content of the glutamylvalylglycine in the food or drink is 0.001 weight ppm or more (more preferably 0.01 weight ppm or more, further preferably 0.05 weight ppm or more, particularly preferably 0.1 weight ppm or more).
[11] The enhancer of the above-mentioned [1], wherein the active ingredient is the aforementioned (10) cyclotene, and naringenin, and the enhancer is to be added to a food or drink comprising a component that imparts sweetness and/or a component that imparts flavor such that the content of the cyclotene in the food or drink is 0.000001 weight ppb or more (more preferably 0.00001 weight ppb or more, further preferably 0.00005 weight ppb or more, particularly preferably 0.0001 weight ppb or more), and the content of the naringenin in the food or drink is 0.001 weight ppm or more (more preferably 0.01 weight ppm or more, further preferably 0.1 weight ppm or more, particularly preferably 1 weight ppm or more).
[12] The enhancer of the above-mentioned [1], wherein the active ingredient is the aforementioned (11) cyclotene, and glutamylvalylglycine, and the enhancer is to be added to a food or drink comprising a component that imparts sweetness and/or a component that imparts flavor such that the content of the cyclotene in the food or drink is 0.000001 weight ppb or more (more preferably 0.00001 weight ppb or more, further preferably 0.00005 weight ppb or more, particularly preferably 0.0001 weight ppb or more), and the content of the glutamylvalylglycine in the food or drink is 0.001 weight ppm or more (more preferably 0.01 weight ppm or more, further preferably 0.05 weight ppm or more, particularly preferably 0.1 weight ppm or more).
[13] The enhancer of the above-mentioned [1], wherein the active ingredient is the aforementioned (12) saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the naringenin in the food or drink is 0.001 weight ppm or more (more preferably 0.01 weight ppm or more, further preferably 0.1 weight ppm or more, particularly preferably 1 weight ppm or more).
[14] The enhancer of the above-mentioned [1], wherein the active ingredient is the aforementioned (13) saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the glutamylvalylglycine in the food or drink is 0.001 weight ppm or more (more preferably 0.01 weight ppm or more, further preferably 0.05 weight ppm or more, particularly preferably 0.1 weight ppm or more).
[15] The enhancer of the above-mentioned [1], wherein the active ingredient is the aforementioned (14) 4-methylpentanoic acid or a salt thereof, cyclotene, and naringenin, and the enhancer is to beadded to a food or drink comprising a component that imparts sweetness and/or a component that imparts flavor such that the content of the 4-methylpentanoic acid or a salt thereof in the food or drink is 0.0001 weight ppb or more (more preferably 0.0005 weight ppb or more, further preferably 0.001 weight ppb or more, particularly preferably 0.01 weight ppb or more), the content of the cyclotene in the food or drink is 0.000001 weight ppb or more (more preferably 0.00001 weight ppb or more, further preferably 0.00005 weight ppb or more, particularly preferably 0.0001 weight ppb or more), and the content of the naringenin in the food or drink is 0.001 weight ppm or more (more preferably 0.01 weight ppm or more, further preferably 0.1 weight ppm or more, particularly preferably 1 weight ppm or more).
[16] The enhancer of the above-mentioned [1], wherein the active ingredient is the aforementioned (15) 4-methylpentanoic acid or a salt thereof, cyclotene, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.0005 weight ppb or more, further preferably 0.001 weight ppb or more, particularly preferably 0.01 weight ppb or more), the content of the cyclotene in the food or drink is 0.000001 weight ppb or more (more preferably 0.00001 weight ppb or more, further preferably 0.00005 weight ppb or more, particularly preferably 0.0001 weight ppb or more), and the content of the glutamylvalylglycine in the food or drink is 0.001 weight ppm or more (more preferably 0.01 weight ppm or more, further preferably 0.05 weight ppm or more, particularly preferably 0.1 weight ppm or more).
[17] The enhancer of the above-mentioned [1], wherein the active ingredient is the aforementioned (16) 4-methylpentanoic acid or a salt thereof, saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.0005 weight ppb or more, further preferably 0.001 weight ppb or more, particularly preferably 0.01 weight ppb or more), the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the naringenin in the food or drink is 0.001 weight ppm or more (more preferably 0.01 weight ppm or more, further preferably 0.1 weight ppm or more, particularly preferably 1 weight ppm or more).
[18] The enhancer of the above-mentioned [1], wherein the active ingredient is the aforementioned (17) 4-methylpentanoic acid or a salt thereof, saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.0005 weight ppb or more, further preferably 0.001 weight ppb or more, particularly preferably 0.01 weight ppb or more), the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the glutamylvalylglycine in the food or drink is 0.001 weight ppm or more (more preferably 0.01 weight ppm or more, further preferably 0.05 weight ppm or more, particularly preferably 0.1 weight ppm or more).
[19] The enhancer of the above-mentioned [1], wherein the active ingredient is the aforementioned (18) cyclotene, saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the cyclotene in the food or drink is 0.000001 weight ppb or more (more preferably 0.00001 weight ppb or more, further preferably 0.00005 weight ppb or more, particularly preferably 0.0001 weight ppb or more), the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the naringenin in the food or drink is 0.001 weight ppm or more (more preferably 0.01 weight ppm or more, further preferably 0.1 weight ppm or more, particularly preferably 1 weight ppm or more).
[20] The enhancer of the above-mentioned [1], wherein the active ingredient is the aforementioned (19) cyclotene, saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the cyclotene in the food or drink is 0.000001 weight ppb or more (more preferably 0.00001 weight ppb or more, further preferably 0.00005 weight ppb or more, particularly preferably 0.0001 weight ppb or more), the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the glutamylvalylglycine in the food or drink is 0.001 weight ppm or more (more preferably 0.01 weight ppm or more, further preferably 0.05 weight ppm or more, particularly preferably 0.1 weight ppm or more).
[21] The enhancer of the above-mentioned [1], wherein the active ingredient is the aforementioned (20) 4-methylpentanoic acid or a salt thereof, cyclotene, saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.0005 weight ppb or more, further preferably 0.001 weight ppb or more, particularly preferably 0.01 weight ppb or more), the content of the cyclotene in the food or drink is 0.000001 weight ppb or more (more preferably 0.00001 weight ppb or more, further preferably 0.00005 weight ppb or more, particularly preferably 0.0001 weight ppb or more), the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the naringenin in the food or drink is 0.001 weight ppm or more (more preferably 0.01 weight ppm or more, further preferably 0.1 weight ppm or more, particularly preferably 1 weight ppm or more).
[22] The enhancer of the above-mentioned [1], wherein the active ingredient is the aforementioned (21) 4-methylpentanoic acid or a salt thereof, cyclotene, saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more (more preferably 0.0005 weight ppb or more, further preferably 0.001 weight ppb or more, particularly preferably 0.01 weight ppb or more), the content of the cyclotene in the food or drink is 0.000001 weight ppb or more (more preferably 0.00001 weight ppb or more, further preferably 0.00005 weight ppb or more, particularly preferably 0.0001 weight ppb or more), the content of the saturated aliphatic monocarboxylic acid having 8 to 12 carbon atoms or a salt thereof in the food or drink is 0.000001 weight ppb or more (more preferably 0.00001 weight ppb or more, further preferably 0.00005 weight ppb or more, particularly preferably 0.0001 weight ppb or more), and the content of the glutamylvalylglycine in the food or drink is 0.001 weight ppm or more (more preferably 0.01 weight ppm or more, further preferably 0.05 weight ppm or more, particularly preferably 0.1 weight ppm or more).
[23] The enhancer of the above-mentioned [1] or [1'], wherein the aforementioned enhancer is used for addition to a food or drink comprising a component that imparts sweetness and/or a component that imparts flavor,
   the component that imparts flavor is juice obtained from fruits, and
   the enhancement of flavor is enhancement of a fruit flavor.
[24] The enhancer of the above-mentioned [1] or [1'], wherein the aforementioned enhancer is used for addition to a food or drink comprising a component that imparts sweetness and/or a component that imparts flavor,
   the component that imparts flavor is a coffee bean extract, and
   the enhancement of flavor is enhancement of a coffee flavor.
[24'] The enhancer of the above-mentioned [1] or [1'], wherein the aforementioned enhancer is used for addition to a food or drink comprising a component that imparts sweetness and/or a component that imparts flavor,
   the components that impart flavor are a coffee bean extract and a component that imparts a milk flavor, and
   the enhancement of flavor is enhancement of a coffee flavor and a milk flavor.
[25] The enhancer of the above-mentioned [1] or [1'], wherein the aforementioned enhancer is used for addition to a food or drink comprising a component that imparts sweetness and/or a component that imparts flavor,
   the component that imparts flavor is a tea extract, and
   the enhancement of flavor is enhancement of a tea flavor.
[25'] The enhancer of the above-mentioned [1] or [1'], wherein the aforementioned enhancer is used for addition to a food or drink comprising a component that imparts sweetness and/or a component that imparts flavor,
   the components that impart flavor are a tea extract and a component that imparts a milk flavor, and
   the enhancement of flavor is enhancement of a tea flavor and a milk flavor.
[26] The enhancer of the above-mentioned [1] or [1'], wherein the aforementioned enhancer is used for addition to a food or drink comprising a component that imparts sweetness and/or a component that imparts flavor,
   the component that imparts flavor is a component that imparts a milk flavor, and
   the enhancement of flavor is enhancement of a milk flavor.
[27] A food or drink comprising the enhancer of any of the above-mentioned [1], [1'], [2] to [24], [24'], [25], [25'], and
[26], and a component that imparts sweetness and/or a component that imparts flavor.
[28] A composition comprising at least one selected from the group consisting of (1) 4-methylpentanoic acid or a salt thereof, (2) cyclotene, and (3) saturated aliphatic monocarboxylic acid having 8 to 12 carbon atoms or a salt thereof, and naringenin or glutamylvalylglycine.
[29] A method for enhancing sweetness and/or flavor of a food or drink comprising a component that imparts sweetness and/or a component that imparts flavor, comprising adding any of the following (1) to (21) to the food or drink:
   (1) 4-methylpentanoic acid or a salt thereof
   (2) cyclotene
   (3) saturated aliphatic monocarboxylic acid having 8 to 12 carbon atoms or a salt thereof
   (4) 4-methylpentanoic acid or a salt thereof, and cyclotene
   (5) 4-methylpentanoic acid or a salt thereof, and saturated aliphatic monocarboxylic acid having 8 to 12 carbon atoms or a salt thereof
   (6) cyclotene, and saturated aliphatic monocarboxylic acid having 8 to 12 carbon atoms or a salt thereof
   (7) 4-methylpentanoic acid or a salt thereof, cyclotene, and saturated aliphatic monocarboxylic acid having 8 to 12 carbon atoms or a salt thereof
   (8) 4-methylpentanoic acid or a salt thereof, and naringenin
   (9) 4-methylpentanoic acid or a salt thereof, and glutamylvalylglycine
   (10) cyclotene, and naringenin
   (11) cyclotene, and glutamylvalylglycine
   (12) saturated aliphatic monocarboxylic acid having 8 to 12 carbon atoms or a salt thereof, and naringenin
   (13) saturated aliphatic monocarboxylic acid having 8 to 12 carbon atoms or a salt thereof, and glutamylvalylglycine
   (14) 4-methylpentanoic acid or a salt thereof, cyclotene, and naringenin
   (15) 4-methylpentanoic acid or a salt thereof, cyclotene, and glutamylvalylglycine
   (16) 4-methylpentanoic acid or a salt thereof, saturated aliphatic monocarboxylic acid having 8 to 12 carbon atoms or a salt thereof, and naringenin
   (17) 4-methylpentanoic acid or a salt thereof, saturated aliphatic monocarboxylic acid having 8 to 12 carbon atoms or a salt thereof, and glutamylvalylglycine
   (18) cyclotene, saturated aliphatic monocarboxylic acid having 8 to 12 carbon atoms or a salt thereof, and naringenin
   (19) cyclotene, saturated aliphatic monocarboxylic acid having 8 to 12 carbon atoms or a salt thereof, and glutamylvalylglycine
   (20) 4-methylpentanoic acid or a salt thereof, cyclotene, saturated aliphatic monocarboxylic acid having 8 to 12 carbon atoms or a salt thereof, and naringenin
   (21) 4-methylpentanoic acid or a salt thereof, cyclotene, saturated aliphatic monocarboxylic acid having 8 to 12 carbon atoms or a salt thereof, and glutamylvalylglycine.
[29'] A method for enhancing sweetness and/or flavor of a food or drink comprising a component that imparts sweetness and/or a component that imparts flavor, comprising adding any of the following (1) to (7) to the food or drink:
   (1) 4-methylpentanoic acid or a salt thereof
   (2) cyclotene
   (3) decanoic acid or a salt thereof
   (4) 4-methylpentanoic acid or a salt thereof, and cyclotene
   (5) 4-methylpentanoic acid or a salt thereof, and decanoic acid or a salt thereof
   (6) cyclotene, and decanoic acid or a salt thereof
   (7) 4-methylpentanoic acid or a salt thereof, cyclotene, and decanoic acid or a salt thereof.
[30] A method for producing a sweetness and/or flavor enhancer, comprising a step of mixing any of the following active ingredients (1) to (21), and a base:
   (1) 4-methylpentanoic acid or a salt thereof
   (2) cyclotene
   (3) saturated aliphatic monocarboxylic acid having 8 to 12 carbon atoms or a salt thereof
   (4) 4-methylpentanoic acid or a salt thereof, and cyclotene
   (5) 4-methylpentanoic acid or a salt thereof, and saturated aliphatic monocarboxylic acid having 8 to 12 carbon atoms or a salt thereof
   (6) cyclotene, and saturated aliphatic monocarboxylic acid having 8 to 12 carbon atoms or a salt thereof
   (7) 4-methylpentanoic acid or a salt thereof, cyclotene, and saturated aliphatic monocarboxylic acid having 8 to 12 carbon atoms or a salt thereof
   (8) 4-methylpentanoic acid or a salt thereof, and naringenin
   (9) 4-methylpentanoic acid or a salt thereof, and glutamylvalylglycine
   (10) cyclotene, and naringenin
   (11) cyclotene, and glutamylvalylglycine
   (12) saturated aliphatic monocarboxylic acid having 8 to 12 carbon atoms or a salt thereof, and naringenin
   (13) saturated aliphatic monocarboxylic acid having 8 to 12 carbon atoms or a salt thereof, and glutamylvalylglycine
   (14) 4-methylpentanoic acid or a salt thereof, cyclotene, and naringenin
   (15) 4-methylpentanoic acid or a salt thereof, cyclotene, and glutamylvalylglycine
   (16) 4-methylpentanoic acid or a salt thereof, saturated aliphatic monocarboxylic acid having 8 to 12 carbon atoms or a salt thereof, and naringenin
   (17) 4-methylpentanoic acid or a salt thereof, saturated aliphatic monocarboxylic acid having 8 to 12 carbon atoms or a salt thereof, and glutamylvalylglycine
   (18) cyclotene, saturated aliphatic monocarboxylic acid having 8 to 12 carbon atoms or a salt thereof, and naringenin
   (19) cyclotene, saturated aliphatic monocarboxylic acid having 8 to 12 carbon atoms or a salt thereof, and glutamylvalylglycine
   (20) 4-methylpentanoic acid or a salt thereof, cyclotene, saturated aliphatic monocarboxylic acid having 8 to 12 carbon atoms or a salt thereof, and naringenin
   (21) 4-methylpentanoic acid or a salt thereof, cyclotene, saturated aliphatic monocarboxylic acid having 8 to 12 carbon atoms or a salt thereof, and glutamylvalylglycine.
[31] A method for producing a food or drink, comprising a step of adding the enhancer of any of the above-mentioned [1], [1'],
[2] to [24], [24'], [25], [25'], and [26] to a food or drink comprising a component that imparts sweetness and/or a component that imparts flavor.

### [Advantageous Effects of Invention]

The sweetness and/or flavor enhancer of the present invention can enhance the sweetness and/or flavor of a food or drink when added to the food or drink.

Since the sweetness and/or flavor enhancer of the present invention can enhance the sweetness and/or flavor of a food or drink when added to a food or drink with a reduced sugar content, it can reduce sugar intake without decreasing satisfaction at the time of eating.

### [Description of Embodiments]

The sweetness and/or flavor enhancer of the present invention contains any of the following (1) to (21) as the active ingredient.
(1) 4-methylpentanoic acid or a salt thereof
(2) cyclotene
(3) saturated aliphatic monocarboxylic acid having 8 to 12 carbon atoms or a salt thereof
(4) 4-methylpentanoic acid or a salt thereof, and cyclotene
(5) 4-methylpentanoic acid or a salt thereof, and saturated aliphatic monocarboxylic acid having 8 to 12 carbon atoms or a salt thereof
(6) cyclotene, and saturated aliphatic monocarboxylic acid having 8 to 12 carbon atoms or a salt thereof
(7) 4-methylpentanoic acid or a salt thereof, cyclotene, and saturated aliphatic monocarboxylic acid having 8 to 12 carbon atoms or a salt thereof
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine

The sweetness and/or flavor enhancer of the present invention includes the embodiments of a sweetness enhancer containing any of the above-mentioned (1) to (21) as the active ingredient, a flavor enhancer containing any of the above-mentioned (1) to (21) as the active ingredient, and a sweetness and flavor enhancer containing any of the above-mentioned (1) to (21) as the active ingredient. In the present specification, the sweetness and/or flavor enhancer of the present invention is sometimes referred to as "the enhancer of the present invention".

The 4-methylpentanoic acid used in the present invention is represented by the following formula, and the CAS registry number thereof is 646-07-1.

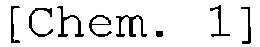

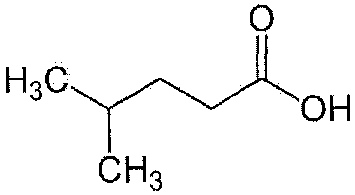

The salt of 4-methylpentanoic acid used in the present invention is not particularly limited as long as it is an edible salt and does not impair the purpose of the present invention. Examples thereof include salts with alkali metals such as sodium and potassium; salts with alkaline earth metals such as calcium and magnesium; ammonium salts; aluminum salts; zinc salts; salts with organic amines such as triethylamine, ethanolamine, morpholine, pyrrolidine, piperidine, piperazine, and dicyclohexylamine; and salts with basic amino acids such as arginine and lysine. These salts may be hydrates (hydrated salts), and examples of such hydrates include monohydrates to hexahydrates. Any one of these salts may be used alone, or two or more may be used in combination.

The cyclotene used in the present invention is represented by the following formula, and the CAS registry number thereof is 680-71-7.

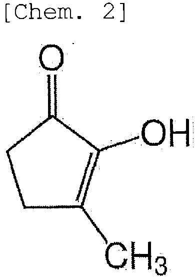

The saturated aliphatic monocarboxylic acid having 8 to 12 carbon atoms used in the present invention includes octanoic acid, nonanoic acid, decanoic acid, undecanoic acid, and dodecanoic acid. Any one of these carboxylic acids may be used alone, or two or more may be used in combination.

As the saturated aliphatic monocarboxylic acid having 8 to 12 carbon atoms used in the present invention, decanoic acid is preferred.

The octanoic acid used in the present invention is represented by the following formula, and the CAS registry number thereof is 124-07-2.

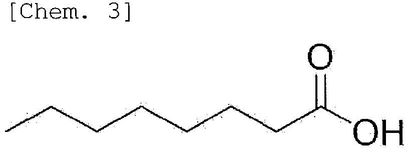

The nonanoic acid used in the present invention is represented by the following formula, and the CAS registry number thereof is 112-05-0.

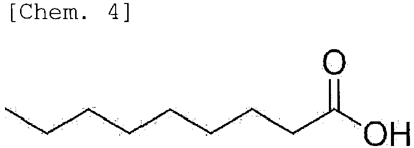

The decanoic acid used in the present invention is represented by the following formula, and the CAS registry number thereof is 334-48-5.

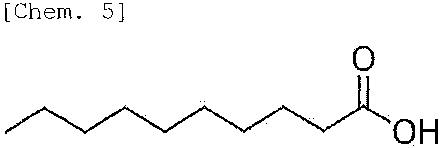

The undecanoic acid used in the present invention is represented by the following formula, and the CAS registry number thereof is 112-37-8.

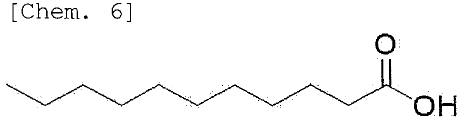

The dodecanoic acid used in the present invention is represented by the following formula, and the CAS registry number thereof is 143-07-7.

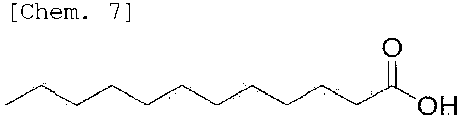

The naringenin used in the present invention is represented by the following formula, and the CAS registry number thereof is 67604-48-2.

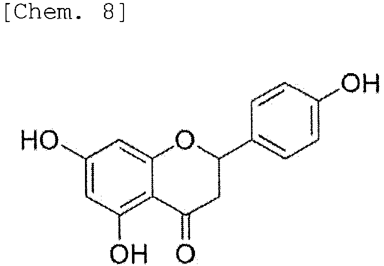

The glutamylvalylglycine used in the present invention is represented by the following formula, and the CAS registry number thereof is 38837-70-6.

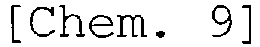

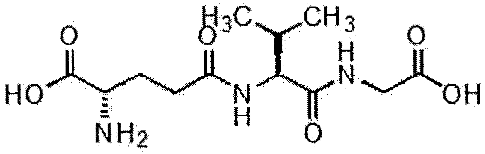

The salt of saturated aliphatic monocarboxylic acid having 8 to 12 carbon atoms used in the present invention is not particularly limited as long as it is an edible salt and does not impair the purpose of the present invention. Examples thereof include salts with alkali metals such as sodium and potassium; salts with alkaline earth metals such as calcium and magnesium; ammonium salts; aluminum salts; zinc salts; salts with organic amines such as triethylamine, ethanolamine, morpholine, pyrrolidine, piperidine, piperazine, and dicyclohexylamine; and salts with basic amino acids such as arginine and lysine. These salts may be hydrates (hydrated salts), and examples of such hydrates include monohydrates to hexahydrates. Any one of these salts may be used alone, or two or more may be used in combination.

When the enhancer of the present invention contains (4) 4-methylpentanoic acid or a salt thereof, and cyclotene as the active ingredient, the weight ratio of the content of (A) 4-methylpentanoic acid or a salt thereof and the content of (B) cyclotene (A:B) in the enhancer of the present invention is preferably 1:0.0001 - 100000, more preferably 1:0.001 - 10000, particularly preferably 1:0.01 - 10000.

When the enhancer of the present invention contains (5) 4-methylpentanoic acid or a salt thereof, and saturated aliphatic monocarboxylic acid having 8 to 12 carbon atoms (e.g., decanoic acid) or a salt thereof as the active ingredient, the weight ratio of the content of (A) 4-methylpentanoic acid or a salt thereof and the content of (C) saturated aliphatic monocarboxylic acid having 8 to 12 carbon atoms (e.g., decanoic acid) (A:C) in the enhancer of the present invention is preferably 1:0.0001 - 100000, more preferably 1:0.001 - 10000, particularly preferably 1:0.01 - 10000.

When the enhancer of the present invention contains (6) cyclotene, and saturated aliphatic monocarboxylic acid having 8 to 12 carbon atoms (e.g., decanoic acid) or a salt thereof as the active ingredient, the weight ratio of the content of (B) cyclotene and the content of (C) saturated aliphatic monocarboxylic acid having 8 to 12 carbon atoms (e.g., decanoic acid) (B:C) in the enhancer of the present invention is preferably 1:0.00001 - 100, more preferably 1:0.0001 - 10, particularly preferably 1:0.0001 - 1.

When the enhancer of the present invention contains (7) 4-methylpentanoic acid or a salt thereof, cyclotene, and saturated aliphatic monocarboxylic acid having 8 to 12 carbon atoms (e.g., decanoic acid) or a salt thereof as the active ingredient, the weight ratio of the content of (A) 4-methylpentanoic acid or a salt thereof, the content of (B) cyclotene, and the content of (C) saturated aliphatic monocarboxylic acid having 8 to 12 carbon atoms (e.g., decanoic acid) (A:B:C) in the enhancer of the present invention is preferably 1:0.0001 - 100000:0.0001 - 100000, more preferably 1:0.001 - 10000:0.001 - 10000, particularly preferably 1:0.01 - 10000:0.01 - 1000.

When the enhancer of the present invention contains (8) 4-methylpentanoic acid or a salt thereof, and naringenin as the active ingredient, the weight ratio of the content of (A) 4-methylpentanoic acid or a salt thereof and the content of (D) naringenin (A:D) in the enhancer of the present invention is preferably 1:0.001 - 100000, more preferably 1:0.01 - 10000, particularly preferably 1:0.1 - 1000.

When the enhancer of the present invention contains (9) 4-methylpentanoic acid or a salt thereof, and glutamylvalylglycine as the active ingredient, the weight ratio of the content of (A) 4-methylpentanoic acid or a salt thereof and the content of (E) glutamylvalylglycine (A:E) in the enhancer of the present invention is preferably 1:0.001 - 100000, more preferably 1:0.01 - 10000, particularly preferably 1:0.1 - 1000.

When the enhancer of the present invention contains (10) cyclotene, and naringenin as the active ingredient, the weight ratio of the content of (B) cyclotene and the content of (D) naringenin (B:D) in the enhancer of the present invention is preferably 1:0.001 - 100000, more preferably 1:0.01 - 10000, particularly preferably 1:0.1 - 1000.

When the enhancer of the present invention contains (11) cyclotene, and glutamylvalylglycine as the active ingredient, the weight ratio of the content of (B) cyclotene and the content of (E) glutamylvalylglycine (B:E) in the enhancer of the present invention is preferably 1:0.001 - 100000, more preferably 1:0.01 - 10000, particularly preferably 1:0.1 - 1000.

When the enhancer of the present invention contains (12) saturated aliphatic monocarboxylic acid having 8 to 12 carbon atoms or a salt thereof, and naringenin as the active ingredient, the weight ratio of the content of (C) saturated aliphatic monocarboxylic acid having 8 to 12 carbon atoms or a salt thereof and the content of (D) naringenin (C:D) in the enhancer of the present invention is preferably 1:0.001 - 100000, more preferably 1:0.01 - 10000, particularly preferably 1:0.1 - 1000.

When the enhancer of the present invention contains (13) saturated aliphatic monocarboxylic acid having 8 to 12 carbon atoms or a salt thereof, and glutamylvalylglycine as the active ingredient, the weight ratio of the content of (C) saturated aliphatic monocarboxylic acid having 8 to 12 carbon atoms or a salt thereof and the content of (E) glutamylvalylglycine (C:E) in the enhancer of the present invention is preferably 1:0.001 - 100000, more preferably 1:0.01 - 10000, particularly preferably 1:0.1 - 1000.

When the enhancer of the present invention contains (14) 4-methylpentanoic acid or a salt thereof, cyclotene, and naringenin as the active ingredient, the weight ratio of the content of (A) 4-methylpentanoic acid or a salt thereof, the content of (B) cyclotene, and the content of (D) naringenin (A:B:D) in the enhancer of the present invention is preferably 1:0.0001 - 100000:0.0001 - 10000000, more preferably 1:0.001 - 10000:0.001 - 1000000, particularly preferably 1:0.01 - 10000:0.01 - 100000.

When the enhancer of the present invention contains (15) 4-methylpentanoic acid or a salt thereof, cyclotene, and glutamylvalylglycine as the active ingredient, the weight ratio of the content of (A) 4-methylpentanoic acid or a salt thereof, the content of (B) cyclotene, and the content of (E) glutamylvalylglycine (A:B:E) in the enhancer of the present invention is preferably 1:0.0001 - 100000:0.0001 - 10000000, more preferably 1:0.001 - 10000:0.001 - 1000000, particularly preferably 1:0.01 - 10000:0.01 - 100000.

When the enhancer of the present invention contains (16) 4-methylpentanoic acid or a salt thereof, saturated aliphatic monocarboxylic acid having 8 to 12 carbon atoms or a salt thereof, and naringenin as the active ingredient, the weight ratio of the content of (A) 4-methylpentanoic acid or a salt thereof, the content of (C) saturated aliphatic monocarboxylic acid having 8 to 12 carbon atoms or a salt thereof, and the content of (D) naringenin (A:C:D) in the enhancer of the present invention is preferably 1:0.0001 - 100000:0.0001 - 10000000, more preferably 1:0.001 - 10000:0.001 - 1000000, particularly preferably 1:0.01 - 10000:0.01 - 100000.

When the enhancer of the present invention contains (17) 4-methylpentanoic acid or a salt thereof, saturated aliphatic monocarboxylic acid having 8 to 12 carbon atoms or a salt thereof, and glutamylvalylglycine as the active ingredient, the weight ratio of the content of (A) 4-methylpentanoic acid or a salt thereof, the content of (C) saturated aliphatic monocarboxylic acid having 8 to 12 carbon atoms or a salt thereof, and the content of (E) glutamylvalylglycine (A:C:E) in the enhancer of the present invention is preferably 1:0.0001 - 100000:0.0001 - 10000000, more preferably 1:0.001 - 10000:0.001 - 1000000, particularly preferably 1:0.01 - 10000:0.01 - 100000.

When the enhancer of the present invention contains (18) cyclotene, saturated aliphatic monocarboxylic acid having 8 to 12 carbon atoms or a salt thereof, and naringenin as the active ingredient, the weight ratio of the content of (B) cyclotene, the content of (C) saturated aliphatic monocarboxylic acid having 8 to 12 carbon atoms or a salt thereof, and the content of (D) naringenin (B:C:D) in the enhancer of the present invention is preferably 1:0.0001 - 100000:0.0001 - 10000000, more preferably 1:0.001 - 10000:0.001 - 1000000, particularly preferably 1:0.01 - 10000:0.01 - 100000.

When the enhancer of the present invention contains (19) cyclotene, saturated aliphatic monocarboxylic acid having 8 to 12 carbon atoms or a salt thereof, and glutamylvalylglycine as the active ingredient, the weight ratio of the content of (B) cyclotene, the content of (C) saturated aliphatic monocarboxylic acid having 8 to 12 carbon atoms or a salt thereof, and the content of (E) glutamylvalylglycine (B:C:E) in the enhancer of the present invention is preferably 1:0.0001 - 100000:0.0001 - 10000000, more preferably 1:0.001 - 10000:0.001 - 1000000, particularly preferably 1:0.01 - 10000:0.01 - 100000.

When the enhancer of the present invention contains (20) 4-methylpentanoic acid or a salt thereof, cyclotene, saturated aliphatic monocarboxylic acid having 8 to 12 carbon atoms or a salt thereof, and naringenin as the active ingredient, the weight ratio of the content of (A) 4-methylpentanoic acid or a salt thereof, the content of (B) cyclotene, the content of (C) saturated aliphatic monocarboxylic acid having 8 to 12 carbon atoms or a salt thereof, and the content of (D) naringenin (A:B:C:D) in the enhancer of the present invention is preferably 1:0.0001 - 1000000:0.0001 - 1000000:0.0001 - 1000000, more preferably 1:0.001 - 100000:0.001 - 100000:0.001 - 100000, particularly preferably 1:0.01 - 10000:0.01 - 100000:0.01 - 100000.

When the enhancer of the present invention contains (21) 4-methylpentanoic acid or a salt thereof, cyclotene, saturated aliphatic monocarboxylic acid having 8 to 12 carbon atoms or a salt thereof, and glutamylvalylglycine as the active ingredient, the weight ratio of the content of (A) 4-methylpentanoic acid or a salt thereof, the content of (B) cyclotene, the content of (C) saturated aliphatic monocarboxylic acid having 8 to 12 carbon atoms or a salt thereof, and the content of (E) glutamylvalylglycine (A:B:C:E) in the enhancer of the present invention is preferably 1:0.0001 - 1000000:0.0001 - 1000000:0.0001 - 1000000, more preferably 1:0.001 - 100000:0.001 - 100000:0.001 - 100000, particularly preferably 1:0.01 - 10000:0.01 - 100000:0.01 - 100000.

The enhancer of the present invention preferably contains at least 4-methylpentanoic acid or a salt thereof as the active ingredient.

The enhancer of the present invention preferably contains, as the active ingredients, two or more selected from the group consisting of 4-methylpentanoic acid or a salt thereof, cyclotene, and decanoic acid or a salt thereof in combination.

Among the above-mentioned active ingredients (1) to (7), the enhancer of the present invention preferably contains any of (1) 4-methylpentanoic acid or a salt thereof, (3) saturated aliphatic monocarboxylic acid having 8 to 12 carbon atoms (e.g., decanoic acid) or a salt thereof, (4) 4-methylpentanoic acid or a salt thereof, and cyclotene, (5) 4-methylpentanoic acid or a salt thereof, and saturated aliphatic monocarboxylic acid having 8 to 12 carbon atoms (e.g., decanoic acid) or a salt thereof, (6) cyclotene, and saturated aliphatic monocarboxylic acid having 8 to 12 carbon atoms (e.g., decanoic acid) or a salt thereof, (7) 4-methylpentanoic acid or a salt thereof, cyclotene, and saturated aliphatic monocarboxylic acid having 8 to 12 carbon atoms (e.g., decanoic acid) or a salt thereof; more preferably contains any of (1) 4-methylpentanoic acid or a salt thereof, (4) 4-methylpentanoic acid or a salt thereof, and cyclotene, (5) 4-methylpentanoic acid or a salt thereof, and saturated aliphatic monocarboxylic acid having 8 to 12 carbon atoms (e.g., decanoic acid) or a salt thereof, (6) cyclotene, and saturated aliphatic monocarboxylic acid having 8 to 12 carbon atoms (e.g., decanoic acid) or a salt thereof, (7) 4-methylpentanoic acid or a salt thereof, cyclotene, and saturated aliphatic monocarboxylic acid having 8 to 12 carbon atoms (e.g., decanoic acid) or a salt thereof; further preferably contains any of (1) 4-methylpentanoic acid or a salt thereof, (4) 4-methylpentanoic acid or a salt thereof, and cyclotene, (5) 4-methylpentanoic acid or a salt thereof, and saturated aliphatic monocarboxylic acid having 8 to 12 carbon atoms (e.g., decanoic acid) or a salt thereof, (7) 4-methylpentanoic acid or a salt thereof, cyclotene, and saturated aliphatic monocarboxylic acid having 8 to 12 carbon atoms (e.g., decanoic acid) or a salt thereof; and particularly preferably contains (7) 4-methylpentanoic acid or a salt thereof, cyclotene, and saturated aliphatic monocarboxylic acid having 8 to 12 carbon atoms (e.g., decanoic acid) or a salt thereof.

Among the above-mentioned active ingredients (8) to (21), the enhancer of the present invention preferably contains any of (8) to (21); more preferably contains any of (14) to (21); and further preferably contains any of (20) and (21).

The form of the enhancer of the present invention is not particularly limited and, for example, solid (including powder, granular and the like), liquid (including slurry and the like), gel, paste and the like can be mentioned.

In one embodiment, the enhancer of the present invention may be composed of the above-mentioned active ingredient alone, or may further contain, in addition to the active ingredient, a base conventionally used in the flavor field.

The content of the active ingredient (total content when multiple active ingredients are contained) in the enhancer of the present invention is preferably 0.00000001 wt% or more, more preferably 0.0000001 wt% or more, further preferably 0.000001 wt% or more, particularly preferably 0.0001 wt% or more. The content of the active ingredient (total content when multiple active ingredients are contained) in the enhancer of the present invention may be 100 wt% or less, preferably 99.9 wt% or less, more preferably 90 wt% or less, particularly preferably 80 wt% or less.

Examples of the base when the enhancer of the present invention is in a liquid form include water, ethanol, glycerol, propylene glycol, various animal or vegetable oils and the like.

Examples of the base when the enhancer of the present invention is in a solid form include various saccharides such as starch, dextrin, cyclodextrin and the like, protein, peptide, salt, solid fat, silicon dioxide, and a mixture thereof, yeast fungus, various powder extracts and the like.

The enhancer of the present invention may further contain, for example, excipient, pH adjuster, antioxidant, thickening stabilizer, acidulant, spice, colorant and the like as long as the purpose of the present invention is not impaired.

The enhancer of the present invention can be produced by a method conventionally used in the flavor field. The enhancer of the present invention may be subjected to, for example, a concentration treatment, a drying treatment, a decolorization treatment and the like alone or combination.

The enhancer of the present invention is preferably used to enhance sweetness of a food or drink containing a component that imparts sweetness. In the present invention, the "food or drink containing a component that imparts sweetness" means a food or drink essentially containing a component that imparts sweetness. As used herein, the "food or drink" of the food or drink essentially containing a component that imparts sweetness is a concept widely encompassing those that can be ingested orally, and also includes beverages, seasonings and the like. The "food or drink essentially containing a component that imparts sweetness" in the present invention also encompasses "a component that imparts sweetness" itself. In addition, the "sweetness enhancer" in the present invention is a concept encompassing a composition for enhancing sweetness.

The enhancer of the present invention is preferably used to enhance flavor of a food or drink containing a component that imparts flavor. In the present invention, the "food or drink containing a component that imparts flavor" means a food or drink essentially containing a component that imparts flavor. As used herein, the "food or drink" of the food or drink essentially containing a component that imparts flavor is a concept widely encompassing those that can be ingested orally, and also includes beverages, seasonings and the like. The "food or drink essentially containing a component that imparts flavor" in the present invention also encompasses "a component that imparts flavor" itself. In addition, the "flavor enhancer" in the present invention is a concept encompassing a composition for enhancing flavor.

The enhancer of the present invention is preferably used to enhance sweetness and flavor of a food or drink containing a component that imparts sweetness and a component that imparts flavor. In the present invention, the "food or drink containing a component that imparts sweetness and a component that imparts flavor" means a food or drink essentially containing a component that imparts sweetness and a component that imparts flavor. As used herein, the "food or drink" of the food or drink essentially containing a component that imparts sweetness and a component that imparts flavor is a concept widely encompassing those that can be ingested orally, and also includes beverages, seasonings and the like. The "food or drink essentially containing a component that imparts sweetness and a component that imparts flavor" in the present invention also encompasses "a composition composed of a component that imparts sweetness and a component that imparts flavor" and "a component that imparts sweetness and flavor" themselves. In addition, the "sweetness and flavor enhancer" in the present invention is a concept encompassing a composition for enhancing sweetness and flavor.

In the present invention, the "enhancement" of sweetness means that the sweetness is strongly felt as if the concentration of a component that imparts sweetness was increased. The presence or absence and the degree of sweetness can be evaluated by a sensory evaluation by an expert panel (e.g., sensory evaluation etc. shown in Examples described later).

In the present invention, the "enhancement" of flavor means that the flavor is strongly felt as if the concentration of a component that imparts flavor was increased. The presence or absence and the degree of flavor can be evaluated by a sensory evaluation by an expert panel (e.g., sensory evaluation etc. shown in Examples described later).

In the present invention, "a component that imparts sweetness" refers to a component that has sweetness by itself. For example, it is selected from the group consisting of general sugar sweeteners, such as sucrose (sugar, sucrose); fructose (e.g., D-fructose), glucose (e.g., D-glucose), starch syrup, maltose, glucose, fructose, high fructose glucose liquid sugar, isomerized sugar, sweetener compositions containing natural sugars, such as corn syrup (including high fructose corn syrup) or other syrups derived from natural fruits and vegetables, such as honey, maple sugar, and sweetener concentrates; semisynthetic "sugar alcohol" sweeteners, such as erythritol, isomalt, lactitol, mannitol, sorbitol, xylitol, maltodextrin, glycerol, threitol, arabitol, ribitol and dulcitol; artificial sweeteners such as miraculin, aspartame, superaspartame, saccharin, saccharin sodium salt, acesulfame K, cyclamate, sodium cyclamate and alitame; and other sweeteners such as trehalose, melezitose, melibiose, raffinose, palatinose, lactulose, cyclamic acid, mogrosides, tagatose (e.g. D-tagatose), maltose, galactose (e.g., D-galactose), L-rhamnose, D-sorbose, mannose (e.g., D-mannose), lactose, L-arabinose, D-ribose, D-glyceraldehyde, curculin, brazzein, mogrosides, neohesperidin dihydrochalcone (NHDC), neotame and other aspartame derivatives, advantame, D-tryptophan, D-leucine, D-threonine, glycine, D-asparagine, D-phenylalanine, L-proline, maltitol, hydrogenated glucose syrup (HGS), magap, sucralose, ragduname, sucrononate, sucrooctate, monatin, phyllodulcin, hydrogenated starch hydrolysate (HSH), stevioside, rebaudioside A, rebaudioside B, rebaudioside C, rebaudioside D, rebaudioside E, rebaudioside F, rebaudioside M, steviolbioside, dulcoside A, rubusoside and other sweet stevia-based glycosides, swingle, thaumatin, monellin, carrelame and other guanidine-based sweeteners. The "component that imparts sweetness" to be used may be one component or two or more components in combination.

In the present invention, "a component that imparts flavor" refers to a component that has flavor by itself. Examples thereof include components that impart a fruit flavor (e.g., fruit juice obtained from fruit (e.g., orange juice)), components that impart a coffee flavor (e.g., coffee bean extract), components that impart a milk flavor (e.g., creaming powder, milk (e.g., cow's milk, raw milk), dairy ingredients or products (e.g., skim milk powder, whole milk powder, condensed milk, milk protein, fresh cream, concentrated milk, skim milk, partially skim milk, butter, fermented milk (e.g., yogurt), white sauce, custard), plant-based milk (soy milk, almond milk, oat milk)), components that impart a tea flavor (e.g., powdered green tea, black tea, tea extract (e.g., black tea extract)), flavorings used in soft drinks and alcoholic drinks, soybean flour, caramel, pistachio, vanilla, cacao, chocolate, mayonnaise, dressing, sauce, cake, mousse, and the like. The "component that imparts flavor" to be used may be one component or two or more components in combination.

The food or drink containing a component that imparts sweetness and/or a component that imparts flavor, which is the target to which the enhancer of the present invention is added, is preferably one that is desired to have enhanced sweetness and/or flavor. Examples thereof include packaged drinks, coffee drinks, coffee drinks containing milk-flavoring ingredients (e.g., creaming powder, milk (e.g., cow's milk, raw milk), dairy ingredients or products (e.g., skim milk powder, whole milk powder, condensed milk, milk protein, fresh cream, concentrated milk, skim milk, partially skim milk), plant-based milk (e.g., soy milk, almond milk, oat milk)) (e.g., cafe au lait), citrus drinks, dairy drinks (e.g., yogurt drinks), tea drinks (e.g., black tea drinks, black tea drinks containing milk-flavoring ingredients (e.g., creaming powder, milk (e.g., cow's milk, raw milk), dairy ingredients or products (e.g., skim milk powder, whole milk powder, condensed milk, milk protein, fresh cream, concentrated milk, skim milk, partially skim milk), plant-based milk (e.g., soy milk, almond milk, oat milk)) (e.g., black tea au lait)), fruit drinks (e.g., orange drinks), carbonated drinks, alcoholic drinks, functional drinks, flavored water, or ice cream, sherbet and other chilled confections, jelly, pudding, mousse, sweet bean jelly and other desserts, cookies, cakes, chocolates, chewing gum, buns and other confectioneries, breads such as sweet bread, white bread and the like, jams, ramekins, tablets, tablet confectioneries, dairy products such as butter, fermented milk (e.g., yogurt, yogurt drinks), powdered milk, white sauce, custard, sweeteners (e.g., aspartame, stevia), natural seasonings, flavor enhancers, menu seasonings, mayonnaise, dressings, sauces, and the like.

In one embodiment, the enhancer of the present invention includes the following (I) to (VI).
(I) A sweetness and/or flavor enhancer containing any of the above-mentioned (1) to (21) as the active ingredient, wherein
   the enhancer is used to enhance sweetness and/or flavor by adding to a food or drink containing a component that imparts sweetness and/or a component that imparts flavor (e.g., fruit drinks (e.g., orange drinks)),
   the component that imparts flavor is juice obtained from fruits (e.g., orange juice), and
   the enhancement of the flavor is enhancement of a fruit flavor, (e.g., orange flavor).
(II) A sweetness and/or flavor enhancer containing any of the above-mentioned (1) to (21) as the active ingredient, wherein
   the enhancer is used to enhance sweetness and/or flavor by adding to a food or drink containing a component that imparts sweetness and/or a component that imparts flavor (e.g., coffee drinks),
   the component that imparts flavor is a coffee bean extract, and
   the enhancement of the flavor is enhancement of a coffee flavor.
(III) A sweetness and/or flavor enhancer containing any of the above-mentioned (1) to (21) as the active ingredient, wherein
   the enhancer is used to enhance sweetness and/or flavor by adding to a food or drink containing a component that imparts sweetness and/or a component that imparts flavor (e.g., coffee drinks containing a component that imparts milk flavor (e.g., creaming powder, milk (e.g., cow's milk, raw milk), dairy components (e.g., skim milk powder, whole milk powder, condensed milk, milk protein, fresh cream, concentrated milk, skim milk, part-skim milk), plant-based milk (e.g., soy milk, almond milk, oat milk)) (e.g., cafe au lait)),
   the components that impart flavor are a coffee bean extract and a component that imparts a milk flavor, and
   the enhancement of the flavor is enhancement of both a coffee flavor and a milk flavor (e.g., enhancement of cafe au lait flavor).
(IV) A sweetness and/or flavor enhancer containing any of the above-mentioned (1) to (21) as the active ingredient, wherein
   the enhancer is used to enhance sweetness and/or flavor by adding to a food or drink containing a component that imparts sweetness and/or a component that imparts flavor (e.g., tea drinks (e.g., black tea drinks)),
   the component that imparts flavor is a tea extract (e.g., extract from black tea), and
   the enhancement of the flavor is enhancement of a tea flavor (e.g., flavor of black tea).
(V) A sweetness and/or flavor enhancer containing any of the above-mentioned (1) to (21) as the active ingredient, wherein
   the enhancer is used to enhance sweetness and/or flavor by adding to a food or drink containing a component that imparts sweetness and/or a component that imparts flavor (e.g., tea drinks containing a component that imparts milk flavor (e.g., creaming powder, milk (e.g., cow's milk, raw milk), dairy components (e.g., skim milk powder, whole milk powder, condensed milk, milk protein, fresh cream, concentrated milk, skim milk, part-skim milk), plant-based milk (e.g., soy milk, almond milk, oat milk) (e.g., black tea drinks containing a component that imparts milk flavor) (e.g., black tea au lait)),
   the components that impart flavor are a tea extract (e.g., extract from black tea) and a component that imparts a milk flavor, and
   the enhancement of the flavor is enhancement of both a tea flavor (e.g., flavor of black tea) and a milk flavor (e.g., enhancement of black tea au lait flavor).
(VI) A sweetness and/or flavor enhancer containing any of the above-mentioned (1) to (21) as the active ingredient, wherein
   the enhancer is used to enhance sweetness and/or flavor by adding to a food or drink containing a component that imparts sweetness and/or a component that imparts flavor (e.g., dairy products (e.g. yogurt, yogurt drinks)),
   the component that imparts flavor is a component that imparts milk flavor (e.g., yogurt), and
   the enhancement of the flavor is enhancement of a milk flavor (e.g., yogurt flavor).

The food or drink containing a component that imparts sweetness and/or a component that imparts flavor to be the target to which the enhancer of the present invention is added may be provided (sold, distributed) in a form suitable for eating, or may be provided in a form that requires a predetermined processing or cooking to have a form suitable for eating. For example, the food or drink containing a component that imparts sweetness and/or a component that imparts flavor to be the target to which the enhancer of the present invention is added may be provided (sold, distributed) as a concentrate or the like that requires diluting with water, etc. to become a form suitable for eating.

The food or drink containing a component that imparts sweetness and/or a component that imparts flavor to be the target to which the enhancer of the present invention is added may be provided as, for example, a health functional food, a food for specified health uses, a nutritional functional food, a dietary supplement, a nutritional supplement, a health supplement, a food for medical use, a medical food, or the like.

In one embodiment, when the target to which the enhancer of the present invention is added is a food or drink containing a component that imparts sweetness, the content of the component that imparts sweetness in the food or drink containing a component that imparts sweetness is, for example, 0.0000001 wt% or more, preferably 0.0000005 wt% or more, more preferably 0.000001 wt% or more, further preferably 0.000005 wt% or more; or for example, 0.0000001 - 100 wt%, preferably 0.0000005 - 100 wt%, more preferably 0.000001 - 100 wt%, further preferably 0.000005 - 100 wt%.

In the present invention, when a food or drink containing a component that imparts sweetness is eaten after dilution at the time of eating, the content of the above-mentioned component that imparts sweetness is a content (concentration) at the time of eating.

In one embodiment, when the target to which the enhancer of the present invention is added is a food or drink containing a component that imparts flavor, the content of the component that imparts flavor in the food or drink containing a component that imparts flavor is, for example, 0.0000001 wt% or more, preferably 0.0000005 wt% or more, more preferably 0.000001 wt% or more, further preferably 0.000005 wt% or more; or for example, 0.0000001 - 100 wt%, preferably 0.0000005 - 100 wt%, more preferably 0.000001 - 100 wt%, further preferably 0.000005 - 100 wt%.

In the present invention, when a food or drink containing a component that imparts flavor is eaten after dilution at the time of eating, the content of the above-mentioned component that imparts flavor is a content (concentration) at the time of eating.

In one embodiment, when the target to which the enhancer of the present invention is added is a food or drink containing a component that imparts sweetness and a component that imparts flavor, the content of a component that imparts sweetness in a food or drink containing a component that imparts sweetness and a component that imparts flavor is, for example, 0.0000001 wt% or more, preferably 0.0000005 wt% or more, more preferably 0.000001 wt% or more, further preferably 0.000005 wt% or more; or for example, 0.0000001 - 100 wt%, preferably 0.0000005 - 100 wt%, more preferably 0.000001 - 100 wt%, further preferably 0.000005 - 100 wt%; and the content of a component that imparts flavor therein is, for example, 0.0000001 wt% or more, preferably 0.0000005 wt% or more, more preferably 0.000001 wt% or more, further preferably 0.000005 wt% or more; or for example, 0.0000001 - 100 wt%, preferably 0.0000005 - 100 wt%, more preferably 0.000001 - 100 wt%, further preferably 0.000005 - 100 wt%.

In the present invention, a food or drink containing a component that imparts sweetness and a component that imparts flavor is eaten after dilution at the time of eating, the content of the above-mentioned component that imparts flavor is a content (concentration) at the time of eating.

In one embodiment, when the target to which the enhancer of the present invention is added is a food or drink containing a component that imparts sweetness (e.g., sucrose) (e.g., fruit juice drinks, coffee drinks, coffee drinks containing a component that imparts milk flavor, tea drinks, tea drinks containing a component that imparts milk flavor, milk drinks), the content of the component that imparts sweetness in the food or drink containing a component that imparts sweetness is, for example, 0.5 wt% or more, preferably 1 wt% or more, more preferably 1.5 wt% or more, further preferably 2 wt% or more; or for example, 0.5 - 20 wt%, preferably 1 - 19 wt%, more preferably 1.5 - 18 wt%, further preferably 2 - 17 wt%.

In the present invention, when a food or drink containing a component that imparts sweetness is eaten after dilution at the time of eating, the content of the above-mentioned component that imparts sweetness is a content (concentration) at the time of eating.

In one embodiment, when the target to which the enhancer of the present invention is added is a food or drink containing a component that imparts sweetness (e.g., aspartame, stevia (RebA, RebM), sucralose) (e.g., fruit juice drinks, coffee drinks, coffee drinks containing a component that imparts milk flavor, tea drinks, tea drinks containing a component that imparts milk flavor, milk drinks), the content of the component that imparts sweetness in the food or drink containing a component that imparts sweetness is, for example, 0.0000001 wt% or more, preferably 0.0000005 wt% or more, more preferably 0.000001 wt% or more, further preferably 0.000005 wt% or more; or for example, 0.0000001 - 0.5 wt%, preferably 0.0000005 - 0.3 wt%, more preferably 0.000001 - 0.2 wt%, further preferably 0.000005 - 0.1 wt%.

In the present invention, when a food or drink containing a component that imparts sweetness is eaten after dilution at the time of eating, the content of the above-mentioned component that imparts sweetness is a content (concentration) at the time of eating.

The method and conditions for adding the enhancer of the present invention to a food or drink containing a component that imparts sweetness and/or a component that imparts flavor are not particularly limited, and can be appropriately set depending on the form of the enhancer of the present invention and the type of food or drink containing a component that imparts sweetness and/or a component that imparts flavor. The timing of addition of the enhancer of the present invention to a food or drink containing a component that imparts sweetness and/or a component that imparts flavor is not particularly limited, and it may be added at any time point. For example, during the production of a food or drink, after completion of the food or drink (e.g., immediately before eating the food or drink, while eating the food or drink, and the like) and the like can be mentioned. The enhancer of the present invention may be added to starting materials before the production of a food or drink containing a component that imparts sweetness and/or a component that imparts flavor.

When the active ingredient of the enhancer of the present invention is the aforementioned "(1) 4-methylpentanoic acid or a salt thereof", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.001 weight ppb or more, more preferably 0.01 weight ppb or more, further preferably 0.05 weight ppb or more, particularly preferably 0.1 weight ppb or more; or preferably 10000 weight ppb or less, more preferably 5000 weight ppb or less, further preferably 1000 weight ppb or less, particularly preferably 500 weight ppb or less; or preferably 0.001 - 10000 weight ppb, more preferably 0.01 - 5000 weight ppb, further preferably 0.05 - 1000 weight ppb, particularly preferably 0.1 - 500 weight ppb.

When the active ingredient of the enhancer of the present invention is the aforementioned "(2) cyclotene", for effective enhancement of sweetness, the enhancer is added to a food or drink containing a component that imparts sweetness (or a food or drink containing a component that imparts sweetness and a component that imparts flavor) in an amount such that the content of the cyclotene in the food or drink is preferably 0.001 weight ppb or more, more preferably 0.01 weight ppb or more, further preferably 0.05 weight ppb or more, particularly preferably 0.1 weight ppb or more; or preferably 10000 weight ppb or less, more preferably 5000 weight ppb or less, further preferably 1000 weight ppb or less, particularly preferably 500 weight ppb or less; or preferably 0.001 - 10000 weight ppb, more preferably 0.01 - 5000 weight ppb, further preferably 0.05 - 1000 weight ppb, particularly preferably 0.1 - 500 weight ppb.

When the active ingredient of the enhancer of the present invention is the aforementioned "(3) saturated aliphatic monocarboxylic acid having 8 to 12 carbon atoms (decanoic acid) or a salt thereof", for effective enhancement of sweetness, the enhancer is added to a food or drink containing a component that imparts sweetness (or a food or drink containing a component that imparts sweetness and a component that imparts flavor) in an amount such that the content of the saturated aliphatic monocarboxylic acid having 8 to 12 carbon atoms (decanoic acid) or a salt thereof in the food or drink is preferably 0.001 weight ppb or more, more preferably 0.01 weight ppb or more, further preferably 0.05 weight ppb or more, particularly preferably 0.1 weight ppb or more; or preferably 10000 weight ppb or less, more preferably 5000 weight ppb or less, further preferably 3000 weight ppb or less, particularly preferably 1000 weight ppb or less; or preferably 0.001 - 10000 weight ppb, more preferably 0.01 - 5000 weight ppb, further preferably 0.05 - 3000 weight ppb, particularly preferably 0.1 - 1000 weight ppb.

When the active ingredient of the enhancer of the present invention is the aforementioned "(4) 4-methylpentanoic acid or a salt thereof, and cyclotene", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of cyclotene in the food or drink is preferably 0.0001 weight ppb or more, more preferably 0.001 weight ppb or more, further preferably 0.005 weight ppb or more, particularly preferably 0.01 weight ppb or more; or
the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the cyclotene in the food or drink is preferably 5000 weight ppb or less, more preferably 1000 weight ppb or less, further preferably 750 weight ppb or less, particularly preferably 500 weight ppb or less; or the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb.

When the active ingredient of the enhancer of the present invention is the aforementioned "(5) 4-methylpentanoic acid or a salt thereof, and saturated aliphatic monocarboxylic acid having 8 to 12 carbon atoms (e.g., decanoic acid) or a salt thereof", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(6) cyclotene, and saturated aliphatic monocarboxylic acid having 8 to 12 carbon atoms (e.g., decanoic acid) or a salt thereof", for effective enhancement of sweetness, the enhancer is added to a food or drink containing a component that imparts sweetness (or a food or drink containing a component that imparts sweetness and a component that imparts flavor) in an amount such that the content of the cyclotene in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the cyclotene in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(7) 4-methylpentanoic acid or a salt thereof, cyclotene, and saturated aliphatic monocarboxylic acid having 8 to 12 carbon atoms (e.g., decanoic acid) or a salt thereof", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the cyclotene in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the cyclotene in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(8) 4-methylpentanoic acid or a salt thereof, and naringenin", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the naringenin in the food or drink is preferably 0.001 weight ppm or more, more preferably 0.01 weight ppm or more, further preferably 0.1 weight ppm or more, particularly preferably 1 weight ppm or more; or
the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the naringenin in the food or drink is preferably 10000 weight ppm or less, more preferably 1000 weight ppm or less, further preferably 100 weight ppm or less, particularly preferably 10 weight ppm or less; or
the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the naringenin in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(9) 4-methylpentanoic acid or a salt thereof, and glutamylvalylglycine", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the glutamylvalylglycine in the food or drink is preferably 0.001 weight ppm or more, more preferably 0.01 weight ppm or more, further preferably 0.1 weight ppm or more, particularly preferably 1 weight ppm or more; or
the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the glutamylvalylglycine in the food or drink is preferably 10000 weight ppm or less, more preferably 1000 weight ppm or less, further preferably 100 weight ppm or less, particularly preferably 10 weight ppm or less; or
the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the glutamylvalylglycine in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(10) cyclotene, and naringenin", for effective enhancement of sweetness, the enhancer is added to a food or drink containing a component that imparts sweetness (or a food or drink containing a component that imparts sweetness and a component that imparts flavor) in an amount such that the content of the cyclotene in the food or drink, cyclotene content, is preferably 0.000001 weight ppb or more, more preferably 0.00001 weight ppb or more, further preferably 0.0001 weight ppb or more, particularly preferably 0.001 weight ppb or more, and the content of the naringenin in the food or drink is preferably 0.001 weight ppm or more, more preferably 0.01 weight ppm or more, further preferably 0.1 weight ppm or more, particularly preferably 1 weight ppm or more; or
the content of the cyclotene in the food or drink is preferably 1000000 weight ppb or less, more preferably 100000 weight ppb or less, further preferably 10000 weight ppb or less, particularly preferably 1000 weight ppb or less, and the content of the naringenin in the food or drink is preferably 10000 weight ppm or less, more preferably 1000 weight ppm or less, further preferably 100 weight ppm or less, particularly preferably 10 weight ppm or less; or
the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the naringenin in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(11) cyclotene, and glutamylvalylglycine", for effective enhancement of sweetness, the enhancer is added to a food or drink containing a component that imparts sweetness (or a food or drink containing a component that imparts sweetness and a component that imparts flavor) in an amount such that the content of the cyclotene in the food or drink, cyclotene content, is preferably 0.000001 weight ppb or more, more preferably 0.00001 weight ppb or more, further preferably 0.0001 weight ppb or more, particularly preferably 0.001 weight ppb or more, and the content of the glutamylvalylglycine in the food or drink is preferably 0.001 weight ppm or more, more preferably 0.01 weight ppm or more, further preferably 0.1 weight ppm or more, particularly preferably 1 weight ppm or more; or
the content of the cyclotene in the food or drink is preferably 1000000 weight ppb or less, more preferably 100000 weight ppb or less, further preferably 10000 weight ppb or less, particularly preferably 1000 weight ppb or less, and the content of the glutamylvalylglycine in the food or drink is preferably 10000 weight ppm or less, more preferably 1000 weight ppm or less, further preferably 100 weight ppm or less, particularly preferably 10 weight ppm or less; or
the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the glutamylvalylglycine in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(12) saturated aliphatic monocarboxylic acid having 8 to 12 carbon atoms or a salt thereof, and naringenin", for effective enhancement of sweetness, the enhancer is added to a food or drink containing a component that imparts sweetness (or a food or drink containing a component that imparts sweetness and a component that imparts flavor) in an amount such that the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the naringenin in the food or drink is preferably 0.001 weight ppm or more, more preferably 0.01 weight ppm or more, further preferably 0.1 weight ppm or more, particularly preferably 1 weight ppm or more; or
the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the naringenin in the food or drink is preferably 10000 weight ppm or less, more preferably 1000 weight ppm or less, further preferably 100 weight ppm or less, particularly preferably 10 weight ppm or less; or
the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the naringenin in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(13) saturated aliphatic monocarboxylic acid having 8 to 12 carbon atoms or a salt thereof, and glutamylvalylglycine", for effective enhancement of sweetness, the enhancer is added to a food or drink containing a component that imparts sweetness (or a food or drink containing a component that imparts sweetness and a component that imparts flavor) in an amount such that the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the glutamylvalylglycine in the food or drink is preferably 0.001 weight ppm or more, more preferably 0.01 weight ppm or more, further preferably 0.1 weight ppm or more, particularly preferably 1 weight ppm or more; or the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the glutamylvalylglycine in the food or drink is preferably 10000 weight ppm or less, more preferably 1000 weight ppm or less, further preferably 100 weight ppm or less, particularly preferably 10 weight ppm or less; or the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the glutamylvalylglycine in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(14) 4-methylpentanoic acid or a salt thereof, cyclotene, and naringenin", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the cyclotene in the food or drink is preferably 0.000001 weight ppb or more, more preferably 0.00001 weight ppb or more, further preferably 0.0001 weight ppb or more, particularly preferably 0.001 weight ppb or more, and the content of the naringenin in the food or drink is preferably 0.001 weight ppm or more, more preferably 0.01 weight ppm or more, further preferably 0.1 weight ppm or more, particularly preferably 1 weight ppm or more; or
the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the cyclotene in the food or drink is preferably 1000000 weight ppb or less, more preferably 100000 weight ppb or less, further preferably 10000 weight ppb or less, particularly preferably 1000 weight ppb or less, and the content of the naringenin in the food or drink is preferably 10000 weight ppm or less, more preferably 1000 weight ppm or less, further preferably 100 weight ppm or less, particularly preferably 10 weight ppm or less; or
the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the naringenin in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(15) 4-methylpentanoic acid or a salt thereof, cyclotene, and glutamylvalylglycine", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the cyclotene in the food or drink is preferably 0.000001 weight ppb or more, more preferably 0.00001 weight ppb or more, further preferably 0.0001 weight ppb or more, particularly preferably 0.001 weight ppb or more, and the content of the glutamylvalylglycine in the food or drink is preferably 0.001 weight ppm or more, more preferably 0.01 weight ppm or more, further preferably 0.1 weight ppm or more, particularly preferably 1 weight ppm or more; or the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the cyclotene in the food or drink is preferably 1000000 weight ppb or less, more preferably 100000 weight ppb or less, further preferably 10000 weight ppb or less, particularly preferably 1000 weight ppb or less, and the content of the glutamylvalylglycine in the food or drink is preferably 10000 weight ppm or less, more preferably 1000 weight ppm or less, further preferably 100 weight ppm or less, particularly preferably 10 weight ppm or less; or the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the glutamylvalylglycine in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(16) 4-methylpentanoic acid or a salt thereof, saturated aliphatic monocarboxylic acid having 8 to 12 carbon atoms or a salt thereof, and naringenin", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the naringenin in the food or drink is preferably 0.001 weight ppm or more, more preferably 0.01 weight ppm or more, further preferably 0.1 weight ppm or more, particularly preferably 1 weight ppm or more; or the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the naringenin in the food or drink is preferably 10000 weight ppm or less, more preferably 1000 weight ppm or less, further preferably 100 weight ppm or less, particularly preferably 10 weight ppm or less; or
the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the naringenin in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(17) 4-methylpentanoic acid or a salt thereof, saturated aliphatic monocarboxylic acid having 8 to 12 carbon atoms or a salt thereof, and glutamylvalylglycine", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the glutamylvalylglycine in the food or drink is preferably 0.001 weight ppm or more, more preferably 0.01 weight ppm or more, further preferably 0.1 weight ppm or more, particularly preferably 1 weight ppm or more; or
the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the glutamylvalylglycine in the food or drink is preferably 10000 weight ppm or less, more preferably 1000 weight ppm or less, further preferably 100 weight ppm or less, particularly preferably 10 weight ppm or less; or
the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the glutamylvalylglycine in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(18) cyclotene, saturated aliphatic monocarboxylic acid having 8 to 12 carbon atoms or a salt thereof, and naringenin", for effective enhancement of sweetness, the enhancer is added to a food or drink containing a component that imparts sweetness (or a food or drink containing a component that imparts sweetness and a component that imparts flavor) in an amount such that the content of the cyclotene in the food or drink is preferably 0.000001 weight ppb or more, more preferably 0.00001 weight ppb or more, further preferably 0.0001 weight ppb or more, particularly preferably 0.001 weight ppb or more, and the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the naringenin in the food or drink is preferably 0.001 weight ppm or more, more preferably 0.01 weight ppm or more, further preferably 0.1 weight ppm or more, particularly preferably 1 weight ppm or more; or
the content of the cyclotene in the food or drink is preferably 1000000 weight ppb or less, more preferably 100000 weight ppb or less, further preferably 10000 weight ppb or less, particularly preferably 1000 weight ppb or less, and the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the naringenin in the food or drink is preferably 10000 weight ppm or less, more preferably 1000 weight ppm or less, further preferably 100 weight ppm or less, particularly preferably 10 weight ppm or less; or
the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the naringenin in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(19) cyclotene, saturated aliphatic monocarboxylic acid having 8 to 12 carbon atoms or a salt thereof, and glutamylvalylglycine", for effective enhancement of sweetness, the enhancer is added to a food or drink containing a component that imparts sweetness (or a food or drink containing a component that imparts sweetness and a component that imparts flavor) in an amount such that the content of the cyclotene in the food or drink is preferably 0.000001 weight ppb or more, more preferably 0.00001 weight ppb or more, further preferably 0.0001 weight ppb or more, particularly preferably 0.001 weight ppb or more, and the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the glutamylvalylglycine in the food or drink is preferably 0.001 weight ppm or more, more preferably 0.01 weight ppm or more, further preferably 0.1 weight ppm or more, particularly preferably 1 weight ppm or more; or the content of the cyclotene in the food or drink is preferably 1000000 weight ppb or less, more preferably 100000 weight ppb or less, further preferably 10000 weight ppb or less, particularly preferably 1000 weight ppb or less, and the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the glutamylvalylglycine in the food or drink is preferably 10000 weight ppm or less, more preferably 1000 weight ppm or less, further preferably 100 weight ppm or less, particularly preferably 10 weight ppm or less; or
the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the glutamylvalylglycine in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(20) 4-methylpentanoic acid or a salt thereof, cyclotene, saturated aliphatic monocarboxylic acid having 8 to 12 carbon atoms or a salt thereof, and naringenin", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the cyclotene in the food or drink is preferably 0.000001 weight ppb or more, more preferably 0.00001 weight ppb or more, further preferably 0.0001 weight ppb or more, particularly preferably 0.001 weight ppb or more, and the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the naringenin in the food or drink is preferably 0.001 weight ppm or more, more preferably 0.01 weight ppm or more, further preferably 0.1 weight ppm or more, particularly preferably 1 weight ppm or more; or
the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the cyclotene in the food or drink is preferably 1000000 weight ppb or less, more preferably 100000 weight ppb or less, further preferably 10000 weight ppb or less, particularly preferably 1000 weight ppb or less, and the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the naringenin in the food or drink is preferably 10000 weight ppm or less, more preferably 1000 weight ppm or less, further preferably 100 weight ppm or less, particularly preferably 10 weight ppm or less; or
the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the naringenin in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(21) 4-methylpentanoic acid or a salt thereof, cyclotene, saturated aliphatic monocarboxylic acid having 8 to 12 carbon atoms or a salt thereof, and glutamylvalylglycine", for effective enhancement of sweetness, the enhancer is added to a food or drink containing a component that imparts sweetness (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.01 weight ppb or more, particularly preferably 0.1 weight ppb or more, and the content of the cyclotene in the food or drink is preferably 0.000001 weight ppb or more, more preferably 0.00001 weight ppb or more, further preferably 0.0001 weight ppb or more, particularly preferably 0.001 weight ppb or more, and the content of the saturated aliphatic monocarboxylic acid having 8 to 12 carbon atoms or a salt thereof in the food or drink is preferably 0.000001 weight ppb or more, more preferably 0.00001 weight ppb or more, further preferably 0.0001 weight ppb or more, particularly preferably 0.001 weight ppb or more, and the content of the glutamylvalylglycine in the food or drink is preferably 0.001 weight ppm or more, more preferably 0.01 weight ppm or more, further preferably 0.1 weight ppm or more, particularly preferably 1 weight ppm or more; or
the content of the 4-methylpentanoic acid or a salt thereof in the food or drink is preferably 1000000 weight ppb or less, more preferably 100000 weight ppb or less, further preferably 10000 weight ppb or less, particularly preferably 1000 weight ppb or less, and the content of the cyclotene in the food or drink is preferably 1000000 weight ppb or less, more preferably 100000 weight ppb or less, further preferably 10000 weight ppb or less, particularly preferably 1000 weight ppb or less, and the content of the saturated aliphatic monocarboxylic acid having 8 to 12 carbon atoms or a salt thereof in the food or drink is preferably 1000000 weight ppb or less, more preferably 100000 weight ppb or less, further preferably 10000 weight ppb or less, particularly preferably 1000 weight ppb or less, and the content of the glutamylvalylglycine in the food or drink is preferably 10000 weight ppm or less, more preferably 1000 weight ppm or less, further preferably 100 weight ppm or less, particularly preferably 10 weight ppm or less; or
the content of the 4-methylpentanoic acid or a salt thereof in the food or drink is preferably 0.0001 - 1000000 weight ppb, more preferably 0.001 - 100000 weight ppb, further preferably 0.01 - 10000 weight ppb, particularly preferably 0.1 - 1000 weight ppb, and the content of the cyclotene in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the saturated aliphatic monocarboxylic acid having 8 to 12 carbon atoms or a salt thereof in the food or drink is preferably 0.000001 - 1000000 weight ppb, more preferably 0.00001 - 100000 weight ppb, further preferably 0.0001 - 10000 weight ppb, particularly preferably 0.001 - 1000 weight ppb, and the content of the glutamylvalylglycine in the food or drink is preferably 0.001 - 10000 weight ppm, more preferably 0.01 - 1000 weight ppm, further preferably 0.1 - 100 weight ppm, particularly preferably 1 - 10 weight ppm.

When the active ingredient of the enhancer of the present invention is the aforementioned "(1) 4-methylpentanoic acid or a salt thereof", for effective enhancement of flavor, the enhancer is added to a food or drink containing a component that imparts flavor (or a food or drink containing a component that imparts sweetness and a component that imparts flavor) in an amount such that the content of the 4-methylpentanoic acid or a salt thereof in the food or drink is preferably 0.001 weight ppb or more, more preferably 0.003 weight ppb or more, further preferably 0.008 weight ppb or more, particularly preferably 0.01 weight ppb or more; or preferably 10000 weight ppb or less, more preferably 5000 weight ppb or less, further preferably 1000 weight ppb or less, particularly preferably 500 weight ppb or less; or preferably 0.001 - 10000 weight ppb, more preferably 0.003 - 5000 weight ppb, further preferably 0.008 - 1000 weight ppb, particularly preferably 0.01 - 500 weight ppb.

When the active ingredient of the enhancer of the present invention is the aforementioned "(2) cyclotene", for effective enhancement of flavor, the enhancer is added to a food or drink containing a component that imparts flavor (or a food or drink containing a component that imparts sweetness and a component that imparts flavor) in an amount such that the content of the cyclotene in the food or drink is preferably 0.001 weight ppb or more, more preferably 0.003 weight ppb or more, further preferably 0.008 weight ppb or more, particularly preferably 0.01 weight ppb or more; or preferably 10000 weight ppb or less, more preferably 5000 weight ppb or less, further preferably 1000 weight ppb or less, particularly preferably 500 weight ppb or less; or preferably 0.001 - 10000 weight ppb, more preferably 0.003 - 5000 weight ppb, further preferably 0.008 - 1000 weight ppb, particularly preferably 0.01 - 500 weight ppb.

When the active ingredient of the enhancer of the present invention is the aforementioned "(3) saturated aliphatic monocarboxylic acid having 8 to 12 carbon atoms (e.g., decanoic acid) or a salt thereof", for effective enhancement of flavor, the enhancer is added to a food or drink containing a component that imparts flavor (or a food or drink containing a component that imparts sweetness and a component that imparts flavor) in an amount such that the content of the saturated aliphatic monocarboxylic acid having 8 to 12 carbon atoms (e.g., decanoic acid) or a salt thereof in the food or drink is preferably 0.001 weight ppb or more, more preferably 0.003 weight ppb or more, further preferably 0.008 weight ppb or more, particularly preferably 0.01 weight ppb or more; or preferably 10000 weight ppb or less, more preferably 5000 weight ppb or less, further preferably 3000 weight ppb or less, particularly preferably 1000 weight ppb or less; or preferably 0.001 - 10000 weight ppb, more preferably 0.003 - 5000 weight ppb, further preferably 0.008 - 3000 weight ppb, particularly preferably 0.01 - 1000 weight ppb.

When the active ingredient of the enhancer of the present invention is the aforementioned "(4) 4-methylpentanoic acid or a salt thereof, and cyclotene", for effective enhancement of flavor, the enhancer is added to a food or drink containing a component that imparts flavor (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the cyclotene in the food or drink is preferably 0.0001 weight ppb or more, more preferably 0.001 weight ppb or more, further preferably 0.005 weight ppb or more, particularly preferably 0.01 weight ppb or more; or
the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the cyclotene in the food or drink is preferably 5000 weight ppb or less, more preferably 1000 weight ppb or less, further preferably 750 weight ppb or less, particularly preferably 500 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb.

When the active ingredient of the enhancer of the present invention is the aforementioned "(5) 4-methylpentanoic acid or a salt thereof, and saturated aliphatic monocarboxylic acid having 8 to 12 carbon atoms (e.g., decanoic acid) or a salt thereof", for effective enhancement of flavor, the enhancer is added to a food or drink containing a component that imparts flavor (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(6) cyclotene, and saturated aliphatic monocarboxylic acid having 8 to 12 carbon atoms (e.g., decanoic acid) or a salt thereof", for effective enhancement of flavor, the enhancer is added to a food or drink containing a component that imparts sweetness (or a food or drink containing a component that imparts flavor and a component that imparts flavor) in an amount such that the content of the cyclotene in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the cyclotene in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(7) 4-methylpentanoic acid or a salt thereof, cyclotene, and saturated aliphatic monocarboxylic acid having 8 to 12 carbon atoms (e.g., decanoic acid) or a salt thereof", for effective enhancement of flavor, the enhancer is added to a food or drink containing a component that imparts flavor (or a food or drink containing a component that imparts sweetness and a component that imparts flavor) in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the cyclotene in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the cyclotene in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(1) 4-methylpentanoic acid or a salt thereof", for effective enhancement of sweetness and flavor, the enhancer is added to a food or drink containing a component that imparts sweetness and a component that imparts flavor in an amount such that the content of the 4-methylpentanoic acid or a salt thereof in the food or drink is preferably 0.001 weight ppb or more, more preferably 0.003 weight ppb or more, further preferably 0.008 weight ppb or more, particularly preferably 0.01 weight ppb or more; or preferably 10000 weight ppb or less, more preferably 5000 weight ppb or less, further preferably 1000 weight ppb or less, particularly preferably 500 weight ppb or less; or preferably 0.001 - 10000 weight ppb, more preferably 0.003 - 5000 weight ppb, further preferably 0.008 - 1000 weight ppb, particularly preferably 0.01 - 500 weight ppb.

When the active ingredient of the enhancer of the present invention is the aforementioned "(2) cyclotene", for effective enhancement of sweetness and flavor, the enhancer is added to a food or drink containing a component that imparts sweetness and a component that imparts flavor in an amount such that the content of the cyclotene in the food or drink is preferably 0.001 weight ppb or more, more preferably 0.003 weight ppb or more, further preferably 0.008 weight ppb or more, particularly preferably 0.01 weight ppb or more; or preferably 10000 weight ppb or less, more preferably 5000 weight ppb or less, further preferably 1000 weight ppb or less, particularly preferably 500 weight ppb or less; or preferably 0.001 - 10000 weight ppb, more preferably 0.003 - 5000 weight ppb, further preferably 0.008 - 1000 weight ppb, particularly preferably 0.01 - 500 weight ppb.

When the active ingredient of the enhancer of the present invention is the aforementioned "(3) saturated aliphatic monocarboxylic acid having 8 to 12 carbon atoms (e.g., decanoic acid) or a salt thereof", for effective enhancement of sweetness and flavor, the enhancer is added to a food or drink containing a component that imparts sweetness and a component that imparts flavor in an amount such that the content of the saturated aliphatic monocarboxylic acid having 8 to 12 carbon atoms (e.g., decanoic acid) or a salt thereof in the food or drink is preferably 0.001 weight ppb or more, more preferably 0.003 weight ppb or more, further preferably 0.008 weight ppb or more, particularly preferably 0.01 weight ppb or more; or preferably 10000 weight ppb or less, more preferably 5000 weight ppb or less, further preferably 3000 weight ppb or less, particularly preferably 1000 weight ppb or less; or preferably 0.001 - 10000 weight ppb, more preferably 0.003 - 5000 weight ppb, further preferably 0.008 - 3000 weight ppb, particularly preferably 0.01 - 1000 weight ppb.

When the active ingredient of the enhancer of the present invention is the aforementioned "(4) 4-methylpentanoic acid or a salt thereof, and cyclotene", for effective enhancement of sweetness and flavor, the enhancer is added to a food or drink containing a component that imparts sweetness and a component that imparts flavor in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the cyclotene in the food or drink is preferably 0.0001 weight ppb or more, more preferably 0.001 weight ppb or more, further preferably 0.005 weight ppb or more, particularly preferably 0.01 weight ppb or more; or
the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the cyclotene in the food or drink is preferably 5000 weight ppb or less, more preferably 1000 weight ppb or less, further preferably 750 weight ppb or less, particularly preferably 500 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb.

When the active ingredient of the enhancer of the present invention is the aforementioned "(5) 4-methylpentanoic acid or a salt thereof, and saturated aliphatic monocarboxylic acid having 8 to 12 carbon atoms (e.g., decanoic acid) or a salt thereof", for effective enhancement of sweetness and flavor, the enhancer is added to a food or drink containing a component that imparts sweetness and a component that imparts flavor in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(6) cyclotene, and saturated aliphatic monocarboxylic acid having 8 to 12 carbon atoms (e.g., decanoic acid) or a salt thereof", for effective enhancement of sweetness and flavor, the enhancer is added to a food or drink containing a component that imparts flavor and a component that imparts flavor in an amount such that the content of the cyclotene in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the cyclotene in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

When the active ingredient of the enhancer of the present invention is the aforementioned "(7) 4-methylpentanoic acid or a salt thereof, cyclotene, and saturated aliphatic monocarboxylic acid having 8 to 12 carbon atoms (e.g., decanoic acid) or a salt thereof", for effective enhancement of sweetness and flavor, the enhancer is added to a food or drink containing a component that imparts sweetness and a component that imparts flavor in an amount such that the content of the 4-methylpentanoic acid or a salt thereof in the food or drink is preferably 0.0001 weight ppb or more, more preferably 0.001 weight ppb or more, further preferably 0.005 weight ppb or more, particularly preferably 0.01 weight ppb or more, and the content of the cyclotene in the food or drink is preferably 0.0001 weight ppb or more, more preferably 0.001 weight ppb or more, further preferably 0.005 weight ppb or more, particularly preferably 0.01 weight ppb or more, and the content of the saturated aliphatic monocarboxylic acid having 8 to 12 carbon atoms (e.g., decanoic acid) or a salt thereof in the food or drink is preferably 0.0001 weight ppb or more, more preferably 0.001 weight ppb or more, further preferably 0.005 weight ppb or more, particularly preferably 0.01 weight ppb or more; or the content of the 4-methylpentanoic acid or a salt thereof in the food or drink is preferably 5000 weight ppb or less, more preferably 1000 weight ppb or less, further preferably 750 weight ppb or less, particularly preferably 500 weight ppb or less, and the content of the cyclotene in the food or drink is preferably 5000 weight ppb or less, more preferably 1000 weight ppb or less, further preferably 750 weight ppb or less, particularly preferably 500 weight ppb or less, and the content of the saturated aliphatic monocarboxylic acid having 8 to 12 carbon atoms (e.g., decanoic acid) or a salt thereof in the food or drink is preferably 5000 weight ppb or less, more preferably 3000 weight ppb or less, further preferably 2000 weight ppb or less, particularly preferably 1000 weight ppb or less; or
the content of the 4-methylpentanoic acid or a salt thereof in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the cyclotene in the food or drink is preferably 0.0001 - 5000 weight ppb, more preferably 0.001 - 1000 weight ppb, further preferably 0.005 - 750 weight ppb, particularly preferably 0.01 - 500 weight ppb, and the content of the saturated aliphatic monocarboxylic acid having 8 to 12 carbon atoms (e.g., decanoic acid) or a salt thereof in the food or drink is preferably 0.0001 - 5000 weight ppb, more preferably 0.001 - 3000 weight ppb, further preferably 0.005 - 2000 weight ppb, particularly preferably 0.01 - 1000 weight ppb.

The present invention also relates to a food or drink obtained by adding the enhancer of the present invention to a food or drink containing a component that imparts sweetness and/or a component that imparts flavor (that is, a food or drink containing the enhancer of the present invention, and a component that imparts sweetness and/or a component that imparts flavor) (sometimes to be referred to as "the food or drink of the present invention" in the present specification).

The amount (content) of the enhancer of the present invention to be added to the food or drink of the present invention may be appropriately adjusted so that the amount of the active ingredient in the food or drink containing a component that imparts sweetness and/or a component that imparts flavor, to which the enhancer is added, will fall within the above-mentioned range.

The method and conditions for adding the enhancer of the present invention to a food or drink containing a component that imparts sweetness and/or a component that imparts flavor are not particularly limited, and can be appropriately set depending on the form of the enhancer of the present invention and the type of food or drink containing a component that imparts sweetness and/or a component that imparts flavor. The timing of addition of the enhancer of the present invention to a food or drink containing a component that imparts sweetness and/or a component that imparts flavor is not particularly limited, and it may be added at any time point. For example, during the production of a food or drink, after completion of the food or drink (e.g., immediately before eating the food or drink, while eating the food or drink, and the like) and the like can be mentioned. The enhancer of the present invention may be added to starting materials before the production of a food or drink containing a component that imparts sweetness and/or a component that imparts flavor.

The definition of the food or drink containing a component that imparts sweetness and/or a component that imparts flavor and the amount of the enhancer of the present invention to be added are the same as those explained for the enhancer of the present invention.

The present invention also relates to a method for producing a food or drink containing a component that imparts sweetness and/or a component that imparts flavor, including a step of adding the enhancer of the present invention to the food or drink (sometimes to be referred to as "the production method of the food or drink of the present invention" in the present specification).

The amount (content) of the enhancer of the present invention to be added in the production method of the food or drink of the present invention may be appropriately adjusted so that the amount of the active ingredient in the food or drink containing a component that imparts sweetness and/or a component that imparts flavor, to which the enhancer is added, will fall within the above-mentioned range.

The method and conditions for adding the enhancer of the present invention to a food or drink containing a component that imparts sweetness and/or a component that imparts flavor are not particularly limited, and can be appropriately set depending on the form of the enhancer of the present invention and the type of food or drink containing a component that imparts sweetness and/or a component that imparts flavor. The timing of addition of the enhancer of the present invention to a food or drink containing a component that imparts sweetness and/or a component that imparts flavor is not particularly limited, and it may be added at any time point. For example, during the production of a food or drink, after completion of the food or drink (e.g., immediately before eating the food or drink, while eating the food or drink, and the like) and the like can be mentioned. The enhancer of the present invention may be added to starting materials before the production of a food or drink containing a component that imparts sweetness and/or a component that imparts flavor.

The definition of the food or drink containing a component that imparts sweetness and/or a component that imparts flavor and the amount of the enhancer of the present invention to be added are the same as those explained for the enhancer of the present invention.

The present invention also relates to a food or drink containing a component that imparts sweetness and/or a component that imparts flavor, and any of the following (1) to (21). In the present specification, the following (1) to (21) are sometimes to be referred to as "the active ingredients in the present invention":
(1) 4-methylpentanoic acid or a salt thereof
(2) cyclotene
(3) saturated aliphatic monocarboxylic acid having 8 to 12 carbon atoms (e.g., decanoic acid) or a salt thereof
(4) 4-methylpentanoic acid or a salt thereof, and cyclotene
(5) 4-methylpentanoic acid or a salt thereof, and saturated aliphatic monocarboxylic acid having 8 to 12 carbon atoms (e.g., decanoic acid) or a salt thereof
(6) cyclotene, and saturated aliphatic monocarboxylic acid having 8 to 12 carbon atoms (e.g., decanoic acid) or a salt thereof
(7) 4-methylpentanoic acid or a salt thereof, cyclotene, and saturated aliphatic monocarboxylic acid having 8 to 12 carbon atoms (e.g., decanoic acid) or a salt thereof
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine

The definition and the amount to be added of the food or drink containing a component that imparts sweetness and/or a component that imparts flavor, and the above-mentioned (1) to (21) (active ingredients) are the same as those explained for the enhancer of the present invention.

In one embodiment, the food or drink of the present invention includes the following (I') to (VI').
(I') Fruit drinks (e.g., orange drinks) with enhanced sweetness and/or fruit flavor (e.g., orange flavor), containing any of the above-mentioned (1) to (21) (active ingredients in the present invention), a component that imparts sweetness (e.g., sucrose), and juice obtained from fruits (e.g., orange juice).

The content of the component that imparts sweetness in the above-mentioned fruit juice drink (e.g., orange drink) is, for example, 1 wt% or more or 1 - 20 wt%, calculated as the amount of sucrose or the amount converted to sucrose.

The content of the juice obtained from fruits (e.g., orange juice) in the above-mentioned fruit juice drink (e.g., orange drink) is, for example, 1 wt% or more or 1 - 50 wt%.

The content of the enhancer in the above-mentioned fruit juice drink (e.g., orange drink) is the same as the content in the food or drink explained for the enhancer of the present invention.

(II') Coffee drinks with enhanced sweetness and/or coffee flavor, containing any of the above-mentioned (1) to (21) (active ingredients in the present invention), a component that imparts sweetness (e.g., sucrose), and a coffee bean extract.

The content of the component that imparts sweetness in the above-mentioned coffee drink is, for example, 1 wt% or more or 1 - 20 wt%, calculated as the amount of sucrose or the amount converted to sucrose.

The content of the coffee bean extract (dry weight) in the above-mentioned coffee drink is, for example, 0.1 wt% or more, or 0.1 - 10 wt%.

The content of the enhancer in the above-mentioned coffee drink is the same as the content in the food or drink explained for the enhancer of the present invention.

(III') Coffee drinks containing a component that imparts milk flavor (e.g., cafe au lait) that are enhanced in the sweetness, and/or coffee flavor and milk flavor, and contain any of the above-mentioned (1) to (21) (active ingredients in the present invention), a component that imparts sweetness (e.g., sucrose), a coffee bean extract, and a component that imparts milk flavor (e.g., creaming powder, skim milk powder).

The content of the component that imparts sweetness in the above-mentioned coffee drink is, for example, 1 wt% or more or 1 - 20 wt%, calculated as the amount of sucrose or the amount converted to sucrose.

The content of the coffee bean extract (dry weight) in the above-mentioned coffee drink is, for example, 0.1 wt% or more, or 0.1 - 10 wt%.

The content of the component that imparts milk flavor in the above-mentioned coffee drink is, for example, 1 wt% or more, or 1 - 20 wt%.

The content of the enhancer in the above-mentioned coffee drink is the same as the content in the food or drink explained for the enhancer of the present invention.

(IV') Tea drinks (e.g., black tea drinks) with enhanced sweetness and/or tea flavor (e.g., black tea flavor), containing any of the above-mentioned (1) to (21) (active ingredients in the present invention), a component that imparts sweetness (e.g., sucrose), and a tea extract (e.g., black tea extract).

The content of the component that imparts sweetness in the above-mentioned tea drink (e.g., black tea drink) is, for example, 1 wt% or more or 1 - 20 wt%, calculated as the amount of sucrose or the amount converted to sucrose.

The content of the tea extract (e.g., black tea extract) (dry weight) in the above-mentioned tea drink (e.g., black tea drink) is, for example, 0.1 wt% or more, or 0.1 - 10 wt%.

The content of the enhancer in the above-mentioned tea drink (e.g., black tea drink) is the same as the content in the food or drink explained for the enhancer of the present invention.

(V') Tea drinks containing a component that imparts milk flavor (e.g., black tea drinks containing a component that imparts milk flavor (e.g., black tea au lait)) that are enhanced in the sweetness, and/or tea flavor (e.g., black tea flavor) and milk flavor, and contain any of the above-mentioned (1) to (21) (active ingredients in the present invention), a component that imparts sweetness (e.g., sucrose), a tea extract (e.g., black tea extract), and a component that imparts milk flavor (e.g., creaming powder, skim milk powder).

The content of the component that imparts sweetness in the above-mentioned tea drink (e.g., black tea drink) is, for example, 1 wt% or more or 1 - 20 wt%, calculated as the amount of sucrose or the amount converted to sucrose.

The content of the tea extract (e.g., black tea extract) (dry weight) in the above-mentioned tea drink (e.g., black tea drink) is, for example, 0.1 wt% or more, or 0.1 - 10 wt%.

The content of the component that imparts milk flavor in the above-mentioned tea drink (e.g., black tea drink) is, for example, 1 wt% or more, or 1 - 20 wt%.

The content of the enhancer in the above-mentioned tea drink (e.g., black tea drink) is the same as the content in the food or drink explained for the enhancer of the present invention.

(VI') Dairy products (e.g., yogurt, yogurt drinks) with enhanced sweetness and/or milk flavor (e.g., yogurt flavor), containing any of the above-mentioned (1) to (21) (active ingredients in the present invention), a component that imparts sweetness (e.g., sucrose), and a component that imparts milk flavor (e.g., yogurt flavor) (e.g., yogurt).

The content of the component that imparts sweetness in the above-mentioned dairy product (e.g., yogurt, yogurt drink) is, for example, 1 wt% or more or 1 - 20 wt%, calculated as the amount of sucrose or the amount converted to sucrose.

The content of the component that imparts milk flavor in the above-mentioned dairy product (e.g., yogurt, yogurt drink) is, for example, 50 wt% or more, or 50 - 100 wt%.

The content of the enhancer in the above-mentioned dairy product (e.g., yogurt, yogurt drink) is the same as the content in the food or drink explained for the enhancer of the present invention.

The present invention also relates to a composition containing at least one selected from the group consisting of (1) 4-methylpentanoic acid or a salt thereof, (2) cyclotene, and (3) saturated aliphatic monocarboxylic acid having 8 to 12 carbon atoms or a salt thereof, and naringenin or glutamylvalylglycine (sometimes to be referred to as "the composition of the present invention" in the present specification).

The composition of the present invention specifically contains any of the following (8) to (21):
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine.

The definition of the above-mentioned (8) to (21), the weight ratio and form of each component, a base that may be added, and the like are the same as the definition, weight ratio and form of each component, a base that may be added, and the like explained for the enhancer of the present invention.

The composition of the present invention can be preferably used, for example, for enhancing the sweetness of a food or drink containing a component that imparts sweetness, or the flavor of a food or drink containing a component that imparts flavor.

The present invention also relates to a method for producing a sweetness and/or flavor enhancer, including a step of mixing any of the active ingredients of the following (1) to (21) and a base (sometimes to be referred to as "the production method of the enhancer of the present invention" in the present specification):
(1) 4-methylpentanoic acid or a salt thereof
(2) cyclotene
(3) saturated aliphatic monocarboxylic acid having 8 to 12 carbon atoms or a salt thereof
(4) 4-methylpentanoic acid or a salt thereof, and cyclotene
(5) 4-methylpentanoic acid or a salt thereof, and saturated aliphatic monocarboxylic acid having 8 to 12 carbon atoms or a salt thereof
(6) cyclotene, and saturated aliphatic monocarboxylic acid having 8 to 12 carbon atoms or a salt thereof
(7) 4-methylpentanoic acid or a salt thereof, cyclotene, and saturated aliphatic monocarboxylic acid having 8 to 12 carbon atoms or a salt thereof
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine.

In the production method of the enhancer of the present invention, the form of the enhancer to be produced is not particularly limited, and examples thereof include solid (including powder, granules, etc.), liquid (including slurry, etc.), gel, paste, and the like.

In the production method of the enhancer of the present invention, the base may be a base conventionally used in the field of flavor.

When the enhancer of the present invention is in a liquid form, examples of the base include water, ethanol, glycerin, propylene glycol, various animal and vegetable oils, and the like.

When the enhancer of the present invention is in a solid form, examples of the base include various sugars such as starch, dextrin, cyclodextrin, etc., protein, peptide, sodium chloride, solid fats, silicon dioxide, and mixtures thereof, yeast bacterial cells and various powdered extracts.

In the production method of the enhancer of the present invention, the active ingredient and the base material may be mixed by a method conventionally used in the field of flavor. The production method of the enhancer of the present invention may further include steps such as concentration, drying, decolorization, and the like.

The definition of the above-mentioned (1) to (21) are the same as those explained for the enhancer of the present invention. The blending amounts of the above-mentioned (1) to (21) above (active ingredients) can be determined to achieve the contents explained for the enhancer of the present invention.

The present invention also relates to a method for enhancing sweetness and/or flavor of a food or drink containing a component that imparts sweetness and/or a component that imparts flavor, including adding any of the following (1) to (21) to the food or drink (sometimes to be referred to as "the enhancement method of the present invention" in the present specification):
(1) 4-methylpentanoic acid or a salt thereof
(2) cyclotene
(3) saturated aliphatic monocarboxylic acid having 8 to 12 carbon atoms (e.g., decanoic acid) or a salt thereof
(4) 4-methylpentanoic acid or a salt thereof, and cyclotene
(5) 4-methylpentanoic acid or a salt thereof, and saturated aliphatic monocarboxylic acid having 8 to 12 carbon atoms (e.g., decanoic acid) or a salt thereof
(6) cyclotene, and saturated aliphatic monocarboxylic acid having 8 to 12 carbon atoms (e.g., decanoic acid) or a salt thereof
(7) 4-methylpentanoic acid or a salt thereof, cyclotene, and saturated aliphatic monocarboxylic acid having 8 to 12 carbon atoms (e.g., decanoic acid) or a salt thereof
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine.

In the enhancement method of the present invention, the timing of addition of the above-mentioned (1) to (21) (active ingredients) to a food or drink containing a component that imparts sweetness and/or a component that imparts flavor is not particularly limited, and it may be added at any time point. For example, during the production of a food or drink, after completion of the food or drink (e.g., immediately before eating the food or drink, while eating the food or drink, and the like) and the like can be mentioned. The above-mentioned (1) to (21) (active ingredients) may be added to starting materials before the production of a food or drink containing a component that imparts sweetness and/or a component that imparts flavor.

The definition and the amount to be added of the food or drink containing a component that imparts sweetness and/or a component that imparts flavor, and the above-mentioned (1) to (21) (active ingredients) are the same as the definition and amount to be added explained for the enhancer of the present invention.

The present invention is explained more specifically in the following by referring to Examples and Experimental Examples; however, the present invention is not limited by these Examples and Experimental Examples.

### [Example]

In the following Experimental Examples, 4-methylpentanoic acid (CAS 646-07-1), cyclotene (CAS 80-71-7), octanoic acid (CAS 124-07-2), nonanoic acid (CAS 112-05-0), decanoic acid (CAS 334-48-5), undecanoic acid (CAS 112-37-8), dodecanoic acid (CAS 143-07-7), and propylene glycol (CAS 57-55-6, solvent) used were all manufactured by SIGMA-ALDRICH, naringenin (CAS 67604-48-2) used was manufactured by PENTA, and glutamylvalylglycine (CAS 38837-70-6) used was manufactured by Ajinomoto Co., Inc.

In the Experimental Examples, ppb means weight ppb (w/w).

### [Experimental Example 1] Orange drink sweetness-enhancing effect by respectively adding 4-methylpentanoic acid, cyclotene, and decanoic acid

The following experiment was conducted in order to clarify the sweetness-enhancing effect in orange drinks by respectively adding 4-methylpentanoic acid, cyclotene, and decanoic acid.

### (Preparation of negative control orange drink)

A negative control orange drink was prepared by diluting an orange drink (product name: Bireley's Orange, 20% wt% orange juice, Asahi Soft Drinks Co., Ltd.) 1.2 times with filtered water.

When the carbohydrate content of Bireley's Orange is calculated as the total sucrose content, the negative control orange drink contains 9.17 g of sucrose per 100 g.

### (Preparation of 4-methylpentanoic acid-containing orange drinks (sample Nos. 1-1 to 1-8))

A 4-methylpentanoic acid solution (solvent: propylene glycol) was added at the concentrations shown in Table 1-1 to the negative control orange drink to obtain sample Nos. 1-1 to 1-8.

### (Preparation of cyclotene-containing orange drinks (sample Nos. 1-9 to 1-16))

A cyclotene solution (solvent: propylene glycol) was added at the concentrations shown in Table 1-2 to the negative control orange drink to obtain sample Nos. 1-9 to 1-16.

### (Preparation of decanoic acid-containing orange drinks (sample Nos. 1-17 to 1-24))

A decanoic acid solution (solvent: propylene glycol) was added at the concentrations shown in Table 1-3 to the negative control orange drink to obtain sample Nos. 1-17 to 1-24.

The amount of propylene glycol to be added was adjusted to be the same amount for all samples (sample Nos. 1-1 to 1-24).

### (Sensory evaluation)

A sensory evaluation of sweetness intensity was performed for each sample by a panel of four experts according to the following evaluation criteria.

### (Evaluation criteria)

Sweetness intensity was evaluated by 0.0 to 10.0 point based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): orange drink (trade name: Bireley's Orange,
Asahi Soft Drinks Co., Ltd.) diluted 1.2 times with filtered water (i.e., negative control orange drink).
R1 (5.0 points): with 0.46 g of sucrose added per 99.54 g of NC.
R2 (10.0 points): with 0.92 g of sucrose added per 99.08 g of NC.

The results of 4-methylpentanoic acid addition are shown in Table 1-1, the results of cyclotene addition are shown in Table 1-2, and the results of decanoic acid addition are shown in Table 1-3.

**[Table 1-1]**

| sample No. | 4-methylpentanoic acid concentration (ppb) | score (average) of sweetness intensity |
|---|---|---|
| 1-1 | 0.0001 | 0.2 |
| 1-2 | 0.001 | 0.5 |
| 1-3 | 0.01 | 0.9 |
| 1-4 | 0.1 | 1.7 |
| 1-5 | 1 | 2.6 |
| 1-6 | 10 | 4.1 |
| 1-7 | 100 | 5.1 |
| 1-8 | 1000 | 5.4 |

From the results of Table 1-1, when a sweetness intensity score (average) of 3.0 points or more is effective for sweetness enhancement, a sweetness-enhancing effect was confirmed at a 4-methylpentanoic acid concentration of 10 ppb or more.

**[Table 1-2]**

| sample No. | cyclotene concentration (ppb) | score (average) of sweetness intensity |
|---|---|---|
| 1-9 | 0.0001 | 0.7 |
| 1-10 | 0.001 | 2.0 |
| 1-11 | 0.01 | 2.8 |
| 1-12 | 0.1 | 3.8 |
| 1-13 | 1 | 4.4 |
| 1-14 | 10 | 5.1 |
| 1-15 | 100 | 5.6 |
| 1-16 | 1000 | 6.0 |

From the results of Table 1-2, when a sweetness intensity score (average) of 3.0 points or more is effective for sweetness enhancement, a sweetness-enhancing effect was confirmed at a cyclotene concentration of 0.1 ppb or more.

**[Table 1-3]**

| sample No. | decanoic acid concentration (ppb) | score (average) of sweetness intensity |
|---|---|---|
| 1-17 | 0.0001 | 0.5 |
| 1-18 | 0.001 | 1.5 |
| 1-19 | 0.01 | 2.3 |
| 1-20 | 0.1 | 3.3 |
| 1-21 | 1 | 3.9 |
| 1-22 | 10 | 4.5 |
| 1-23 | 100 | 5.0 |
| 1-24 | 1000 | 5.3 |

From the results of Table 1-3, when a sweetness intensity score (average) of 3.0 points or more is effective for sweetness enhancement, a sweetness-enhancing effect was confirmed at a decanoic acid concentration of 0.1 ppb or more.

### [Experimental Example 2] Orange drink sweetness-enhancing effect by adding 4-methylpentanoic acid and cyclotene in combination

The following experiment was conducted in order to clarify the sweetness-enhancing effect in orange drinks by adding 4-methylpentanoic acid and cyclotene in combination.

### (Preparation of negative control orange drink)

A negative control orange drink was prepared by the same method as in Experimental Example 1.

### (Preparation of 4-methylpentanoic acid and cyclotene-containing orange drinks (sample Nos. 2-2 to 2-9), and 4-methylpentanoic acid-containing orange drink (sample No. 2-1))

A 4-methylpentanoic acid and cyclotene solution (solvent: propylene glycol) was added at the concentrations shown in Table 2 to the negative control orange drinks to obtain sample Nos. 2-2 to 2-9. In addition, a 4-methylpentanoic acid solution (solvent: propylene glycol) was added at the concentration shown in Table 2 to the negative control orange drink to obtain sample Nos. 2-1.

The amount of propylene glycol to be added was adjusted to be the same amount for all samples (sample Nos. 2-1 to 2-9).

### (Sensory evaluation)

A sensory evaluation of sweetness intensity was performed for each sample by a panel of four experts according to the same evaluation criteria as in Experimental Example 1.

The results are shown in Table 2.

**[Table 2]**

| sample No. | 4-methylpentanoic acid concentration (ppb) | cyclotene concentration (ppb) | score (average) of sweetness intensity |
|---|---|---|---|
| 2-1 | 0.1 | - | 1.7 |
| 2-2 | 0.1 | 0.0001 | 3.0 |
| 2-3 | 0.1 | 0.001 | 4.1 |
| 2-4 | 0.1 | 0.01 | 5.0 |
| 2-5 | 0.1 | 0.1 | 6.0 |
| 2-6 | 0.1 | 1 | 6.5 |
| 2-7 | 0.1 | 10 | 7.0 |
| 2-8 | 0.1 | 100 | 7.3 |
| 2-9 | 0.1 | 1000 | 7.6 |

From the results of Table 2, in sample Nos. 2-2 to 2-7, the sweetness intensity score exceeded the sum of the score of sample No. 2-1 (4-methylpentanoic acid 0.1 ppb added alone) and the score of sample No. 1-9, 1-10, 1-11, 1-12, 1-13, or 1-14 (cyclotene 0.0001 ppb, 0.001 ppb, 0.01 ppb, 0.1 ppb, 1 ppb, or 10 ppb added alone) shown in Table 1-2, and was 3.0 points or more, which confirmed that a combination of 4-methylpentanoic acid and cyclotene synergistically enhances the sweetness intensity.

### [Experimental Example 3] Orange drink sweetness-enhancing effect by adding 4-methylpentanoic acid and decanoic acid in combination

The following experiment was conducted in order to clarify the sweetness-enhancing effect in orange drinks by adding 4-methylpentanoic acid and decanoic acid in combination.

### (Preparation of negative control orange drink)

A negative control orange drink was prepared by the same method as in Experimental Example 1.

### (Preparation of 4-methylpentanoic acid and decanoic acid-containing orange drinks (sample Nos. 3-2 to 3-9), and 4-methylpentanoic acid-containing orange drink (sample No. 3-1))

A 4-methylpentanoic acid and decanoic acid solution (solvent: propylene glycol) were added at the concentrations shown in Table 3 to the negative control orange drinks to obtain sample Nos. 3-2 to 3-9. In addition, a 4-methylpentanoic acid solution (solvent: propylene glycol) was added at the concentration shown in Table 3 to the negative control orange drink to obtain sample Nos. 3-1.

The amount of propylene glycol to be added was adjusted to be the same amount for all samples (sample Nos. 3-1 to 3-9).

### (Sensory evaluation)

A sensory evaluation of sweetness intensity was performed for each sample by a panel of four experts according to the same evaluation criteria as in Experimental Example 1.

The results are shown in Table 3.

**[Table 3]**

| sample No. | 4-methylpentanoic acid concentration (ppb) | decanoic acid concentration (ppb) | score (average) of sweetness intensity |
|---|---|---|---|
| 3-1 | 0.1 | - | 1.7 |
| 3-2 | 0.1 | 0.0001 | 2.9 |
| 3-3 | 0.1 | 0.001 | 3.8 |
| 3-4 | 0.1 | 0.01 | 4.7 |
| 3-5 | 0.1 | 0.1 | 5.6 |
| 3-6 | 0.1 | 1 | 5.9 |
| 3-7 | 0.1 | 10 | 6.4 |
| 3-8 | 0.1 | 100 | 6.8 |
| 3-9 | 0.1 | 1000 | 7.1 |

From the results of Table 3, in sample Nos. 3-3 to 3-9, the sweetness intensity score exceeded the sum of the score of sample No. 3-1 (4-methylpentanoic acid 0.1 ppb added alone) and the score of sample No. 1-18, 1-19, 1-20, 1-21, 1-22, 1-23 or 1-24 (decanoic acid 0.001 ppb, 0.01 ppb, 0.1 ppb, 1 ppb, 10 ppb, 100 ppb or 1000 ppb added alone) shown in Table 1-3, and was 3.0 points or more, which confirmed that a combination of 4-methylpentanoic acid and decanoic acid synergistically enhances the sweetness intensity.

### [Experimental Example 4] Orange drink sweetness-enhancing effect by adding cyclotene and decanoic acid in combination

The following experiment was conducted in order to clarify the sweetness-enhancing effect in orange drinks by adding cyclotene and decanoic acid in combination.

### (Preparation of negative control orange drink)

A negative control orange drink was prepared by the same method as in Experimental Example 1.

### (Preparation of cyclotene and decanoic acid-containing orange drinks (sample Nos. 4-1 to 4-9))

A cyclotene and decanoic acid solution (solvent: propylene glycol) were added at the concentrations shown in Table 4 to the negative control orange drinks to obtain sample Nos. 4-1 to 4-9. The amount of propylene glycol to be added was adjusted to be the same amount for all samples (sample Nos. 4-1 to 4-9).

### (Sensory evaluation)

A sensory evaluation of sweetness intensity was performed for each sample by a panel of four experts according to the same evaluation criteria as in Experimental Example 1.

The results are shown in Table 4.

**[Table 4]**

| sample No. | cyclotene concentration (ppb) | decanoic acid concentration (ppb) | score (average) of sweetness intensity |
|---|---|---|---|
| 4-1 | 0.0001 | 0.0001 | 1.7 |
| 4-2 | | 0.001 | 2.9 |
| 4-3 | | 0.01 | 3.8 |
| 4-4 | 0.001 | 0.0001 | 4.7 |
| 4-5 | | 0.001 | 5.6 |
| 4-6 | | 0.01 | 5.9 |
| 4-7 | 0.01 | 0.0001 | 6.4 |
| 4-8 | | 0.001 | 6.8 |
| 4-9 | | 0.01 | 7.1 |

From the results of Table 4, in sample No. 4-3, the sweetness intensity score exceeded the sum of the score of sample No. 1-9 (cyclotene 0.0001 ppb added alone) shown in Table 1-2 and the score of sample No. 1-19 (decanoic acid 0.01 ppb added alone) shown in Table 1-3, and was 3.0 points or more.

In addition, in sample Nos. 4-5, 4-6, the sweetness intensity score exceeded the sum of the score of sample No. 1-10 (cyclotene 0.001 ppb added alone) shown in Table 1-2 and the score of sample No. 1-18 or 1-19 (decanoic acid 0.001 ppb or 0.01 ppb added alone) shown in Table 1-3, and was 3.0 points or more.

Furthermore, in sample Nos. 4-7, 4-8, the sweetness intensity score exceeded the sum of the score of sample No. 1-11 (cyclotene 0.01 ppb added alone) shown in Table 1-2 and the score of sample No. 1-17 or 1-18 (decanoic acid 0.0001 ppb or 0.001 ppb added alone) shown in Table 1-3, and was 3.0 points or more.

These results confirm that a combination of cyclotene and decanoic acid synergistically enhances the sweetness intensity.

### [Experimental Example 5] Orange drink sweetness-enhancing effect by adding 4-methylpentanoic acid, cyclotene, and decanoic acid in combination

The following experiment was conducted in order to clarify the sweetness-enhancing effect in orange drinks by adding 4-methylpentanoic acid, cyclotene, and decanoic acid in combination.

### (Preparation of negative control orange drink)

A negative control orange drink was prepared by the same method as in Experimental Example 1.

### (Preparation of 4-methylpentanoic acid, cyclotene, and decanoic acid-containing orange drinks (sample Nos. 5-1 to 5-4))

4-Methylpentanoic acid, cyclotene, and decanoic acid solution (solvent: propylene glycol) were added at the concentrations shown in Table 5 to the negative control orange drinks to obtain sample Nos. 5-1 to 5-4. The amount of propylene glycol to be added was adjusted to be the same amount for all samples (sample Nos. 5-1 to 5-4).

### (Sensory evaluation)

A sensory evaluation of sweetness intensity was performed for each sample by a panel of four experts according to the same evaluation criteria as in Experimental Example 1.

The results are shown in Table 5.

**[Table 5]**

| sample No. | 4-methylpentanoic acid concentration (ppb) | cyclotene concentration (ppb) | decanoic acid concentration (ppb) | score (average) of sweetness intensity |
|---|---|---|---|---|
| 5-1 | 0.1 | 0.0001 | 0.0001 | 4.4 |
| 5-2 | 0.1 | 0.0001 | 1000 | 7.6 |
| 5-3 | 0.1 | 1000 | 0.0001 | 9.1 |
| 5-4 | 0.1 | 1000 | 1000 | 9.8 |

From the results of Table 5, in sample Nos. 5-1, the sweetness intensity score exceeded the sum of the score of sample No. 1-4 (4-methylpentanoic acid 0.1 ppb added alone) shown in Table 1-1, the scores of sample No. 1-9 (cyclotene 0.0001 ppb added alone) shown in Table 1-2, and the score of sample No. 1-17 (decanoic acid 0.0001 ppb added alone) shown in Table 1-3, and was 3.0 points or more.

In addition, in sample Nos. 5-3, the sweetness intensity score exceeded the sum of the score of sample No. 1-4 (4-methylpentanoic acid 0.1 ppb added alone) shown in Table 1-1, the score of sample No. 1-16 (cyclotene 1000 ppb added alone) shown in Table 1-2, and the score of sample No. 1-17 (decanoic acid 0.0001 ppb added alone) shown in Table 1-3, and was 3.0 points or more.

These results confirm that a combination of 4-methylpentanoic acid, cyclotene, and decanoic acid synergistically enhances the sweetness intensity.

### [Experimental Example 6] Sweetness-enhancing effect in sucrose-containing cafe au lait by respectively adding 4-methylpentanoic acid, cyclotene, and decanoic acid

The following experiment was conducted in order to clarify the sweetness-enhancing effect in sucrose-containing cafe au lait by respectively adding 4-methylpentanoic acid, cyclotene, and decanoic acid.

### (Preparation of sucrose-containing cafe au lait)

The starting materials were mixed according to the blending rate in Table 6 to prepare a cafe au lait containing sucrose (hereinafter referred to as "negative control cafe au lait").

### (Preparation of 4-methylpentanoic acid-containing cafe au lait (sucrose-containing) (sample Nos. 6-1 to 6-9))

A 4-methylpentanoic acid solution (solvent: propylene glycol) was added at a concentration shown in Table 6-1 to the negative control cafe au lait to obtain sample Nos. 6-1 to 6-9.

### (Preparation of cyclotene-containing cafe au lait (sucrose-containing) (sample Nos. 6-10 to 6-17))

A cyclotene solution (solvent: propylene glycol) was added at a concentration shown in Table 6-2 to the negative control cafe au lait to obtain sample Nos. 6-10 to 6-17.

### (Preparation of decanoic acid-containing cafe au lait (sucrose-containing) (sample Nos. 6-18 to 6-25))

A decanoic acid solution (solvent: propylene glycol) was added at a concentration shown in Table 6-3 to the negative control cafe au lait to obtain sample Nos. 6-18 to 6-25.

The amount of propylene glycol to be added was adjusted to be the same amount for all samples (sample Nos. 6-1 to 6-25).

### (Sensory evaluation)

A sensory evaluation of the presence or absence of sweetness intensity enhancement was performed for each sample by a panel of four experts according to the following evaluation criteria.

### (Evaluation criteria)

Sweetness intensity was evaluated by 0.0 to 10.0 point based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): cafe au lait prepared by mixing starting materials at the blending rate in Table 6 (i.e., negative control cafe au lait).
R1 (5.0 points): drink with 0.15 g of sucrose added per 99.85 g of NC.
R2 (10.0 points): drink with 0.30 g of sucrose added per 99.70 g of NC.

The results of 4-methylpentanoic acid addition are shown in Table 6-1, the results of cyclotene addition are shown in Table 6-2, and the results of decanoic acid addition are shown in Table 6-3.

**[Table 6]**

| starting material | maker | product name | amount (wt%) |
|---|---|---|---|
| instant coffee powder* | Ajinomoto AGF, Inc. | Blendy (registered trademark) | 0.7 |
| creaming powder | Ajinomoto AGF, Inc. | Marim (registered trademark) | 3.2 |
| skim milk powder | MORINAGA MILK INDUSTRY CO., LTD. | skim milk | 0.3 |
| sucrose | Mitsui DM Sugar Co., Ltd. | Spoon brand granulated sugar | 3.0 |
| hot water (100°C) | - | - | 92.8 |
| total | | | 100.0 |

| | | | |
|---|---|---|---|
| * coffee powder composed only of dry powder of coffee bean extract | | | |

**[Table 6-1]**

| sample No. | 4-methylpentanoic acid concentration (ppb) | score (average) of sweetness intensity |
|---|---|---|
| 6-1 | 0.0001 | 0.3 |
| 6-2 | 0.001 | 0.9 |
| 6-3 | 0.01 | 1.9 |
| 6-4 | 0.1 | 3.0 |
| 6-5 | 1 | 3.9 |
| 6-6 | 10 | 5.3 |
| 6-7 | 100 | 5.5 |
| 6-8 | 1000 | 5.9 |
| 6-9 | 10000 | 6.0 |

From the results of Table 6-1, when 3.0 points or more is effective for sweetness enhancement, a sweetness-enhancing effect was confirmed at a 4-methylpentanoic acid concentration of 0.1 ppb or more.

**[Table 6-2]**

| sample No. | cyclotene concentration (ppb) | score (average) of sweetness intensity |
|---|---|---|
| 6-10 | 0.0001 | 0.9 |
| 6-11 | 0.001 | 1.8 |
| 6-12 | 0.01 | 2.6 |
| 6-13 | 0.1 | 3.6 |
| 6-14 | 1 | 4.5 |
| 6-15 | 10 | 5.0 |
| 6-16 | 100 | 5.4 |
| 6-17 | 1000 | 5.8 |

From the results of Table 6-2, when 3.0 points or more is effective for sweetness enhancement, a sweetness-enhancing effect was confirmed at a cyclotene concentration of 0.1 ppb or more.

**[Table 6-3]**

| sample No. | decanoic acid concentration (ppb) | score (average) of sweetness intensity |
|---|---|---|
| 6-18 | 0.0001 | 0.4 |
| 6-19 | 0.001 | 1.0 |
| 6-20 | 0.01 | 1.9 |
| 6-21 | 0.1 | 2.8 |
| 6-22 | 1 | 3.5 |
| 6-23 | 10 | 4.0 |
| 6-24 | 100 | 4.5 |
| 6-25 | 1000 | 4.9 |

From the results of Table 6-3, when 3.0 points or more is effective for sweetness enhancement, a sweetness-enhancing effect was confirmed at a decanoic acid concentration of 1 ppb or more.

### [Experimental Example 7] Sweetness-enhancing effect in sucrose-containing cafe au lait by adding 4-methylpentanoic acid and cyclotene in combination

The following experiment was conducted in order to clarify the sweetness-enhancing effect in sucrose-containing cafe au lait by adding 4-methylpentanoic acid and cyclotene in combination.

### (Preparation of sucrose-containing cafe au lait)

By the same method as in Experimental Example 6, sucrose-containing cafe au lait (hereinafter referred to as "negative control cafe au lait") was prepared.

### (Preparation of 4-methylpentanoic acid and cyclotene-containing cafe au lait (sucrose-containing) (sample Nos. 7-2 to 7-9, and 4-methylpentanoic acid-containing cafe au lait (sucrose-containing) (sample Nos. 7-1))

4-Methylpentanoic acid and cyclotene solution (solvent: propylene glycol) were added at the concentrations shown in Table 7 to the negative control cafe au lait to obtain sample Nos. 7-2 to 7-9. In addition, a 4-methylpentanoic acid solution (solvent: propylene glycol) was added at the concentration shown in Table 7 to the negative control cafe au lait to obtain sample No. 7-1. The amount of propylene glycol to be added was adjusted to be the same amount for all samples (sample Nos. 7-1 to 7-9).

### (Sensory evaluation)

A sensory evaluation of sweetness intensity was performed for each sample by a panel of four experts according to the same evaluation criteria as in Experimental Example 6.

The results are shown in Table 7.

**[Table 7]**

| sample No. | 4-methylpentanoic acid concentration (ppb) | cyclotene concentration (ppb) | score (average) of sweetness intensity |
|---|---|---|---|
| 7-1 | 0.01 | - | 1.9 |
| 7-2 | 0.01 | 0.0001 | 3.1 |
| 7-3 | 0.01 | 0.001 | 3.9 |
| 7-4 | 0.01 | 0.01 | 5.1 |
| 7-5 | 0.01 | 0.1 | 5.9 |
| 7-6 | 0.01 | 1 | 6.8 |
| 7-7 | 0.01 | 10 | 7.4 |
| 7-8 | 0.01 | 100 | 7.8 |
| 7-9 | 0.01 | 1000 | 8.1 |

From the results of Table 7, in sample Nos. 7-2 to 7-9, the sweetness intensity score exceeded the sum of the score of sample Nos. 7-1 (4-methylpentanoic acid 0.01 ppb added alone), and the score of sample No. 6-10, 6-11, 6-12, 6-13, 6-14, 6-15, 6-16 or 6-17 (cyclotene 0.0001 ppb, 0.001 ppb, 0.01 ppb, 0.1 ppb, 1 ppb, 10 ppb, 100 ppb or 1000 ppb added alone) shown in Table 6-2, and was 3.0 points or more, which confirmed that a combination of 4-methylpentanoic acid and cyclotene synergistically enhances the sweetness intensity.

### [Experimental Example 8] Sweetness-enhancing effect in sucrose-containing cafe au lait by adding 4-methylpentanoic acid and decanoic acid in combination

The following experiment was conducted in order to clarify the sweetness-enhancing effect in sucrose-containing cafe au lait by adding 4-methylpentanoic acid and decanoic acid in combination.

### (Preparation of sucrose-containing cafe au lait)

By the same method as in Experimental Example 6, sucrose-containing cafe au lait (hereinafter referred to as "negative control cafe au lait") was prepared.

### (Preparation of 4-methylpentanoic acid and decanoic acid-containing cafe au lait (sucrose-containing) (sample Nos. 8-2 to 8-9), and 4-methylpentanoic acid-containing cafe au lait (sucrose-containing) (sample Nos. 8-1))

4-Methylpentanoic acid and decanoic acid solution (solvent: propylene glycol) were added at the concentrations shown in Table 8 to the negative control cafe au lait to obtain sample Nos. 8-2 to 8-9. In addition, a 4-methylpentanoic acid solution (solvent: propylene glycol) was added at the concentration shown in Table 8 to the negative control cafe au lait to obtain sample No. 8-1. The amount of propylene glycol to be added was adjusted to be the same amount for all samples (sample Nos. 8-1 to 8-9).

### (Sensory evaluation)

A sensory evaluation of sweetness intensity was performed for each sample by a panel of four experts according to the same evaluation criteria as in Experimental Example 6.

The results are shown in Table 8.

**[Table 8]**

| sample No. | 4-methylpentanoic acid concentration (ppb) | decanoic acid concentration (ppb) | score (average) of sweetness intensity |
|---|---|---|---|
| 8-1 | 0.01 | - | 1.9 |
| 8-2 | 0.01 | 0.0001 | 3.0 |
| 8-3 | 0.01 | 0.001 | 3.7 |
| 8-4 | 0.01 | 0.01 | 4.4 |
| 8-5 | 0.01 | 0.1 | 5.2 |
| 8-6 | 0.01 | 1 | 6.0 |
| 8-7 | 0.01 | 10 | 6.5 |
| 8-8 | 0.01 | 100 | 7.0 |
| 8-9 | 0.01 | 1000 | 7.5 |

From the results of Table 8, in sample Nos. 8-2 to 8-9, the sweetness intensity score exceeded the sum of the score of sample Nos. 8-1 (4-methylpentanoic acid 0.01 ppb added alone), and the score of sample No. 6-18, 6-19, 6-20, 6-21, 6-22, 6-23, 6-24 or 6-25 (decanoic acid 0.0001 ppb, 0.001 ppb, 0.01 ppb, 0.1 ppb, 1 ppb, 10 ppb, 100 ppb or 1000 ppb added alone) shown in Table 6-3, and was 3.0 points or more, which confirmed that a combination of 4-methylpentanoic acid and decanoic acid synergistically enhances the sweetness intensity.

### [Experimental Example 9] Sweetness-enhancing effect in sucrose-containing cafe au lait by adding cyclotene and decanoic acid in combination

The following experiment was conducted in order to clarify the sweetness-enhancing effect in sucrose-containing cafe au lait by adding cyclotene and decanoic acid in combination.

### (Preparation of sucrose-containing cafe au lait)

By the same method as in Experimental Example 6, sucrose-containing cafe au lait (hereinafter referred to as "negative control cafe au lait") was prepared.

### (Preparation of cyclotene and decanoic acid-containing cafe au lait (sucrose-containing) (sample Nos. 9-1 to 9-9))

Cyclotene and decanoic acid solution (solvent: propylene glycol) were added at the concentrations shown in Table 9 to the negative control cafe au lait to obtain sample Nos. 9-1 to 9-9. The amount of propylene glycol to be added was adjusted to be the same amount for all samples (sample Nos. 9-1 to 9-9).

### (Sensory evaluation)

A sensory evaluation of the presence or absence of sweetness intensity enhancement was performed for each sample by a panel of four experts according to the same evaluation criteria as in Experimental Example 6.

The results are shown in Table 9.

**[Table 9]**

| sample No. | cyclotene concentration (ppb) | decanoic acid concentration (ppb) | score (average) of sweetness intensity |
|---|---|---|---|
| 9-1 | 0.0001 | 0.0001 | 2.1 |
| 9-2 | | 0.001 | 3.0 |
| 9-3 | | 0.01 | 3.6 |
| 9-4 | 0.001 | 0.0001 | 2.8 |
| 9-5 | | 0.001 | 3.3 |
| 9-6 | | 0.01 | 3.9 |
| 9-7 | 0.01 | 0.0001 | 3.5 |
| 9-8 | | 0.001 | 4.0 |
| 9-9 | | 0.01 | 4.5 |

From the results of Table 9, in sample Nos. 9-2, 9-3, the sweetness intensity score exceeded the sum of the score of sample No. 6-10 (cyclotene 0.0001 ppb added alone) shown in Table 6-2 and the score of sample No. 6-19 or 6-20 (decanoic acid 0.001 ppb or 0.01 ppb added alone) shown in Table 6-3, and was 3.0 points or more.

In addition, in sample Nos. 9-5, 9-6, the sweetness intensity score exceeded the sum of the score of sample No. 6-11 (cyclotene 0.001 ppb added alone) shown in Table 6-2 and the score of sample No. 6-19 or 6-20 (decanoic acid 0.001 ppb or 0.01 ppb added alone) shown in Table 6-3, and was 3.0 points or more.

Furthermore, in sample Nos. 9-7, 9-8, the sweetness intensity score exceeded the sum of the score of sample No. 6-12 (cyclotene 0.01 ppb added alone) shown in Table 6-2 and the score of sample No. 6-18 or 6-19 (decanoic acid 0.0001 ppb or 0.001 ppb added alone) shown in Table 6-3, and was 3.0 points or more.

These results confirm that a combination of cyclotene and decanoic acid synergistically enhances the sweetness intensity.

### [Experimental Example 10] Sweetness-enhancing effect in sucrose-containing cafe au lait by adding 4-methylpentanoic acid, cyclotene, and decanoic acid in combination

The following experiment was conducted in order to clarify the sweetness-enhancing effect in sucrose-containing cafe au lait by adding 4-methylpentanoic acid, cyclotene, and decanoic acid in combination.

### (Preparation of sucrose-containing cafe au lait)

By the same method as in Experimental Example 6, sucrose-containing cafe au lait (hereinafter referred to as "negative control cafe au lait") was prepared.

### (Preparation of 4-methylpentanoic acid, cyclotene, and decanoic acid-containing cafe au lait (sucrose-containing) (sample Nos. 10-1 to 10-4))

4-Methylpentanoic acid, cyclotene, and decanoic acid solution (solvent: propylene glycol) were added at the concentrations shown in Table 10 to the negative control cafe au lait to obtain sample Nos. 10-1 to 10-4. The amount of propylene glycol to be added was adjusted to be the same amount for all samples (sample Nos. 10-1 to 10-4).

### (Sensory evaluation)

A sensory evaluation of sweetness intensity was performed for each sample by a panel of four experts according to the same evaluation criteria as in Experimental Example 6.

The results are shown in Table 10.

**[Table 10]**

| sample No. | 4-methylpentanoic acid concentration (ppb) | cyclotene concentration (ppb) | decanoic acid concentration (ppb) | score (average) of sweetness intensity |
|---|---|---|---|---|
| 10-1 | 0.01 | 0.0001 | 0.0001 | 4.0 |
| 10-2 | 0.01 | 0.0001 | 1000 | 6.9 |
| 10-3 | 0.01 | 1000 | 0.0001 | 7.5 |
| 10-4 | 0.01 | 1000 | 1000 | 8.5 |

From the results of Table 10, in sample No. 10-1, the sweetness intensity score exceeded the sum of the score of sample No. 6-3 (4-methylpentanoic acid 0.01 ppb added alone) shown in Table 6-1, the score of sample No. 6-10 (cyclotene 0.0001 ppb added alone) shown in Table 6-2, and the score of sample No. 6-18 (decanoic acid 0.0001 ppb added alone) shown in Table 6-3, and was 3.0 points or more.

These results confirm that a combination of 4-methylpentanoic acid, cyclotene and decanoic acid synergistically enhances the sweetness intensity.

### [Experimental Example 11] Aspartame sweetness-enhancing effect by adding any one of 4-methylpentanoic acid, cyclotene, and decanoic acid alone, or two or three of these in combination

The following experiment was conducted in order to clarify the aspartame sweetness-enhancing effect by adding any one of 4-methylpentanoic acid, cyclotene, and decanoic acid alone, or two or three of these in combination. The aspartame used was one manufactured by Ajinomoto Co., Inc.

### (Preparation of negative control aspartame solution (0.063 wt% aspartame))

A negative control aspartame solution (0.063 wt% aspartame solution) was prepared by dissolving aspartame in filtered water.

### (Preparation of 4-methylpentanoic acid-containing aspartame solutions (sample Nos. 11-1, 11-2))

A 4-methylpentanoic acid solution (solvent: propylene glycol) was added at the concentrations shown in Table 11 to the negative control aspartame solution to obtain sample Nos. 11-1, 11-2.

### (Preparation of cyclotene-containing aspartame solutions (sample Nos. 11-3, 11-4))

A cyclotene solution (solvent: propylene glycol) was added at the concentrations shown in Table 11 to the negative control aspartame solution to obtain sample Nos. 11-3, 11-4.

### (Preparation of decanoic acid-containing aspartame solutions (sample Nos. 11-5, 11-6))

A decanoic acid solution (solvent: propylene glycol) was added at the concentrations shown in Table 11 to the negative control aspartame solution to obtain sample Nos. 11-5, 11-6.

### (Preparation of 4-methylpentanoic acid and cyclotene-containing aspartame solution (sample No. 11-7))

4-Methylpentanoic acid and cyclotene solution (solvent: propylene glycol) were added at the concentrations shown in Table 11 to the negative control aspartame solution to obtain sample No. 11-7.

### (Preparation of 4-methylpentanoic acid and decanoic acid-containing aspartame solution (sample No. 11-8))

4-Methylpentanoic acid and decanoic acid solution (solvent: propylene glycol) were added at the concentrations shown in Table 11 to the negative control aspartame solution to obtain sample No. 11-8.

### (Preparation of cyclotene and decanoic acid-containing aspartame solution (sample No. 11-9))

Cyclotene and decanoic acid solution (solvent: propylene glycol) were added at the concentrations shown in Table 11 to the negative control aspartame solution to obtain sample No. 11-9.

### (Preparation of 4-methylpentanoic acid, cyclotene, and decanoic acid-containing aspartame solution (sample No. 11-10))

4-Methylpentanoic acid, cyclotene, and decanoic acid solution (solvent: propylene glycol) were added at the concentrations shown in Table 11 to the negative control aspartame solution to obtain sample No. 11-10.

The amount of propylene glycol to be added was adjusted to be the same amount for all samples (sample Nos. 11-1 to 11-10).

### (Sensory evaluation)

A sensory evaluation of sweetness intensity was performed for each sample by a panel of three experts according to the following evaluation criteria.

Sweetness intensity was evaluated by 0.0 to 10.0 points based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): 0.063 wt% aspartame solution (solvent: filtered water)
R1 (5.0 points): 0.066 wt% aspartame solution (solvent: filtered water)
R2 (10.0 points): 0.069 wt% aspartame solution (solvent: filtered water)

The results are shown in Table 11.

**[Table 11]**

| sample No. | 4-methylpentanoic acid concentration (ppb) | cyclotene concentration (ppb) | decanoic acid concentration (ppb) | score (average) of sweetness intensity |
|---|---|---|---|---|
| 11-1 | 0.1 | - | - | 1.5 |
| 11-2 | 100 | - | - | 3.5 |
| 11-3 | - | 0.001 | - | 0.9 |
| 11-4 | - | 10 | - | 4.0 |
| 11-5 | - | - | 0.001 | 0.6 |
| 11-6 | - | - | 10 | 3.2 |
| 11-7 | 0.1 | 0.001 | - | 3.4 |
| 11-8 | 0.1 | - | 0.001 | 3.2 |
| 11-9 | - | 0.001 | 0.001 | 4.3 |
| 11-10 | 0.1 | 0.001 | 0.001 | 4.8 |

From the results of Table 11, when a sweetness intensity score (average) of 3.0 points or more is effective for sweetness enhancement, in an example in which any one of 4-methylpentanoic acid, cyclotene, and decanoic acid was added alone, a sweetness-enhancing effect was confirmed at a 4-methylpentanoic acid concentration of 100 ppb (sample No. 11-2), a cyclotene concentration of 10 ppb (sample No. 11-4), and a decanoic acid concentration of 10 ppb (sample No. 11-6).

In addition, from the results of Table 11, in sample No. 11-7, the sweetness intensity score exceeded the sum of the score of sample No. 11-1 (4-methylpentanoic acid 0.1 ppb added alone) and the score of sample No. 11-3 (cyclotene 0.001 ppb added alone), and was 3.0 points or more, which confirmed that a combination of 4-methylpentanoic acid and cyclotene synergistically enhances the sweetness intensity.

In addition, from the results of Table 11, in sample No. 11-8, the sweetness intensity score exceeded the sum of the score of sample No. 11-1 (4-methylpentanoic acid 0.1 ppb added alone) and the score of sample No. 11-5 (decanoic acid 0.001 ppb added alone), and was 3.0 points or more, which confirmed that a combination of 4-methylpentanoic acid and decanoic acid synergistically enhances the sweetness intensity.

In addition, from the results of Table 11, in sample No. 11-9, the sweetness intensity score exceeded the sum of the score of sample No. 11-3 (cyclotene 0.001 ppb added alone) and the score of sample No. 11-5 (decanoic acid 0.001 ppb added alone), and was 3.0 points or more, which confirmed that a combination of cyclotene and decanoic acid synergistically enhances the sweetness intensity.

In addition, from the results of Table 11, in sample No. 11-10, the sweetness intensity score exceeded the sum of the score of sample No. 11-1 (4-methylpentanoic acid 0.1 ppb added alone), the score of sample No. 11-3 (cyclotene 0.001 ppb added alone), and the score of sample No. 11-5 (decanoic acid 0.001 ppb added alone), and was 3.0 points or more, which confirmed that a combination of 4-methylpentanoic acid, cyclotene, and decanoic acid synergistically enhances the sweetness intensity.

### [Experimental Example 12] Stevia sweetness-enhancing effect by adding any one of 4-methylpentanoic acid, cyclotene, and decanoic acid alone, or two or three of these in combination

The following experiment was conducted in order to clarify the aspartame sweetness-enhancing effect by adding any one of 4-methylpentanoic acid, cyclotene, and decanoic acid alone, or two or three of these in combination. The stevia used was rebaudioside A (RebA) (manufactured by PureCircle). RebA is one type of sweetness component contained in stevia extract.

### (Preparation of negative control RebA solution (0.073 wt% RebA solution))

A negative control RebA solution (0.073 wt% aspartame solution) was prepared by dissolving RebA in filtered water.

### (Preparation of 4-methylpentanoic acid-containing RebA solutions (sample Nos. 12-1, 12-2))

A 4-methylpentanoic acid solution (solvent: propylene glycol) was added at the concentrations shown in Table 12 to the negative control RebA solution to obtain sample Nos. 12-1, 12-2.

### (Preparation of cyclotene-containing RebA solutions (sample Nos. 12-3, 12-4))

A cyclotene solution (solvent: propylene glycol) was added at the concentrations shown in Table 12 to the negative control RebA solution to obtain sample Nos. 12-3, 12-4.

### (Preparation of decanoic acid-containing RebA solutions (sample Nos. 12-5, 12-6))

A decanoic acid solution (solvent: propylene glycol) was added at the concentrations shown in Table 12 to the negative control RebA solution to obtain sample Nos. 12-5, 12-6.

### (Preparation of 4-methylpentanoic acid and cyclotene-containing RebA solution (sample No. 12-7))

4-Methylpentanoic acid and cyclotene solution (solvent: propylene glycol) were added at the concentrations shown in Table 12 to the negative control RebA solution to obtain sample No. 12-7.

### (Preparation of 4-methylpentanoic acid and decanoic acid-containing RebA solution (sample No. 12-8))

4-Methylpentanoic acid and decanoic acid solution (solvent: propylene glycol) were added at the concentrations shown in Table 12 to the negative control RebA solution to obtain sample No. 12-8.

### (Preparation of cyclotene and decanoic acid-containing RebA solution (sample No. 12-9))

Cyclotene and decanoic acid solution (solvent: propylene glycol) were added at the concentrations shown in Table 12 to the negative control RebA solution to obtain sample No. 12-9.

### (Preparation of 4-methylpentanoic acid, cyclotene, and decanoic acid-containing RebA solution (sample No. 12-10))

4-Methylpentanoic acid, cyclotene, and decanoic acid solution (solvent: propylene glycol) were added at the concentrations shown in Table 12 to the negative control RebA solution to obtain sample No. 12-10.

The amount of propylene glycol to be added was adjusted to be the same amount for all samples (sample Nos. 12-1 to 12-10).

### (Sensory evaluation)

A sensory evaluation of sweetness intensity was performed for each sample by a panel of three experts according to the following evaluation criteria.

Sweetness intensity was evaluated by 0.0 to 10.0 points based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): 0.073 wt% RebA solution (solvent: filtered water)
R1 (5.0 points): 0.077 wt% RebA solution (solvent: filtered water)
R2 (10.0 points): 0.080 wt% RebA solution (solvent: filtered water)

The results are shown in Table 12.

**[Table 12]**

| sample No. | 4-methylpentanoic acid concentration (ppb) | cyclotene concentration (ppb) | decanoic acid concentration (ppb) | score (average) of sweetness intensity |
|---|---|---|---|---|
| 12-1 | 0.1 | - | - | 0.2 |
| 12-2 | 100 | - | - | 3.0 |
| 12-3 | - | 0.001 | - | 0.4 |
| 12-4 | - | 10 | - | 3.4 |
| 12-5 | - | - | 0.001 | 0.3 |
| 12-6 | - | - | 10 | 3.2 |
| 12-7 | 0.1 | 0.001 | - | 3.3 |
| 12-8 | 0.1 | - | 0.001 | 3.3 |
| 12-9 | - | 0.001 | 0.001 | 3.8 |
| 12-10 | 0.1 | 0.001 | 0.001 | 3.8 |

From the results of Table 12, when a sweetness intensity score (average) of 3.0 points or more is effective for sweetness enhancement, in an example in which any one of 4-methylpentanoic acid, cyclotene, and decanoic acid was added alone, a sweetness-enhancing effect was confirmed at a 4-methylpentanoic acid concentration of 100 ppb (sample No. 12-2), a cyclotene concentration of 10 ppb (sample No. 12-4), and a decanoic acid concentration of 10 ppb (sample No. 12-6).

In addition, from the results of Table 12, in sample No. 12-7, the sweetness intensity score exceeded the sum of the score of sample No. 12-1 (4-methylpentanoic acid 0.1 ppb added alone) and the score of sample No. 12-3 (cyclotene 0.001 ppb added alone), and was 3.0 points or more, which confirmed that a combination of 4-methylpentanoic acid and cyclotene synergistically enhances the sweetness intensity.

In addition, from the results of Table 12, in sample No. 12-8, the sweetness intensity score exceeded the sum of the score of sample No. 12-1 (4-methylpentanoic acid 0.1 ppb added alone) and the score of sample No. 12-5 (decanoic acid 0.001 ppb added alone), and was 3.0 points or more, which confirmed that a combination of 4-methylpentanoic acid and decanoic acid synergistically enhances the sweetness intensity.

In addition, from the results of Table 12, in sample No. 12-9, the sweetness intensity score exceeded the sum of the score of sample No. 12-3 (cyclotene 0.001 ppb added alone) and the score of sample No. 12-5 (decanoic acid 0.001 ppb added alone), and was 3.0 points or more, which confirmed that a combination of cyclotene and decanoic acid synergistically enhances the sweetness intensity.

In addition, from the results of Table 12, in sample No. 12-10, the sweetness intensity score exceeded the sum of the score of sample No. 12-1 (4-methylpentanoic acid 0.1 ppb added alone), the score of sample No. 12-3 (cyclotene 0.001 ppb added alone), and the score of sample No. 12-5 (decanoic acid 0.001 ppb added alone), and was 3.0 points or more, which confirmed that a combination of 4-methylpentanoic acid, cyclotene, and decanoic acid synergistically enhances the sweetness intensity.

### [Experimental Example 13] Orange flavor-enhancing effect in orange drinks by adding any one of 4-methylpentanoic acid, cyclotene, and decanoic acid alone, or two or three of these in combination

The following experiment was conducted in order to clarify the orange flavor-enhancing effect in orange drinks by adding any one of 4-methylpentanoic acid, cyclotene, and decanoic acid alone, or two or three of these in combination.

### (Preparation of negative control orange drink)

A negative control orange drink was prepared by the same method as in Experimental Example 1.

### (Preparation of 4-methylpentanoic acid-containing orange drinks (sample Nos. 13-1 to 13-8))

A 4-methylpentanoic acid solution (solvent: propylene glycol) was added at the concentrations shown in Table 13-1 to the negative control orange drink to obtain sample Nos. 13-1 to 13-8.

### (Preparation of cyclotene-containing orange drinks (sample Nos. 13-9 to 13-16))

A cyclotene solution (solvent: propylene glycol) was added at the concentrations shown in Table 13-2 to the negative control orange drink to obtain sample Nos. 13-9 to 13-16.

### (Preparation of decanoic acid-containing orange drinks (sample Nos. 13-17 to 13-24))

A decanoic acid solution (solvent: propylene glycol) was added at the concentrations shown in Table 13-3 to the negative control orange drink to obtain sample Nos. 13-17 to 13-24.

### (Preparation of 4-methylpentanoic acid and cyclotene-containing orange drink (sample No. 13-25))

4-Methylpentanoic acid and cyclotene solution (solvent: propylene glycol) were added at the concentrations shown in Table 13-4 to the negative control orange drink to obtain sample No. 13-25.

### (Preparation of cyclotene and decanoic acid-containing orange drink (sample No. 13-26))

Cyclotene and decanoic acid solution (solvent: propylene glycol) were added at the concentrations shown in Table 13-4 to the negative control orange drink to obtain sample No. 13-26.

### (Preparation of 4-methylpentanoic acid and decanoic acid-containing orange drink (sample No. 13-27))

4-Methylpentanoic acid and decanoic acid solution (solvent: propylene glycol) were added at the concentrations shown in Table 13-4 to the negative control orange drink to obtain sample No. 13-27.

The amount of propylene glycol to be added was adjusted to be the same amount for all samples (sample Nos. 13-1 to 13-27).

### (Sensory evaluation)

A sensory evaluation of orange flavor intensity was performed for each sample by a panel of three experts according to the following evaluation criteria.

### (Evaluation criteria)

Orange flavor intensity was evaluated by 0.0 to 10.0 point based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): orange drink (trade name: Bireley's Orange) diluted 1.2 times with filtered water (i.e., negative control orange drink).
R1 (5.0 points): with 0.46 g of sucrose added per 99.54 g of NC.
R2 (10.0 points): with 0.92 g of sucrose added per 99.08 g of NC.

The results of 4-methylpentanoic acid addition are shown in Table 13-1, the results of cyclotene addition are shown in Table 13-2, the results of decanoic acid addition are shown in Table 13-3, and the results of addition of 4-methylpentanoic acid and cyclotene in combination, cyclotene and decanoic acid in combination, and 4-methylpentanoic acid and decanoic acid in combination are shown in Table 13-4.

**[Table 13-1]**

| sample No. | 4-methylpentanoic acid concentration (ppb) | score (average) of orange flavor intensity |
|---|---|---|
| 13-1 | 0.0001 | 0.4 |
| 13-2 | 0.001 | 0.9 |
| 13-3 | 0.01 | 1.1 |
| 13-4 | 0.1 | 1.3 |
| 13-5 | 1 | 2.7 |
| 13-6 | 10 | 3.1 |
| 13-7 | 100 | 3.9 |
| 13-8 | 1000 | 4.0 |

From the results of Table 13-1, when an orange flavor intensity score (average) of 3.0 points or more is effective for orange flavor enhancement, an orange flavor-enhancing effect was confirmed at a 4-methylpentanoic acid concentration of 10 ppb or more.

**[Table 13-2]**

| sample No. | cyclotene concentration (ppb) | score (average) of orange flavor intensity |
|---|---|---|
| 13-9 | 0.0001 | 0.3 |
| 13-10 | 0.001 | 1.2 |
| 13-11 | 0.01 | 1.8 |
| 13-12 | 0.1 | 2.0 |
| 13-13 | 1 | 2.7 |
| 13-14 | 10 | 3.1 |
| 13-15 | 100 | 3.0 |
| 13-16 | 1000 | 3.0 |

From the results of Table 13-1, when an orange flavor intensity score (average) of 3.0 points or more is effective for orange flavor enhancement, an orange flavor-enhancing effect was confirmed at a cyclotene concentration of 10 ppb or more.

**[Table 13-3]**

| sample No. | decanoic acid concentration (ppb) | score (average) of orange flavor intensity |
|---|---|---|
| 13-17 | 0.0001 | 1.7 |
| 13-18 | 0.001 | 1.9 |
| 13-19 | 0.01 | 3.0 |
| 13-20 | 0.1 | 3.3 |
| 13-21 | 1 | 3.8 |
| 13-22 | 10 | 3.9 |
| 13-23 | 100 | 4.0 |
| 13-24 | 1000 | 4.0 |

From the results of Table 13-1, when an orange flavor sweetness intensity score (average) of 3.0 points or more is effective for orange flavor enhancement, an orange flavor-enhancing effect was confirmed at a decanoic acid concentration of 0.01 ppb or more.

**[Table 13-4]**

| sample No. | 4-methylpentanoic acid concentration (ppb) | cyclotene concentration (ppb) | decanoic acid concentration (ppb) | score (average) of orange flavor intensity |
|---|---|---|---|---|
| 13-25 | 0.1 | 0.001 | - | 4.3 |
| 13-26 | - | 0.001 | 0.001 | 4.8 |
| 13-27 | 0.1 | - | 0.001 | 4.2 |

From the results of Table 13-4, in sample Nos. 13-25, the orange flavor intensity score exceeded the sum of the score of sample No. 13-4 (4-methylpentanoic acid 0.1 ppb added alone) and the score of sample No. 13-10 (cyclotene 0.001 ppb added alone), and was 3.0 points or more, which confirmed that a combination of 4-methylpentanoic acid and cyclotene synergistically enhances the orange flavor intensity.

In addition, from the results of Table 13-4, in sample No. 13-26, the orange flavor intensity score exceeded the sum of the score of sample No. 13-10 (cyclotene 0.001 ppb added alone) and the score of sample No. 13-18 (decanoic acid 0.001 ppb added alone), and was 3.0 points or more, which confirmed that a combination of cyclotene and decanoic acid synergistically enhances the orange flavor intensity.

In addition, from the results of Table 13-4, in sample No. 13-27, the orange flavor intensity score exceeded the sum of the score of sample No. 13-4 (4-methylpentanoic acid 0.1 ppb added alone) and the score of sample No. 13-18 (decanoic acid 0.001 ppb added alone), and was 3.0 points or more, which confirmed that a combination of 4-methylpentanoic acid and decanoic acid synergistically enhances the orange flavor intensity.

### [Experimental Example 14] Sweetness and/or yogurt flavor-enhancing effect in yogurt drinks by adding any one of 4-methylpentanoic acid, cyclotene, and decanoic acid alone, or two or three of these in combination

The following experiment was conducted in order to clarify the sweetness and/or yogurt flavor-enhancing effect in yogurt drinks by adding any one of 4-methylpentanoic acid, cyclotene, and decanoic acid alone, or two or three of these in combination.

### (Preparation of negative control yogurt drink)

Yogurt drink (product name: 7 Premium Yogurt Drink, SEVEN-ELEVEN JAPAN CO., LTD.) was diluted 1.2 times with filtered water to prepare negative control yogurt drink.

When the carbohydrate content of 7 Premium Yogurt Drink is calculated as the total sucrose content, the negative control yogurt drink contains 10.75 g of sucrose per 100 g.

### (Preparation of 4-methylpentanoic acid-containing yogurt drinks (sample Nos. 14-1 to 14-8))

A 4-methylpentanoic acid solution (solvent: propylene glycol) was added at the concentrations shown in Table 14-1 to the negative control yogurt drink to obtain sample Nos. 14-1 to 14-8.

### (Preparation of cyclotene-containing yogurt drinks (sample Nos. 14-9 to 14-16))

A cyclotene solution (solvent: propylene glycol) was added at the concentrations shown in Table 14-2 to the negative control yogurt drink to obtain sample Nos. 14-9 to 14-16.

### (Preparation of decanoic acid-containing yogurt drinks (sample Nos. 14-17 to 14-24))

A decanoic acid solution (solvent: propylene glycol) was added at the concentrations shown in Table 14-3 to the negative control yogurt drink to obtain sample Nos. 14-17 to 14-24.

### (Preparation of 4-methylpentanoic acid and cyclotene-containing yogurt drink (sample No. 14-25))

A 4-methylpentanoic acid and cyclotene solution (solvent: propylene glycol) were added at the concentrations shown in Table 14-4 to the negative control yogurt drink to obtain sample Nos. 14-25.

### (Preparation of cyclotene and decanoic acid-containing yogurt drink (sample No. 14-26))

Cyclotene and decanoic acid solution (solvent: propylene glycol) were added at the concentrations shown in Table 14-4 to the negative control yogurt drink to obtain sample No. 14-26.

### (Preparation of 4-methylpentanoic acid and decanoic acid-containing yogurt drink (sample No. 14-27))

4-Methylpentanoic acid and decanoic acid solution (solvent: propylene glycol) were added at the concentrations shown in Table 14-4 to the negative control yogurt drink to obtain sample No. 14-27.

The amount of propylene glycol to be added was adjusted to be the same amount for all samples (sample Nos. 14-1 to 14-27).

### (Sensory evaluation)

A sensory evaluation of sweetness intensity and yogurt flavor intensity was performed for each sample by a panel of three experts according to the following evaluation criteria.

### (Evaluation criteria)

Sweetness intensity and yogurt flavor intensity were each evaluated by 0.0 to 10.0 point based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): yogurt drink (product name: 7 Premium Yogurt Drink, SEVEN-ELEVEN JAPAN CO., LTD.) diluted 1.2 times with filtered water.
R1 (5.0 points): with 0.54 g of sucrose added per 99.46 g of NC.
R2 (10.0 points): with 1.08 g of sucrose added per 98.92 g of NC.

The results of 4-methylpentanoic acid addition are shown in Table 14-1, the results of cyclotene addition are shown in Table 14-2, the results of decanoic acid addition are shown in Table 14-3, and the results of addition of 4-methylpentanoic acid and cyclotene in combination, cyclotene and decanoic acid in combination, and 4-methylpentanoic acid and decanoic acid in combination are shown in Table 14-4.

**[Table 14-1]**

| sample No. | 4-methylpentanoic acid concentration (ppb) | score (average) of sweetness intensity | score (average) of yogurt flavor intensity |
|---|---|---|---|
| 14-1 | 0.0001 | 0.5 | 0.7 |
| 14-2 | 0.001 | 1.0 | 1.5 |
| 14-3 | 0.01 | 1.8 | 2.7 |
| 14-4 | 0.1 | 2.8 | 3.7 |
| 14-5 | 1 | 3.7 | 4.0 |
| 14-6 | 10 | 4.8 | 4.5 |
| 14-7 | 100 | 5.5 | 4.5 |
| 14-8 | 1000 | 5.7 | 4.0 |

From the results of Table 14-1, when a sweetness intensity score (average) of 3.0 points or more is effective for sweetness enhancement, a sweetness-enhancing effect was confirmed at a 4-methylpentanoic acid concentration of 1 ppb or more.

In addition, from the results of Table 14-1, when a yogurt flavor intensity score (average) of 3.0 points or more is effective for yogurt flavor enhancement, a yogurt flavor-enhancing effect was confirmed at a 4-methylpentanoic acid concentration of 0.1 ppb or more.

**[Table 14-2]**

| sample No. | cyclotene concentration (ppb) | score (average) of sweetness intensity | score (average) of yogurt flavor intensity |
|---|---|---|---|
| 14-9 | 0.0001 | 1.2 | 1.3 |
| 14-10 | 0.001 | 2.3 | 2.2 |
| 14-11 | 0.01 | 3.0 | 3.0 |
| 14-12 | 0.1 | 4.4 | 4.2 |
| 14-13 | 1 | 5.0 | 4.9 |
| 14-14 | 10 | 5.3 | 5.1 |
| 14-15 | 100 | 5.8 | 5.2 |
| 14-16 | 1000 | 5.8 | 5.2 |

From the results of Table 14-2, when a sweetness intensity score (average) of 3.0 points or more is effective for sweetness enhancement, a sweetness-enhancing effect was confirmed at a cyclotene concentration of 0.01 ppb or more.

In addition, from the results of Table 14-2, when a yogurt flavor intensity score (average) of 3.0 points or more is effective for yogurt flavor enhancement, a yogurt flavor-enhancing effect was confirmed at a cyclotene concentration of 0.01 ppb or more.

**[Table 14-3]**

| sample No. | decanoic acid concentration (ppb) | score (average) of sweetness intensity | score (average) of yogurt flavor intensity |
|---|---|---|---|
| 14-17 | 0.0001 | 0.6 | 1.5 |
| 14-18 | 0.001 | 0.9 | 2.2 |
| 14-19 | 0.01 | 1.8 | 3.2 |
| 14-20 | 0.1 | 3.0 | 3.8 |
| 14-21 | 1 | 3.5 | 4.8 |
| 14-22 | 10 | 4.3 | 5.2 |
| 14-23 | 100 | 4.3 | 5.6 |
| 14-24 | 1000 | 3.8 | 5.2 |

From the results of Table 14-3, when a sweetness intensity score (average) of 3.0 points or more is effective for sweetness enhancement, a sweetness-enhancing effect was confirmed at a decanoic acid concentration of 0.1 ppb or more.

In addition, from the results of Table 14-3, when a yogurt flavor intensity score (average) of 3.0 points or more is effective for yogurt flavor enhancement, a yogurt flavor-enhancing effect was confirmed at a decanoic acid concentration of 0.01 ppb or more.

**[Table 14-4]**

| sample No. | 4-methylpentanoic acid concentration (ppb) | cyclotene concentration (ppb) | decanoic acid concentration (ppb) | score (average) of sweetness intensity | score (average) of yogurt flavor intensity |
|---|---|---|---|---|---|
| 14-25 | 0.001 | 0.0001 | - | 3.1 | 3.1 |
| 14-26 | - | 0.0001 | 0.001 | 3.6 | 3.6 |
| 14-27 | 0.001 | - | 0.001 | 3.3 | 3.9 |

From the results of Table 14-4, in sample No. 14-25, the sweetness intensity score exceeded the sum of the score of sample No. 14-2 (4-methylpentanoic acid 0.001 ppb added alone) and the score of sample No. 14-9 (cyclotene 0.0001 ppb added alone), and was 3.0 points or more, which confirmed that a combination of 4-methylpentanoic acid and cyclotene synergistically enhances the sweetness intensity.

In addition, from the results of Table 14-4, in sample Nos. 14-25, the yogurt flavor intensity score exceeded the sum of the score of sample No. 14-2 (4-methylpentanoic acid 0.001 ppb added alone) and the score of sample No. 14-9 (cyclotene 0.0001 ppb added alone), and was 3.0 points or more, which confirmed that a combination of 4-methylpentanoic acid and cyclotene synergistically enhances the yogurt flavor intensity.

From the results of Table 14-4, in sample Nos. 14-26, the sweetness intensity score exceeded the sum of the score of sample No. 14-9 (cyclotene 0.0001 ppb added alone) and the score of sample No. 14-18 (decanoic acid 0.001 ppb added alone), and was 3.0 points or more, which confirmed that a combination of cyclotene and decanoic acid synergistically enhances the sweetness intensity.

In addition, from the results of Table 14-4, in sample Nos. 14-26, the yogurt flavor intensity score exceeded the sum of the score of sample No. 14-9 (cyclotene 0.0001 ppb added alone) and the score of sample No. 14-18 (decanoic acid 0.001 ppb added alone), and was 3.0 points or more, which confirmed that a combination of cyclotene and decanoic acid synergistically enhances the yogurt flavor intensity.

From the results of Table 14-4, in sample Nos. 14-27, the sweetness intensity score exceeded the sum of the score of sample No. 14-2 (4-methylpentanoic acid 0.001 ppb added alone) and the score of sample No. 14-18 (decanoic acid 0.001 ppb added alone), and was 3.0 points or more, which confirmed that a combination of 4-methylpentanoic acid and decanoic acid synergistically enhances the sweetness intensity.

In addition, from the results of Table 14-4, in sample No. 14-27, the yogurt flavor intensity score exceeded the sum of the score of sample No. 14-2 (4-methylpentanoic acid 0.001 ppb added alone) and the score of sample No. 14-18 (decanoic acid 0.001 ppb added alone), and was 3.0 points or more, which confirmed that a combination of 4-methylpentanoic acid and decanoic acid synergistically enhances the yogurt flavor intensity.

### [Experimental Example 15] Sweetness and/or black tea au lait flavor-enhancing effect in black tea au lait by adding any one of 4-methylpentanoic acid, cyclotene, and decanoic acid alone, or two of these in combination

The following experiment was conducted in order to clarify the sweetness and/or black tea au lait flavor-enhancing effect in black tea au lait by adding any one of 4-methylpentanoic acid, cyclotene, and decanoic acid alone, or two of these in combination.

### (Preparation of negative control black tea au lait)

Instant black tea au lait powder (product name: Blendy (registered trademark) Stick Black Tea Au Lait (Ajinomoto AGF, Inc.)) was prepared according to the instructions, and then diluted 1.2 times with filtered water to prepare negative control black tea au lait.

When the carbohydrate content of Blendy (registered trademark) Stick Black Tea Au Lait is calculated as the total sucrose content, the negative control black tea au lait contains 5.2 g of sucrose per 100 g.

### (Preparation of 4-methylpentanoic acid-containing black tea au lait (sample Nos. 15-1 to 15-8))

A 4-methylpentanoic acid solution (solvent: propylene glycol) was added at the concentrations shown in Table 15-1 to the negative control black tea au lait to obtain sample Nos. 15-1 to 15-8.

### (Preparation of cyclotene-containing black tea au lait (sample Nos. 15-9 to 15-16))

A cyclotene solution (solvent: propylene glycol) was added at the concentrations shown in Table 15-2 to the negative control black tea au lait to obtain sample Nos. 15-9 to 15-16.

### (Preparation of decanoic acid-containing black tea au lait (sample Nos. 15-17 to 15-24))

A decanoic acid solution (solvent: propylene glycol) was added at the concentrations shown in Table 15-3 to the negative control black tea au lait to obtain sample Nos. 15-17 to 15-24.

### (Preparation of 4-methylpentanoic acid and cyclotene-containing black tea au lait (sample No. 15-25))

A 4-methylpentanoic acid and cyclotene solution (solvent: propylene glycol) were added at the concentrations shown in Table 15-4 to the negative control black tea au lait to obtain sample Nos. 15-25.

### (Preparation of cyclotene and decanoic acid-containing black tea au lait (sample No. 15-26))

Cyclotene and decanoic acid solution (solvent: propylene glycol) were added at the concentrations shown in Table 15-4 to the negative control black tea au lait to obtain sample No. 15-26.

### (Preparation of 4-methylpentanoic acid and decanoic acid-containing black tea au lait (sample No. 15-27))

4-Methylpentanoic acid and decanoic acid solution (solvent: propylene glycol) were added at the concentrations shown in Table 15-4 to the negative control black tea au lait to obtain sample No. 15-27.

The amount of propylene glycol to be added was adjusted to be the same amount for all samples (sample Nos. 15-1 to 15-27).

### (Sensory evaluation)

A sensory evaluation of sweetness intensity and black tea au lait flavor intensity was performed for each sample by a panel of three experts according to the following evaluation criteria.

### (Evaluation criteria)

Sweetness intensity and black tea au lait flavor intensity were each evaluated by 0.0 to 10.0 point based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): black tea au lait (product name: Black Tea Au Lait, Ajinomoto AGF, Inc.) prepared according to the instructions, and then diluted 1.2 times with filtered water (i.e., negative control black tea au lait).
R1 (5.0 points): with 0.26 g of sugar added per 99.74 g of NC.
R2 (10.0 points): with 0.52 g of sugar added per 99.48 g of NC.

The results of 4-methylpentanoic acid addition are shown in Table 15-1, the results of cyclotene addition are shown in Table 15-2, the results of decanoic acid addition are shown in Table 15-3, and the results of addition of 4-methylpentanoic acid and cyclotene in combination, cyclotene and decanoic acid in combination, and 4-methylpentanoic acid and decanoic acid in combination are shown in Table 15-4.

**[Table 15-1]**

| sample No. | 4-methylpentanoic acid concentration (ppb) | score (average) of sweetness intensity | score (average) of black tea au lait flavor intensity |
|---|---|---|---|
| 15-1 | 0.0001 | 0.1 | 0.4 |
| 15-2 | 0.001 | 0.3 | 1.0 |
| 15-3 | 0.01 | 0.9 | 1.7 |
| 15-4 | 0.1 | 1.3 | 2.5 |
| 15-5 | 1 | 2.2 | 3.3 |
| 15-6 | 10 | 2.8 | 3.5 |
| 15-7 | 100 | 3.3 | 3.8 |
| 15-8 | 1000 | 3.8 | 3.7 |

From the results of Table 15-1, when a sweetness intensity score (average) of 3.0 points or more is effective for sweetness enhancement, a sweetness-enhancing effect was confirmed at a 4-methylpentanoic acid concentration of 100 ppb or more.

In addition, from the results of Table 15-1, when a black tea au lait flavor intensity score (average) of 3.0 points or more is effective for black tea au lait flavor enhancement, a black tea au lait flavor-enhancing effect was confirmed at a 4-methylpentanoic acid concentration of 1 ppb or more.

**[Table 15-2]**

| sample No. | cyclotene concentration (ppb) | score (average) of sweetness intensity | score (average) of black tea au lait flavor intensity |
|---|---|---|---|
| 15-9 | 0.0001 | 0.4 | 0.1 |
| 15-10 | 0.001 | 1.8 | 0.2 |
| 15-11 | 0.01 | 2.1 | 0.8 |
| 15-12 | 0.1 | 2.5 | 1.0 |
| 15-13 | 1 | 3.2 | 1.7 |
| 15-14 | 10 | 3.7 | 2.0 |
| 15-15 | 100 | 4.1 | 2.5 |
| 15-16 | 1000 | 3.7 | 2.5 |

From the results of Table 15-2, when a sweetness intensity score (average) of 3.0 points or more is effective for sweetness enhancement, a sweetness-enhancing effect was confirmed at a cyclotene concentration of 1 ppb or more.

In addition, from the results of Table 15-2, it was confirmed that cyclotene has a concentration-dependent black tea au lait flavor-enhancing effect.

**[Table 15-3]**

| sample No. | decanoic acid concentration (ppb) | score (average) of sweetness intensity | score (average) of black tea au lait flavor intensity |
|---|---|---|---|
| 15-17 | 0.0001 | 0.1 | 0.2 |
| 15-18 | 0.001 | 0.3 | 0.4 |
| 15-19 | 0.01 | 0.4 | 0.7 |
| 15-20 | 0.1 | 0.7 | 1.1 |
| 15-21 | 1 | 1.0 | 1.3 |
| 15-22 | 10 | 1.2 | 1.5 |
| 15-23 | 100 | 1.7 | 1.8 |
| 15-24 | 1000 | 2.2 | 2.0 |

From the results of Table 15-3, it was confirmed that decanoic acid has a concentration-dependent sweetness-enhancing effect.

In addition, from the results of Table 15-3, it was confirmed that decanoic acid has a concentration-dependent black tea au lait flavor-enhancing effect.

**[Table 15-4]**

| sample No. | 4-methylpentanoic acid concentration (ppb) | cyclotene concentration (ppb) | decanoic acid concentration (ppb) | score (average) of sweetness intensity | score (average) of black tea au lait flavor intensity |
|---|---|---|---|---|---|
| 15-25 | 0.1 | 0.1 | - | 4.0 | 3.8 |
| 15-26 | - | 0.1 | 10 | 3.3 | 3.3 |
| 15-27 | 0.1 | - | 10 | 3.5 | 3.3 |

From the results of Table 15-4, in sample No. 15-25, the sweetness intensity score exceeded the sum of the score of sample No. 15-4 (4-methylpentanoic acid 0.1 ppb added alone) and the score of sample No. 15-12 (cyclotene 0.1 ppb added alone), and was 3.0 points or more, which confirmed that a combination of 4-methylpentanoic acid and cyclotene synergistically enhances the sweetness intensity.

In addition, from the results of Table 15-4, in sample Nos. 15-25, the black tea au lait flavor intensity score exceeded the sum of the score of sample No. 15-4 (4-methylpentanoic acid 0.1 ppb added alone) and the score of sample No. 15-12 (cyclotene 0.1 ppb added alone), and was 3.0 points or more, which confirmed that a combination of 4-methylpentanoic acid and cyclotene synergistically enhances the black tea au lait flavor intensity.

In addition, from the results of Table 15-4, in sample Nos. 15-26, the black tea au lait flavor intensity score exceeded the sum of the score of sample No. 15-12 (cyclotene 0.1 ppb added alone) and the score of sample No. 15-22 (decanoic acid 10 ppb added alone), and was 3.0 points or more, which confirmed that a combination of cyclotene and decanoic acid synergistically enhances the black tea au lait flavor intensity.

From the results of Table 15-4, in sample Nos. 15-27, the sweetness intensity score exceeded the sum of the score of sample No. 15-4 (4-methylpentanoic acid 0.1 ppb added alone) and the score of sample No. 15-22 (decanoic acid 10 ppb added alone), and was 3.0 points or more, which confirmed that a combination of 4-methylpentanoic acid and decanoic acid synergistically enhances the sweetness intensity.

### [Experimental Example 16] Cafe au lait flavor-enhancing effect in sucrose-containing cafe au lait by respectively adding 4-methylpentanoic acid, cyclotene, and decanoic acid

The following experiment was conducted in order to clarify the cafe au lait flavor-enhancing effect in sucrose-containing cafe au lait by adding any one of 4-methylpentanoic acid, cyclotene, and decanoic acid alone or a combination of cyclotene and decanoic acid.

### (Preparation of sucrose-containing cafe au lait)

Negative control cafe au lait was prepared by the same method as in Experimental Example 6.

### (Preparation of 4-methylpentanoic acid-containing cafe au lait (sucrose-containing) (sample Nos. 16-1 to 16-9))

A 4-methylpentanoic acid solution (solvent: propylene glycol) was added at a concentration shown in Table 16-1 to the negative control cafe au lait to obtain sample Nos. 16-1 to 16-9.

### (Preparation of cyclotene-containing cafe au lait (sucrose-containing) (sample Nos. 16-10 to 16-17))

A cyclotene solution (solvent: propylene glycol) was added at a concentration shown in Table 16-2 to the negative control cafe au lait to obtain sample Nos. 16-10 to 16-17.

### (Preparation of decanoic acid-containing cafe au lait (sucrose-containing) (sample Nos. 16-18 to 16-25))

A decanoic acid solution (solvent: propylene glycol) was added at a concentration shown in Table 16-3 to the negative control cafe au lait to obtain sample Nos. 16-18 to 16-25.

### (Preparation of cyclotene and decanoic acid-containing cafe au lait (sucrose-containing) (sample Nos. 16-26 to 16-34))

Cyclotene, decanoic acid solution (solvent: propylene glycol) were added at concentrations shown in Table 16-4 to the negative control cafe au lait to obtain sample Nos. 16-26 to 16-34.

The amount of propylene glycol to be added was adjusted to be the same amount for all samples (sample Nos. 16-1 to 16-34).

### (Sensory evaluation)

A sensory evaluation of the presence or absence of cafe au lait flavor intensity enhancement was performed for each sample by a panel of four experts according to the following evaluation criteria.

### (Evaluation criteria)

Cafe au lait flavor intensity was evaluated by 0.0 to 10.0 point based on the following reference samples (negative control (hereinafter referred to as NC) (0.0 point); reference 1 (hereinafter referred to as R1) (5.0 points); reference 2 (hereinafter referred to as R2) (10.0 points)). The average score (rounded to two decimal places) of each expert panelist was calculated. An average score of 3.0 points or more was considered to be functional.
NC (0.0 point): cafe au lait prepared by mixing starting materials at the blending rate in Table 6 in Experimental Example 6 (i.e., negative control cafe au lait).
R1 (5.0 points): drink with 0.15 g of sucrose added per 99.85 g of NC.
R2 (10.0 points): drink with 0.3 g of sucrose added per 99.70 g of NC.

The results of 4-methylpentanoic acid addition are shown in Table 16-1, the results of cyclotene addition are shown in Table 16-2, the results of decanoic acid addition are shown in Table 16-3, and the results of addition of cyclotene and decanoic acid in combination are shown in Table 16-4.

**[Table 16-1]**

| sample No. | 4-methylpentanoic acid concentration (ppb) | score (average) of cafe au lait flavor intensity |
|---|---|---|
| 16-1 | 0.0001 | 1.1 |
| 16-2 | 0.001 | 1.1 |
| 16-3 | 0.01 | 2.6 |
| 16-4 | 0.1 | 2.6 |
| 16-5 | 1 | 4.1 |
| 16-6 | 10 | 4.5 |
| 16-7 | 100 | 4.5 |
| 16-8 | 1000 | 4.5 |
| 16-9 | 10000 | 4.5 |

From the results of Table 16-1, when 3.0 points or more is effective for cafe au lait flavor enhancement, a cafe au lait flavor-enhancing effect was confirmed at a 4-methylpentanoic acid concentration of 1 ppb or more.

**[Table 16-2]**

| sample No. | cyclotene concentration (ppb) | score (average) of cafe au lait flavor intensity |
|---|---|---|
| 16-10 | 0.0001 | 0.4 |
| 16-11 | 0.001 | 1.5 |
| 16-12 | 0.01 | 1.9 |
| 16-13 | 0.1 | 3.1 |
| 16-14 | 1 | 3.1 |
| 16-15 | 10 | 3.5 |
| 16-16 | 100 | 3.5 |
| 16-17 | 1000 | 3.5 |

From the results of Table 16-2, when 3.0 points or more is effective for sweetness enhancement, a cafe au lait flavor-enhancing effect was confirmed at a cyclotene concentration of 0.1 ppb or more.

**[Table 16-3]**

| sample No. | decanoic acid concentration (ppb) | score (average) of cafe au lait flavor intensity |
|---|---|---|
| 16-18 | 0.0001 | 0.8 |
| 16-19 | 0.001 | 1.5 |
| 16-20 | 0.01 | 3.0 |
| 16-21 | 0.1 | 3.0 |
| 16-22 | 1 | 3.0 |
| 16-23 | 10 | 3.0 |
| 16-24 | 100 | 3.0 |
| 16-25 | 1000 | 3.5 |

From the results of Table 16-3, when 3.0 points or more is effective for cafe au lait flavor enhancement, a cafe au lait flavor-enhancing effect was confirmed at a decanoic acid concentration of 0.01 ppb or more.

**[Table 16-4]**

| sample No. | cyclotene concentration (ppb) | decanoic acid concentration (ppb) | score (average) of cafe au lait flavor intensity |
|---|---|---|---|
| 16-26 | 0.0001 | 0.0001 | 1.5 |
| 16-27 | | 0.001 | 2.4 |
| 16-28 | | 0.01 | 3.2 |
| 16-29 | 0.001 | 0.0001 | 3.7 |
| 16-30 | | 0.001 | 3.7 |
| 16-31 | | 0.01 | 4.3 |
| 16-32 | 0.01 | 0.0001 | 4.3 |
| 16-33 | | 0.001 | 4.3 |
| 16-34 | | 0.01 | 4.3 |

From the results of Table 16-4, in sample Nos. 16-29, 16-30, the score of cafe au lait flavor intensity exceeded the sum of the score of sample No. 16-11 (cyclotene 0.001 ppb added alone) shown in Table 16-2, and the score of sample No. 16-18 or 16-19 (decanoic acid 0.0001 ppb or 0.001 ppb added alone) shown in Table 16-3, and was 3.0 points or more.

Furthermore, in sample Nos. 16-32, 16-33, the score of cafe au lait flavor intensity exceeded the sum of the score of sample No. 16-12 (cyclotene 0.01 ppb added alone) shown in Table 16-2, and the score of sample No. 16-18 or 16-19 (decanoic acid 0.0001 ppb or 0.001 ppb added alone) shown in Table 16-3, and was 3.0 points or more.

These results confirm that a combination of cyclotene and decanoic acid synergistically enhances the cafe au lait flavor intensity.

### [Experimental Example 17] Stevia (RebA) sweetness-enhancing effect by adding saturated aliphatic monocarboxylic acid having 8 to 12 carbon atoms (octanoic acid, nonanoic acid, undecanoic acid, dodecanoic acid) alone, or combination of saturated aliphatic monocarboxylic acid having 8 to 12 carbon atoms and 4-methylpentanoic acid and/or cyclotene

The following experiment was conducted in order to clarify the stevia sweetness-enhancing effect by adding saturated aliphatic monocarboxylic acid having 8 to 12 carbon atoms (octanoic acid, nonanoic acid, undecanoic acid, dodecanoic acid) alone, or a combination of saturated aliphatic monocarboxylic acid having 8 to 12 carbon atoms and 4-methylpentanoic acid and/or cyclotene. Stevia used was rebaudioside A (RebA) (manufactured by PureCircle).

### (Preparation of negative control RebA solution (0.073 wt% RebA solution))

A negative control RebA solution (0.073 wt% RebA solution) was prepared by dissolving RebA in filtered water.

### (Preparation of RebA solution containing saturated aliphatic monocarboxylic acid having 8 to 12 carbon atoms (octanoic acid, nonanoic acid, undecanoic acid, dodecanoic acid))

Each propylene glycol solution of octanoic acid, nonanoic acid, undecanoic acid, or dodecanoic acid was added at the concentration shown in Table 17-1 to the negative control RebA solution to obtain samples of each concentration of octanoic acid-containing RebA solution, nonanoic acid-containing RebA solution, undecanoic acid-containing RebA solution, and dodecanoic acid-containing RebA solution.

### (Preparation of 4-methylpentanoic acid and octanoic acid-containing RebA solution)

4-Methylpentanoic acid and octanoic acid solution (solvent: propylene glycol) were added at the concentrations shown in Table 17-2 to the negative control RebA solution to obtain sample No. 17-1.

### (Preparation of cyclotene and octanoic acid-containing RebA solution)

Cyclotene and octanoic acid solution (solvent: propylene glycol) were added at the concentrations shown in Table 17-2 to the negative control RebA solution to obtain sample No. 17-2.

### (Preparation of 4-methylpentanoic acid, cyclotene, and octanoic acid-containing RebA solution)

4-Methylpentanoic acid, cyclotene, and octanoic acid solution (solvent: propylene glycol) were added at the concentrations shown in Table 17-2 to the negative control RebA solution to obtain sample No. 17-3.

### (Preparation of 4-methylpentanoic acid and nonanoic acid-containing RebA solution)

4-Methylpentanoic acid and nonanoic acid solution (solvent: propylene glycol) were added at the concentrations shown in Table 17-2 to the negative control RebA solution to obtain sample No. 17-4.

### (Preparation of cyclotene and nonanoic acid-containing RebA solution)

Cyclotene and nonanoic acid solution (solvent: propylene glycol) were added at the concentrations shown in Table 17-2 to the negative control RebA solution to obtain sample No. 17-5.

### (Preparation of 4-methylpentanoic acid, cyclotene, and nonanoic acid-containing RebA solution)

4-Methylpentanoic acid, cyclotene, and nonanoic acid solution (solvent: propylene glycol) were added at the concentrations shown in Table 17-2 to the negative control RebA solution to obtain sample No. 17-6.

### (Preparation of 4-methylpentanoic acid and undecanoic acid-containing RebA solution)

4-Methylpentanoic acid and undecanoic acid solution (solvent: propylene glycol) were added at the concentrations shown in Table 17-2 to the negative control RebA solution to obtain sample No. 17-7.

### (Preparation of cyclotene and undecanoic acid-containing RebA solution)

Cyclotene and undecanoic acid solution (solvent: propylene glycol) were added at the concentrations shown in Table 17-2 to the negative control RebA solution to obtain sample No. 17-8.

### (Preparation of 4-methylpentanoic acid, cyclotene, and undecanoic acid-containing RebA solution)

4-Methylpentanoic acid, cyclotene, and undecanoic acid solution (solvent: propylene glycol) were added at the concentrations shown in Table 17-2 to the negative control RebA solution to obtain sample No. 17-9.

### (Preparation of 4-methylpentanoic acid and dodecanoic acid-containing RebA solution)

4-Methylpentanoic acid and dodecanoic acid solution (solvent: propylene glycol) were added at the concentrations shown in Table 17-2 to the negative control RebA solution to obtain sample No. 17-10.

### (Preparation of cyclotene and dodecanoic acid-containing RebA solution)

Cyclotene and dodecanoic acid solution (solvent: propylene glycol) were added at the concentrations shown in Table 17-2 to the negative control RebA solution to obtain sample No. 17-11.

### (Preparation of 4-methylpentanoic acid, cyclotene, and dodecanoic acid-containing RebA solution)

4-Methylpentanoic acid and cyclotene, dodecanoic acid solution (solvent: propylene glycol) were added at the concentrations shown in Table 17-2 to the negative control RebA solution to obtain sample No. 17-12.

The amount of propylene glycol to be added was adjusted to be the same amount for all samples.

### (Sensory evaluation)

A sensory evaluation of sweetness intensity was performed for each sample by a panel of four experts according to the following evaluation criteria.

Sweetness intensity was evaluated by 0.0 to 10.0 points based on the following reference samples (negative control (hereinafter referred to as NC) (0.0 point); reference 1 (hereinafter referred to as R1) (3.2 points), reference 2 (hereinafter referred to as R2) (5.0 points); reference 3 (hereinafter referred to as R3) (10.0 points)). The average score (rounded to two decimal places) of each expert panelist was calculated. An average score of 3.0 points or more was considered to be functional.
NC (0.0 point): 0.073 wt% RebA solution (solvent: filtered water)
R1 (3.2 points): 0.073 wt% RebA solution (solvent: filtered water)+decanoic acid (10 ppb)
R2 (5.0 points): 0.077 wt% RebA solution (solvent: filtered water)
R3 (10.0 points): 0.080 wt% RebA solution (solvent: filtered water)

A smell was considered to be added when two or more panel members detected a smell derived from the compound.

The results are shown in Tables 17-1 and 17-2.

**[Table 17-1]**

| addition concentration (ppb) | octanoic acid | | nonanoic acid | | undecanoic acid | | dodecanoic acid | |
|---|---|---|---|---|---|---|---|---|
| | sweetness intensity | smell added | sweetness intensity | smell added | sweet-ness intensity | smell added | sweetness intensity | smell added |
| 0.001 | 0.3 | | 0.7 | | 0.3 | | 0.6 | |
| 0.01 | 0.4 | | 1.0 | | 1.9 | | 1.3 | |
| 0.1 | 0.9 | | 1.8 | | 3.5 | | 2.3 | |
| 1 | 1.3 | | 2.8 | | 4.5 | | 4.2 | |
| 10 | 2.0 | | 3.3 | | 5.4 | | 5.0 | |
| 100 | 2.6 | | 4.0 | | 6.0 | | 5.7 | |
| 1000 | 3.7 | | 4.8 | | 6.2 | | 6.0 | |
| 10000 | 4.0 | | 4.4 | added | 5.7 | added | 6.0 | added |

(In Table, the numerical value of sweetness intensity indicates the score (average score) of the sensory evaluation.)

**[Table 17-2]**

| sample No. | 4-methylpentanoic acid concentration (ppb) | cyclotene concentration (ppb) | octanoic acid concentration (ppb) | nonanoic acid concentration (ppb) | undecanoic acid concentration (ppb) | dodecanoic acid concentration (ppb) | sweetness intensity | smell added |
|---|---|---|---|---|---|---|---|---|
| 17-1 | 0.1 | | 0.1 | | | | 4.3 | |
| 17-2 | | 0.001 | 0.1 | | | | 6.7 | |
| 17-3 | 0.1 | 0.001 | 0.1 | | | | 6.8 | |
| 17-4 | 0.1 | | | 0.001 | | | 3.7 | |
| 17-5 | | 0.001 | | 0.001 | | | 5.3 | |
| 17-6 | 0.1 | 0.001 | | 0.001 | | | 5.8 | |
| 17-7 | 0.1 | | | | 0.001 | | 4.6 | |
| 17-8 | | 0.001 | | | 0.001 | | 5.5 | |
| 17-9 | 0.1 | 0.001 | | | 0.001 | | 5.6 | |
| 17-10 | 0.1 | | | | | 0.001 | 4.0 | |
| 17-11 | | 0.001 | | | | 0.001 | 4.3 | |
| 17-12 | 0.1 | 0.001 | | | | 0.001 | 5.0 | |

(In Table, the numerical value of sweetness intensity indicates the score (average score) of the sensory evaluation.)

From the results of Table 17-1, when a sweetness intensity score (average) of 3.0 points or more is effective for sweetness enhancement, in examples in which any one of octanoic acid, nonanoic acid, undecanoic acid, and dodecanoic acid was added alone, a sweetness-enhancing effect was confirmed at an octanoic acid concentration of 1000 ppb or more, a nonanoic acid concentration of 10 ppb or more, an undecanoic acid concentration of 0.1 ppb or more, and a dodecanoic acid concentration of 1 ppb or more.

None of the samples had any smell derived from the compounds.

From the results of Table 17-2, the following was confirmed.

In sample No. 17-1, the sweetness intensity score exceeded the sum of the score of sample No. 12-1 (4-methylpentanoic acid 0.1 ppb added alone) shown in Table 12 and the score of octanoic acid 0.1 ppb added alone shown in Table 17-1, and was 3.0 points or more, which confirmed that a combination of 4-methylpentanoic acid and octanoic acid synergistically enhances the sweetness intensity.

In sample No. 17-2, the sweetness intensity score exceeded the sum of the score of sample No. 12-3 (cyclotene 0.001 ppb added alone) shown in Table 12, and the score of octanoic acid 0.1 ppb added alone shown in Table 17-1, and was 3.0 points or more, which confirmed that a combination of cyclotene and octanoic acid synergistically enhances the sweetness intensity.

In sample No. 17-3, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, and the score of octanoic acid 0.1 ppb added alone shown in Table 17-1, and was 3.0 points or more, which confirmed that a combination of 4-methylpentanoic acid, cyclotene and octanoic acid synergistically enhances the sweetness intensity.

In sample No. 17-4, the sweetness intensity score exceeded the sum of the score of sample No. 12-1 (4-methylpentanoic acid 0.1 ppb added alone) shown in Table 12, and the score of nonanoic acid 0.001 ppb added alone shown in Table 17-1, and was 3.0 points or more, which confirmed that a combination of 4-methylpentanoic acid and nonanoic acid synergistically enhances the sweetness intensity.

In sample No. 17-5, the sweetness intensity score exceeded the sum of the score of sample No. 12-3 (cyclotene 0.001 ppb added alone) shown in Table 12, and the score of nonanoic acid 0.001 ppb added alone shown in Table 17-1, and was 3.0 points or more, which confirmed that a combination of cyclotene and nonanoic acid synergistically enhances the sweetness intensity.

In sample No. 17-6, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, and the score of nonanoic acid 0.001 ppb added alone shown in Table 17-1, and was 3.0 points or more, which confirmed that a combination of 4-methylpentanoic acid, cyclotene, and nonanoic acid synergistically enhances the sweetness intensity.

In sample No. 17-7, the sweetness intensity score exceeded the sum of the score of sample No. 12-1 (4-methylpentanoic acid 0.1 ppb added alone) shown in Table 12, and the score of undecanoic acid 0.001 ppb added alone shown in Table 17-1, and was 3.0 points or more, which confirmed that a combination of 4-methylpentanoic acid and undecanoic acid synergistically enhances the sweetness intensity.

In sample No. 17-8, the sweetness intensity score exceeded the sum of the score of sample No. 12-3 (cyclotene 0.001 ppb added alone) shown in Table 12, and the score of undecanoic acid 0.001 ppb added alone shown in Table 17-1, and was 3.0 points or more, which confirmed that a combination of cyclotene and undecanoic acid synergistically enhances the sweetness intensity.

In sample No. 17-9, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, and the score of undecanoic acid 0.001 ppb added alone shown in Table 17-1, and was 3.0 points or more, which confirmed that a combination of 4-methylpentanoic acid, cyclotene, and undecanoic acid synergistically enhances the sweetness intensity.

In sample No. 17-10, the sweetness intensity score exceeded the sum of the score of sample No. 12-1 (4-methylpentanoic acid 0.1 ppb added alone) shown in Table 12, and the score of dodecanoic acid 0.001 ppb added alone shown in Table 17-1, and was 3.0 points or more, which confirmed that a combination of 4-methylpentanoic acid and dodecanoic acid synergistically enhances the sweetness intensity.

In sample No. 17-11, the sweetness intensity score exceeded the sum of the score of sample No. 12-3 (cyclotene 0.001 ppb added alone) shown in Table 12, and the score of undecanoic acid 0.001 ppb added alone shown in Table 17-1, and was 3.0 points or more, which confirmed that a combination of cyclotene and undecanoic acid synergistically enhances the sweetness intensity.

In sample No. 17-12, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, and the score of dodecanoic acid 0.001 ppb added alone shown in Table 17-1, and was 3.0 points or more, which confirmed that a combination of 4-methylpentanoic acid, cyclotene, and dodecanoic acid synergistically enhances the sweetness intensity.

None of the samples had any smell derived from the compounds.

### [Experimental Example 18] Stevia (RebA) sweetness-enhancing effect by adding naringenin, and any one, two, or three of 4-methylpentanoic acid, cyclotene, and decanoic acid in combination

The following experiment was conducted in order to clarify the stevia (RebA) sweetness-enhancing effect by adding naringenin, and any one, two, or three of 4-methylpentanoic acid, cyclotene, and decanoic acid in combination. Stevia used was rebaudioside A (RebA) (manufactured by PureCircle).

### (Preparation of negative control RebA solution (0.073 wt% RebA solution))

A negative control RebA solution (0.073 wt% aspartame solution) was prepared by dissolving RebA in filtered water.

### (Preparation of naringenin-containing RebA solution)

A naringenin solution (solvent: propylene glycol) was added at the concentration shown in Table 18-1 to the negative control RebA solution to obtain samples of each concentration of naringenin-containing RebA solution.

### (Preparation of 4-methylpentanoic acid and naringenin-containing RebA solution)

4-Methylpentanoic acid and naringenin solution (solvent: propylene glycol) were added at the concentrations shown in Table 18-2 to the negative control RebA solution to obtain sample Nos. 18-1, 18-2, 18-3, 18-4.

### (Preparation of cyclotene and naringenin-containing RebA solution)

Cyclotene and naringenin solution (solvent: propylene glycol) were added at the concentrations shown in Table 18-2 to the negative control RebA solution to obtain sample Nos. 18-5, 18-6, 18-7, 18-8.

### (Preparation of decanoic acid and naringenin-containing RebA solution)

Decanoic acid and naringenin solution (solvent: propylene glycol) were added at the concentrations shown in Table 18-2 to the negative control RebA solution to obtain sample Nos. 18-9, 18-10, 18-11, 18-12.

### (Preparation of 4-methylpentanoic acid, cyclotene, and naringenin-containing RebA solution)

4-Methylpentanoic acid, cyclotene, and naringenin solution (solvent: propylene glycol) were added at the concentrations shown in Table 18-2 to the negative control RebA solution to obtain sample Nos. 18-13, 18-14.

### (Preparation of 4-methylpentanoic acid, decanoic acid, and naringenin-containing RebA solution)

4-Methylpentanoic acid, decanoic acid, and naringenin solution (solvent: propylene glycol) were added at the concentrations shown in Table 18-2 to the negative control RebA solution to obtain sample Nos. 18-15, 18-16.

### (Preparation of cyclotene, decanoic acid, and naringenin-containing RebA solution)

Cyclotene, decanoic acid, and naringenin solution (solvent: propylene glycol) were added at the concentrations shown in Table 18-2 to the negative control RebA solution to obtain sample Nos. 18-17, 18-18.

### (Preparation of 4-methylpentanoic acid, cyclotene, decanoic acid, and naringenin-containing RebA solution)

4-Methylpentanoic acid, cyclotene, decanoic acid, and naringenin solution (solvent: propylene glycol) were added at the concentrations shown in Table 18-2 to the negative control RebA solution to obtain sample Nos. 18-19, 18-20.

The amount of propylene glycol to be added was adjusted to be the same amount for all samples.

### (Sensory evaluation)

A sensory evaluation of sweetness intensity was performed for each sample by a panel of four experts according to the same evaluation criteria as in Experimental Example 17.

A smell was considered to be added when two or more panel members detected a smell derived from the compound.

The results are shown in Tables 18-1, 18-2.

**[Table 18-1]**

| addition concentration (ppm) | naringenin | |
|---|---|---|
| | sweetness intensity | smell added |
| 1 | 1.8 | |
| 5 | 2.5 | |
| 10 | 3.3 | |
| 15 | 4.1 | |
| 30 | 5.0 | |
| 50 | 5.4 | |

(In Table, the numerical value of sweetness intensity indicates the score (average score) of the sensory evaluation.)

**[Table 18-2]**

| sample No. | 4-methylpentanoic acid concentration (ppb) | cyclotene concentration (ppb) | decanoic acid concentration (ppb) | naringenin concentration (ppm) | sweetness intensity | smell added |
|---|---|---|---|---|---|---|
| 18-1 | 0.1 | | | 1 | 2.1 | |
| 18-2 | 0.1 | | | 5 | 3.3 | |
| 18-3 | 100 | | | 1 | 2.9 | |
| 18-4 | 100 | | | 5 | 4.1 | |
| 18-5 | | 0.001 | | 1 | 2.4 | |
| 18-6 | | 0.001 | | 5 | 3.8 | |
| 18-7 | | 10 | | 1 | 3.4 | |
| 18-8 | | 10 | | 5 | 4.5 | |
| 18-9 | | | 0.001 | 1 | 2.3 | |
| 18-10 | | | 0.001 | 5 | 4.0 | |
| 18-11 | | | 10 | 1 | 2.8 | |
| 18-12 | | | 10 | 5 | 5.6 | |
| 18-13 | 0.1 | 0.001 | | 1 | 3.6 | |
| 18-14 | 0.1 | 0.001 | | 5 | 6.0 | |
| 18-15 | 0.1 | | 0.001 | 1 | 4.0 | |
| 18-16 | 0.1 | | 0.001 | 5 | 6.8 | |
| 18-17 | | 0.001 | 0.001 | 1 | 5.0 | |
| 18-18 | | 0.001 | 0.001 | 5 | 6.9 | |
| 18-19 | 0.1 | 0.001 | 0.001 | 1 | 6.7 | |
| 18-20 | 0.1 | 0.001 | 0.001 | 5 | 7.9 | |

(In Table, the numerical value of sweetness intensity indicates the score (average score) of the sensory evaluation.)

From the results of Table 18-1, when a sweetness intensity score (average) of 3.0 points or more is effective for sweetness enhancement, in examples in which naringenin was added alone, a sweetness-enhancing effect was confirmed at a naringenin concentration of 10 ppm or more.

None of the samples had any smell derived from the compounds.

From the results of Table 18-2, the following was confirmed.

In sample No. 18-2, the sweetness intensity score exceeded the sum of the score of sample No. 12-1 (4-methylpentanoic acid 0.1 ppb added alone) shown in Table 12, and the score of naringenin 5 ppm added alone shown in Table 18-1, and was 3.0 points or more, which confirmed that a combination of 4-methylpentanoic acid and naringenin synergistically enhances the sweetness intensity.

In sample No. 18-6, the sweetness intensity score exceeded the sum of the score of sample No. 12-3 (cyclotene 0.001 ppb added alone) shown in Table 12, and the score of naringenin 5 ppm added alone shown in Table 18-1, and was 3.0 points or more, which confirmed that a combination of cyclotene and naringenin synergistically enhances the sweetness intensity.

In sample No. 18-10, the sweetness intensity score exceeded the sum of the score of sample No. 12-5 (decanoic acid 0.001 ppb added alone) shown in Table 12, and the score of naringenin 5 ppm added alone shown in Table 18-1, and was 3.0 points or more, which confirmed that a combination of decanoic acid and naringenin synergistically enhances the sweetness intensity.

In sample No. 18-13, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, and the score of naringenin 1 ppm added alone shown in Table 18-1, and was 3.0 points or more, which confirmed that a combination of 4-methylpentanoic acid, cyclotene, and naringenin synergistically enhances the sweetness intensity.

In sample No. 18-14, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, and the score of naringenin 5 ppm added alone shown in Table 18-1, and was 3.0 points or more, which confirmed that a combination of 4-methylpentanoic acid, cyclotene, and naringenin synergistically enhances the sweetness intensity.

In sample No. 18-15, the sweetness intensity score exceeded the sum of the score of sample No. 12-1 (4-methylpentanoic acid 0.1 ppb added alone) shown in Table 12, the score of sample No. 12-5 (decanoic acid 0.001 ppb added alone) shown in Table 12, and the score of naringenin 1 ppm added alone shown in Table 18-1, and was 3.0 points or more, which confirmed that a combination of 4-methylpentanoic acid, decanoic acid, and naringenin synergistically enhances the sweetness intensity.

In sample No. 18-16, the sweetness intensity score exceeded the sum of the score of sample No. 12-1 (4-methylpentanoic acid 0.1 ppb added alone) shown in Table 12, the score of sample No. 12-5 (decanoic acid 0.001 ppb added alone) shown in Table 12, and the score of naringenin 5 ppm added alone shown in Table 18-1, and was 3.0 points or more, which confirmed that a combination of 4-methylpentanoic acid, decanoic acid, and naringenin synergistically enhances the sweetness intensity.

In sample No. 18-17, the sweetness intensity score exceeded the sum of the score of sample No. 12-3 (cyclotene 0.001 ppb added alone) shown in Table 12, the score of sample No. 12-5 (decanoic acid 0.001 ppb added alone) shown in Table 12, and the score of naringenin 1 ppm added alone shown in Table 18-1, and was 3.0 points or more, which confirmed that a combination of cyclotene, decanoic acid, and naringenin synergistically enhances the sweetness intensity.

In sample No. 18-18, the sweetness intensity score exceeded the sum of the score of sample No. 12-3 (cyclotene 0.001 ppb added alone) shown in Table 12, the score of sample No. 12-5 (decanoic acid 0.001 ppb added alone) shown in Table 12, and the score of naringenin 5 ppm added alone shown in Table 18-1, and was 3.0 points or more, which confirmed that a combination of cyclotene, decanoic acid, and naringenin synergistically enhances the sweetness intensity.

In sample No. 18-19, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, the score of sample No. 12-5 (decanoic acid 0.001 ppb added alone) shown in Table 12, and the score of naringenin 1 ppm added alone shown in Table 18-1, and was 3.0 points or more, which confirmed that a combination of 4-methylpentanoic acid, cyclotene, dodecanoic acid, and naringenin synergistically enhances the sweetness intensity.

In sample No. 18-20, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, the score of sample No. 12-5 (decanoic acid 0.001 ppb added alone) shown in Table 12, and the score of naringenin 5 ppm added alone shown in Table 18-1, and was 3.0 points or more, which confirmed that a combination of 4-methylpentanoic acid, cyclotene, dodecanoic acid, and naringenin synergistically enhances the sweetness intensity.

None of the samples had any smell derived from the compounds.

### [Experimental Example 19] Stevia (RebA) sweetness-enhancing effect by adding glutamylvalylglycine, and any one, two, or three of 4-methylpentanoic acid, cyclotene, and decanoic acid in combination

The following experiment was conducted in order to clarify the stevia (RebA) sweetness-enhancing effect by adding glutamylvalylglycine, and any one, two, or three of 4-methylpentanoic acid, cyclotene, and decanoic acid in combination. Stevia used was rebaudioside A (RebA) (manufactured by PureCircle).

### (Preparation of negative control RebA solution (0.073 wt% RebA solution))

A negative control RebA solution (0.073 wt% RebA solution) was prepared by dissolving RebA in filtered water.

### (Preparation of glutamylvalylglycine-containing RebA solution)

A glutamylvalylglycine solution (solvent: propylene glycol) was added at the concentration shown in Table 19-1 to the negative control RebA solution to obtain samples of each concentration of glutamylvalylglycine-containing RebA solution.

### (Preparation of 4-methylpentanoic acid and glutamylvalylglycine-containing RebA solution)

4-Methylpentanoic acid and glutamylvalylglycine solution (solvent: propylene glycol) were added at the concentrations shown in Table 19-2 to the negative control RebA solution to obtain sample No. 19-1.

### (Preparation of cyclotene and glutamylvalylglycine-containing RebA solution)

Cyclotene and glutamylvalylglycine solution (solvent: propylene glycol) were added at the concentrations shown in Table 19-2 to the negative control RebA solution to obtain sample No. 19-2.

### (Preparation of decanoic acid and glutamylvalylglycine-containing RebA solution)

Decanoic acid and glutamylvalylglycine solution (solvent: propylene glycol) were added at the concentrations shown in Table 19-2 to the negative control RebA solution to obtain sample No. 19-3.

### (Preparation of 4-methylpentanoic acid, cyclotene, and glutamylvalylglycine-containing RebA solution)

4-Methylpentanoic acid, cyclotene, and glutamylvalylglycine solution (solvent: propylene glycol) were added at the concentrations shown in Table 19-2 to the negative control RebA solution to obtain sample No. 19-4.

### (Preparation of 4-methylpentanoic acid, decanoic acid, and glutamylvalylglycine-containing RebA solution)

4-Methylpentanoic acid, decanoic acid, and glutamylvalylglycine solution (solvent: propylene glycol) were added at the concentrations shown in Table 19-2 to the negative control RebA solution to obtain sample No. 19-5.

### (Preparation of cyclotene, decanoic acid, and glutamylvalylglycine-containing RebA solution)

Cyclotene, decanoic acid, and glutamylvalylglycine solution (solvent: propylene glycol) were added at the concentrations shown in Table 19-6 to the negative control RebA solution to obtain sample No. 19-6.

### (Preparation of 4-methylpentanoic acid, cyclotene, decanoic acid, and glutamylvalylglycine-containing RebA solution)

4-Methylpentanoic acid, cyclotene, decanoic acid, and glutamylvalylglycine solution (solvent: propylene glycol) were added at the concentrations shown in Table 19-2 to the negative control RebA solution to obtain sample No. 19-7.

The amount of propylene glycol to be added was adjusted to be the same amount for all samples.

### (Sensory evaluation)

A sensory evaluation of sweetness intensity was performed for each sample by a panel of four experts according to the same evaluation criteria as in Experimental Example 17.

A smell was considered to be added when two or more panel members detected a smell derived from the compound.

The results are shown in Tables 19-1, 19-2.

**[Table 19-1]**

| addition concentration (ppm) | glutamylvalylglycine | |
|---|---|---|
| | sweetness intensity | smell added |
| 0.001 | 0.5 | |
| 0.01 | 1.1 | |
| 0.05 | 1.5 | |
| 0.1 | 2.0 | |
| 1 | 2.7 | |
| 10 | 3.2 | |

(In Table, the numerical value of sweetness intensity indicates the score (average score) of the sensory evaluation.)

**[Table 19-2]**

| sample No. | 4-methylpentanoic acid concentration (ppb) | cyclotene concentration (ppb) | decanoic acid concentration (ppb) | glutamylvalylglycine concentration (ppm) | sweetness intensity | smell added |
|---|---|---|---|---|---|---|
| 19-1 | 0.1 | | | 1 | 3.3 | |
| 19-2 | | 0.001 | | 1 | 4.0 | |
| 19-3 | | | 0.001 | 1 | 3.7 | |
| 19-4 | 0.1 | 0.001 | | 1 | 6.1 | |
| 19-5 | 0.1 | | 0.001 | 1 | 6.2 | |
| 19-6 | | 0.001 | 0.001 | 1 | 6.5 | |
| 19-7 | 0.1 | 0.001 | 0.001 | 1 | 7.7 | |

(In Table, the numerical value of sweetness intensity indicates the score (average score) of the sensory evaluation.)

From the results of Table 19-1, when a sweetness intensity score (average) of 3.0 points or more is effective for sweetness enhancement, in examples in which glutamylvalylglycine was added alone, a sweetness-enhancing effect was confirmed at a glutamylvalylglycine concentration of 10 ppm or more.

None of the samples had any smell derived from the compounds.

From the results of Table 19-2, the following was confirmed.

In sample No. 19-1, the sweetness intensity score exceeded the sum of the score of sample No. 12-1 (4-methylpentanoic acid 0.1 ppb added alone) shown in Table 12, and the score of glutamylvalylglycine 1 ppm added alone shown in Table 19-1, and was 3.0 points or more, which confirmed that a combination of 4-methylpentanoic acid and glutamylvalylglycine synergistically enhances the sweetness intensity.

In sample No. 19-2, the sweetness intensity score exceeded the sum of the score of sample No. 12-3 (cyclotene 0.001 ppb added alone) shown in Table 12, and the score of glutamylvalylglycine 1 ppm added alone shown in Table 19-1, and was 3.0 points or more, which confirmed that a combination of cyclotene and glutamylvalylglycine synergistically enhances the sweetness intensity.

In sample No. 19-3, the sweetness intensity score exceeded the sum of the score of sample No. 12-5 (decanoic acid 0.001 ppb added alone) shown in Table 12, and the score of glutamylvalylglycine 1 ppm added alone shown in Table 19-1, and was 3.0 points or more, which confirmed that a combination of 4-methylpentanoic acid and glutamylvalylglycine synergistically enhances the sweetness intensity.

In sample No. 19-4, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, and the score of glutamylvalylglycine 1 ppm added alone shown in Table 19-1, and was 3.0 points or more, which confirmed that a combination of 4-methylpentanoic acid, cyclotene, and glutamylvalylglycine synergistically enhances the sweetness intensity.

In sample No. 19-5, the sweetness intensity score exceeded the sum of the score of sample No. 12-1 (4-methylpentanoic acid 0.1 ppb added alone) shown in Table 12, the score of sample No. 12-5 (decanoic acid 0.001 ppb added alone) shown in Table 12, and the score of glutamylvalylglycine 1 ppm added alone shown in Table 19-1, and was 3.0 points or more, which confirmed that a combination of 4-methylpentanoic acid, decanoic acid, and glutamylvalylglycine synergistically enhances the sweetness intensity.

In sample No. 19-6, the sweetness intensity score exceeded the sum of the score of sample No. 12-3 (cyclotene 0.001 ppb added alone) shown in Table 12, the score of sample No. 12-5 (decanoic acid 0.001 ppb added alone) shown in Table 12, and the score of glutamylvalylglycine 1 ppm added alone shown in Table 19-1, and was 3.0 points or more, which confirmed that a combination of cyclotene, decanoic acid, and glutamylvalylglycine synergistically enhances the sweetness intensity.

In sample No. 19-7, the sweetness intensity score exceeded the sum of the score of sample No. 12-1 (4-methylpentanoic acid 0.1 ppb added alone) shown in Table 12, the score of sample No. 12-3 (cyclotene 0.001 ppb added alone) shown in Table 12, the score of sample No. 12-5 (decanoic acid 0.001 ppb added alone) shown in Table 12, and the score of glutamylvalylglycine 1 ppm added alone shown in Table 19-1, and was 3.0 points or more, which confirmed that a combination of 4-methylpentanoic acid, cyclotene, decanoic acid, and glutamylvalylglycine synergistically enhances the sweetness intensity.

None of the samples had any smell derived from the compounds.

### [Experimental Example 20] Stevia (RebM) sweetness-enhancing effect by adding any one of 4-methylpentanoic acid, cyclotene, and decanoic acid alone, or two or three of these in combination

The following experiment was conducted in order to clarify the stevia (RebM) sweetness-enhancing effect by adding any one of 4-methylpentanoic acid, cyclotene, and decanoic acid alone, or two or three of these in combination. Stevia used was rebaudioside M (RebM) (manufactured by MORITA KAGAKU KOGYO CO., LTD.). RebM is a sweetness component derived from stevia.

### (Preparation of negative control RebM solution (0.063% RebM solution))

A negative control RebM solution (0.063 wt% RebM solution) was prepared by dissolving RebM in filtered water.

### (Preparation of 4-methylpentanoic acid-containing RebM solutions (sample Nos. 20-1, 20-2))

A 4-methylpentanoic acid solution (solvent: propylene glycol) was added at the concentration shown in Table 20 to the negative control RebM solution to obtain sample Nos. 20-1, 20-2.

### (Preparation of cyclotene-containing RebM solutions (sample Nos. 20-3, 20-4))

A cyclotene solution (solvent: propylene glycol) was added at the concentration shown in Table 20 to the negative control RebM solution to obtain sample Nos. 20-3, 20-4.

### (Preparation of decanoic acid-containing RebM solution (sample No. 20-5, 20-6))

A decanoic acid solution (solvent: propylene glycol) was added at the concentration shown in Table 20 to the negative control RebM solution to obtain sample Nos. 20-5, 20-6.

### (Preparation of 4-methylpentanoic acid and cyclotene-containing RebM solution (sample No. 20-7))

4-Methylpentanoic acid and cyclotene solution (solvent: propylene glycol) were added at the concentrations shown in Table 20 to the negative control RebM solution to obtain sample No. 20-7.

### (Preparation of 4-methylpentanoic acid and decanoic acid-containing RebM solution (sample No. 20-8))

4-Methylpentanoic acid and decanoic acid solution (solvent: propylene glycol) were added at the concentrations shown in Table 20 to the negative control RebM solution to obtain sample No. 20-8.

### (Preparation of cyclotene and decanoic acid-containing RebM solution (sample No. 20-9))

Cyclotene and decanoic acid solution (solvent: propylene glycol) were added at the concentrations shown in Table 20 to the negative control RebM solution to obtain sample No. 20-9.

### (Preparation of 4-methylpentanoic acid, cyclotene, and decanoic acid-containing RebM solution (sample No. 20-10))

4-Methylpentanoic acid, cyclotene, and decanoic acid solution (solvent: propylene glycol) were added at the concentrations shown in Table 20 to the negative control RebM solution to obtain sample No. 20-10.

The amount of propylene glycol to be added was adjusted to be the same amount for all samples (sample No. 20-1 to 20-10).

### (Sensory evaluation)

A sensory evaluation of sweetness intensity was performed for each sample by a panel of four experts according to the following evaluation criteria.

Sweetness intensity was evaluated by 0.0 to 10.0 points based on the following reference samples (negative control (hereinafter referred to as NC) (0.0 point); reference 1 (hereinafter referred to as R1) (3.0 points), reference 2 (hereinafter referred to as R2) (5.0 points); reference 3 (hereinafter referred to as R3) (10.0 points)). The average score (rounded to two decimal places) of each expert panelist was calculated. An average score of 3.0 points or more was considered to be functional.
NC (0.0 point): 0.063 wt% RebM solution (solvent: filtered water)
R1 (3.0 points): 0.063 wt% RebM solution (solvent: filtered water)+dodecanoic acid (1 ppb)
R2 (5.0 points): 0.066 wt% RebM solution (solvent: filtered water)
R3 (10.0 points): 0.069 wt% RebM solution (solvent: filtered water)

A smell was considered to be added when two or more panel members detected a smell derived from the compound.

The results are shown in Table 20.

**[Table 20]**

| sample No. | 4-methylpentanoic acid concentration (ppb) | cyclotene concentration (ppb) | decanoic acid concentration (ppb) | sweetness intensity | smell added |
|---|---|---|---|---|---|
| 20-1 | 0.1 | | | 1.8 | |
| 20-2 | 100 | | | 4.3 | |
| 20-3 | | 0.001 | | 2.5 | |
| 20-4 | | 10 | | 4.9 | |
| 20-5 | | | 0.001 | 2.0 | |
| 20-6 | | | 10 | 4.0 | |
| 20-7 | 0.1 | 0.001 | | 5.1 | |
| 20-8 | 0.1 | | 0.001 | 5.7 | |
| 20-9 | | 0.001 | 0.001 | 6.3 | |
| 20-10 | 0.1 | 0.001 | 0.001 | 8.0 | |

(In Table, the numerical value of sweetness intensity indicates the score (average score) of the sensory evaluation.)

From the results of Table 20, when a sweetness intensity score (average) of 3.0 points or more is effective for sweetness enhancement, in examples in which any one of 4-methylpentanoic acid, cyclotene, and decanoic acid was added alone, a sweetness-enhancing effect was confirmed at a 4-methylpentanoic acid concentration of 100 ppb (sample No. 20-2), a cyclotene concentration of 10 ppb (sample No. 20-4), and a decanoic acid concentration of 10 ppb (sample No. 20-6).

In addition, from the results of Table 20, in sample No. 20-7, the sweetness intensity score exceeded the sum of the score of sample No. 20-1 (4-methylpentanoic acid 0.1 ppb added alone), and the score of sample No. 20-3 (cyclotene 0.001 ppb added alone), and was 3.0 points or more, which confirmed that a combination of 4-methylpentanoic acid and cyclotene synergistically enhances the sweetness intensity.

In addition, from the results of Table 20, in sample No. 20-8, the sweetness intensity score exceeded the sum of the score of sample No. 20-1 (4-methylpentanoic acid 0.1 ppb added alone), and the score of sample No. 20-5 (decanoic acid 0.001 ppb added alone), and was 3.0 points or more, which confirmed that a combination of 4-methylpentanoic acid and decanoic acid synergistically enhances the sweetness intensity.

In addition, from the results of Table 20, in sample No. 20-9, the sweetness intensity score exceeded the sum of the score of sample No. 20-3 (cyclotene 0.001 ppb added alone), and the score of sample No. 20-5 (decanoic acid 0.001 ppb added alone), and was 3.0 points or more, which confirmed that a combination of cyclotene and decanoic acid synergistically enhances the sweetness intensity.

In addition, from the results of Table 20, in sample No. 20-10, the sweetness intensity score exceeded the sum of the score of sample No. 20-1 (4-methylpentanoic acid 0.1 ppb added alone), the score of sample No. 20-3 (cyclotene 0.001 ppb added alone), and the score of sample No. 20-5 (decanoic acid 0.001 ppb added alone), and was 3.0 points or more, which confirmed that a combination of 4-methylpentanoic acid, cyclotene, and decanoic acid synergistically enhances the sweetness intensity.

None of the samples had any smell derived from the compounds.

### [Experimental Example 21] Stevia (RebM) sweetness-enhancing effect by adding saturated aliphatic monocarboxylic acid having 8 to 12 carbon atoms (octanoic acid, nonanoic acid, undecanoic acid, dodecanoic acid) alone, or combination of saturated aliphatic monocarboxylic acid having 8 to 12 carbon atoms and 4-methylpentanoic acid and/or cyclotene

The following experiment was conducted in order to clarify the stevia (RebM) sweetness enhance effect by adding saturated aliphatic monocarboxylic acid having 8 to 12 carbon atoms (octanoic acid, nonanoic acid, undecanoic acid, dodecanoic acid) alone, or combination of saturated aliphatic monocarboxylic acid having 8 to 12 carbon atoms and 4-methylpentanoic acid and/or cyclotene. Stevia (RebM) used was one manufactured by MORITA KAGAKU KOGYO CO., LTD.

### (Preparation of negative control RebM solution (0.063% RebM solution))

A negative control RebM solution (0.063 wt% RebM solution) was prepared by dissolving RebM in filtered water.

### (Preparation of saturated aliphatic monocarboxylic acid having 8 to 12 carbon atoms (octanoic acid, nonanoic acid, undecanoic acid, dodecanoic acid)-containing RebM solution)

Each propylene glycol solution of octanoic acid, nonanoic acid, undecanoic acid, or dodecanoic acid was added at the concentration shown in Table 21-1 to the negative control RebM solution to obtain samples of each concentration of octanoic acid-containing RebM solution, nonanoic acid-containing RebM solution, undecanoic acid-containing RebM solution, and dodecanoic acid-containing RebM solution.

### (Preparation of 4-methylpentanoic acid and octanoic acid-containing RebM solution)

4-Methylpentanoic acid and octanoic acid solution (solvent: propylene glycol) were added at the concentrations shown in Table 21-2 to the negative control RebM solution to obtain sample No. 21-1.

### (Preparation of cyclotene and octanoic acid-containing RebM solution)

Cyclotene and octanoic acid solution (solvent: propylene glycol) were added at the concentrations shown in Table 21-2 to the negative control RebM solution to obtain sample No. 21-2.

### (Preparation of 4-methylpentanoic acid, cyclotene, and octanoic acid-containing RebM solution)

4-Methylpentanoic acid, cyclotene, and octanoic acid solution (solvent: propylene glycol) were added at the concentrations shown in Table 21-2 to the negative control RebM solution to obtain sample No. 21-3.

### (Preparation of 4-methylpentanoic acid and nonanoic acid-containing RebM solution)

4-Methylpentanoic acid, nonanoic acid solution (solvent: propylene glycol) were added at the concentration shown in Table 21-2 to the negative control RebM solution to obtain sample No. 21-4.

### (Preparation of cyclotene and nonanoic acid-containing RebM solution)

Cyclotene and nonanoic acid solution (solvent: propylene glycol) were added at the concentrations shown in Table 21-2 to the negative control RebM solution to obtain sample No. 21-5.

### (Preparation of 4-methylpentanoic acid, cyclotene, and nonanoic acid-containing RebM solution)

4-Methylpentanoic acid, cyclotene, and nonanoic acid solution (solvent: propylene glycol) were added at the concentrations shown in Table 21-2 to the negative control RebM solution to obtain sample No. 21-6.

### (Preparation of 4-methylpentanoic acid and undecanoic acid-containing RebM solution)

4-Methylpentanoic acid and undecanoic acid solution (solvent: propylene glycol) were added at the concentrations shown in Table 21-2 to the negative control RebM solution to obtain sample No. 21-7.

### (Preparation of cyclotene and undecanoic acid-containing RebM solution)

Cyclotene and undecanoic acid solution (solvent: propylene glycol) were added at the concentrations shown in Table 21-2 to the negative control RebM solution to obtain sample No. 21-8.

### (Preparation of 4-methylpentanoic acid, cyclotene, and undecanoic acid-containing RebM solution)

4-Methylpentanoic acid, cyclotene, and undecanoic acid solution (solvent: propylene glycol) were added at the concentrations shown in Table 21-2 to the negative control RebM solution to obtain sample No. 21-9.

### (Preparation of 4-methylpentanoic acid and dodecanoic acid-containing RebM solution)

4-Methylpentanoic acid and dodecanoic acid solution (solvent: propylene glycol) were added at the concentrations shown in Table 21-2 to the negative control RebM solution to obtain sample No. 21-10.

### (Preparation of cyclotene and dodecanoic acid-containing RebM solution)

Cyclotene and dodecanoic acid solution (solvent: propylene glycol) were added at the concentrations shown in Table 21-2 to the negative control RebM solution to obtain sample No. 21-11.

### (Preparation of 4-methylpentanoic acid, cyclotene, and dodecanoic acid-containing RebM solution)

4-Methylpentanoic acid, cyclotene, and dodecanoic acid solution (solvent: propylene glycol) were added at the concentrations shown in Table 21-2 to the negative control RebM solution to obtain sample No. 21-12.

The amount of propylene glycol to be added was adjusted to be the same amount for all samples.

### (Sensory evaluation)

A sensory evaluation of sweetness intensity was performed for each sample by a panel of four experts according to the same evaluation criteria as in Experimental Example 20.

A smell was considered to be added when two or more panel members detected a smell derived from the compound.

The results are shown in Tables 21-1, 21-2.

**[Table 21-1]**

| addition concentration (ppb) | octanoic acid | | nonanoic acid | | undecanoic acid | | dodecanoic acid | |
|---|---|---|---|---|---|---|---|---|
| | sweetness intensity | smell added | sweetness intensity | smell added | sweetness intensity | smell added | sweetness intensity | smell added |
| 0.001 | 1.1 | | 0.9 | | 1.3 | | 0.8 | |
| 0.01 | 1.8 | | 1.4 | | 2.0 | | 1.7 | |
| 0.1 | 2.7 | | 2.1 | | 2.4 | | 2.5 | |
| 1 | 3.3 | | 2.8 | | 2.9 | | 3.0 | |
| 10 | 4.3 | | 3.3 | | 3.3 | | 5.0 | |
| 100 | 4.3 | | 4.1 | | 3.9 | | 4.6 | |
| 1000 | 4.4 | | 4.8 | | 4.4 | | 4.7 | |
| 10000 | 4.3 | added | 4.8 | | 4.1 | added | 4.8 | |

(In Table, the numerical value of sweetness intensity indicates the score (average score) of the sensory evaluation.)

**[Table 21-2]**

| sample No. | 4-methylpentanoic acid concentration (ppb) | cyclotene concentration (ppb) | octanoic acid concentration (ppb) | nonanoic acid concentration (ppb) | undecanoic acid concentration (ppb) | dodecanoic acid concentration (ppb) | sweetness intensity | smell added |
|---|---|---|---|---|---|---|---|---|
| 21-1 | 0.1 | | 0.001 | | | | 4.8 | |
| 21-2 | | 0.001 | 0.001 | | | | 5.2 | |
| 21-3 | 0.1 | 0.001 | 0.001 | | | | 6.3 | |
| 21-4 | 0.1 | | | 0.001 | | | 4.4 | |
| 21-5 | | 0.001 | | 0.001 | | | 5.0 | |
| 21-6 | 0.1 | 0.001 | | 0.001 | | | 6.0 | |
| 21-7 | 0.1 | | | | 0.001 | | 4.3 | |
| 21-8 | | 0.001 | | | 0.001 | | 4.7 | |
| 21-9 | 0.1 | 0.001 | | | 0.001 | | 6.3 | |
| 21-10 | 0.1 | | | | | 0.001 | 5.5 | |
| 21-11 | | 0.001 | | | | 0.001 | 6.4 | |
| 21-12 | 0.1 | 0.001 | | | | 0.001 | 7.4 | |

(In Table, the numerical value of sweetness intensity indicates the score (average score) of the sensory evaluation.)

From the results of Table 21-1, when a sweetness intensity score (average) of 3.0 points or more is effective for sweetness enhancement, in examples in which any one of octanoic acid, nonanoic acid, undecanoic acid, and dodecanoic acid was added alone, a sweetness-enhancing effect was confirmed at an octanoic acid concentration of 1 ppb or more, a nonanoic acid concentration of 10 ppb or more, an undecanoic acid concentration of 10 ppb or more, and a dodecanoic acid concentration of 1 ppb or more.

None of the samples had any smell derived from the compounds except when the octanoic acid concentration was 10000 ppb and when the undecanoic acid concentration was 10000 ppb.

From the results of Table 21-2, the following was confirmed.

In sample No. 21-1, the sweetness intensity score exceeded the sum of the score of sample No. 20-1 (4-methylpentanoic acid 0.1 ppb added alone) shown in Table 20, and the score of octanoic acid 0.001 ppb added alone shown in Table 21-1, and was 3.0 points or more, which confirmed that a combination of 4-methylpentanoic acid and octanoic acid synergistically enhances the sweetness intensity.

In sample No. 21-2, the sweetness intensity score exceeded the sum of the score of sample No. 20-3 (cyclotene 0.001 ppb added alone) shown in Table 20, and the score of octanoic acid 0.001 ppb added alone shown in Table 21-1, and was 3.0 points or more, which confirmed that a combination of cyclotene and octanoic acid synergistically enhances the sweetness intensity.

In sample No. 21-3, the sweetness intensity score exceeded the sum of the score of sample No. 20-1 (4-methylpentanoic acid 0.1 ppb added alone) shown in Table 20, the score of sample No. 12-3 (cyclotene 0.001 ppb added alone) shown in Table 20, and the score of octanoic acid 0.001 ppb added alone shown in Table 21-1, and was 3.0 points or more, which confirmed that a combination of 4-methylpentanoic acid, cyclotene, and octanoic acid synergistically enhances the sweetness intensity.

In sample No. 21-4, the sweetness intensity score exceeded the sum of the score of sample No. 20-1 (4-methylpentanoic acid 0.1 ppb added alone) shown in Table 20, and the score of nonanoic acid 0.001 ppb added alone shown in Table 21-1, and was 3.0 points or more, which confirmed that a combination of 4-methylpentanoic acid and nonanoic acid synergistically enhances the sweetness intensity.

In sample No. 21-5, the sweetness intensity score exceeded the sum of the score of sample No. 20-3 (cyclotene 0.001 ppb added alone) shown in Table 20, and the score of nonanoic acid 0.001 ppb added alone shown in Table 21-1, and was 3.0 points or more, which confirmed that a combination of cyclotene and nonanoic acid synergistically enhances the sweetness intensity.

In sample No. 21-6, the sweetness intensity score exceeded the sum of the score of sample No. 20-1 (4-methylpentanoic acid 0.1 ppb added alone) shown in Table 20, the score of sample No. 12-3 (cyclotene 0.001 ppb added alone) shown in Table 20, and the score of nonanoic acid 0.001 ppb added alone shown in Table 21-1, and was 3.0 points or more, which confirmed that a combination of 4-methylpentanoic acid, cyclotene, and nonanoic acid synergistically enhances the sweetness intensity.

In sample No. 21-7, the sweetness intensity score exceeded the sum of the score of sample No. 20-1 (4-methylpentanoic acid 0.1 ppb added alone) shown in Table 20, and the score of undecanoic acid 0.001 ppb added alone shown in Table 21-1, and was 3.0 points or more, which confirmed that a combination of 4-methylpentanoic acid and undecanoic acid synergistically enhances the sweetness intensity.

In sample No. 21-8, the sweetness intensity score exceeded the sum of the score of sample No. 20-3 (cyclotene 0.001 ppb added alone) shown in Table 20, and the score of undecanoic acid 0.001 ppb added alone shown in Table 21-1, and was 3.0 points or more, which confirmed that a combination of cyclotene and undecanoic acid synergistically enhances the sweetness intensity.

In sample No. 21-9, the sweetness intensity score exceeded the sum of the score of sample No. 20-1 (4-methylpentanoic acid 0.1 ppb added alone) shown in Table 20, the score of sample No. 20-3 (cyclotene 0.001 ppb added alone) shown in Table 20, and the score of undecanoic acid 0.001 ppb added alone shown in Table 21-1, and was 3.0 points or more, which confirmed that a combination of 4-methylpentanoic acid, cyclotene, and undecanoic acid synergistically enhances the sweetness intensity.

In sample No. 21-10, the sweetness intensity score exceeded the sum of the score of sample No. 20-1 (4-methylpentanoic acid 0.1 ppb added alone) shown in Table 20, and the score of dodecanoic acid 0.001 ppb added alone shown in Table 21-1, and was 3.0 points or more, which confirmed that a combination of 4-methylpentanoic acid and dodecanoic acid synergistically enhances the sweetness intensity.

In sample No. 21-11, the sweetness intensity score exceeded the sum of the score of sample No. 20-3 (cyclotene 0.001 ppb added alone) shown in Table 20, and the score of dodecanoic acid 0.001 ppb added alone shown in Table 21-1, and was 3.0 points or more, which confirmed that a combination of cyclotene and dodecanoic acid synergistically enhances the sweetness intensity.

In sample No. 21-12, the sweetness intensity score exceeded the sum of the score of sample No. 20-1 (4-methylpentanoic acid 0.1 ppb added alone) shown in Table 20, the score of sample No. 20-3 (cyclotene 0.001 ppb added alone) shown in Table 20, and the score of dodecanoic acid 0.001 ppb added alone shown in Table 21-1, and was 3.0 points or more, which confirmed that a combination of 4-methylpentanoic acid, cyclotene, and dodecanoic acid synergistically enhances the sweetness intensity.

None of the samples had any smell derived from the compounds.

### [Experimental Example 22] Aspartame sweetness-enhancing effect by adding saturated aliphatic monocarboxylic acid having 8 to 12 carbon atoms (octanoic acid, nonanoic acid, undecanoic acid, dodecanoic acid) alone, or combination of saturated aliphatic monocarboxylic acid having 8 to 12 carbon atoms and 4-methylpentanoic acid and/or cyclotene

The following experiment was conducted in order to clarify the aspartame sweetness enhance effect by adding saturated aliphatic monocarboxylic acid having 8 to 12 carbon atoms (octanoic acid, nonanoic acid, undecanoic acid, dodecanoic acid) alone, or combination of saturated aliphatic monocarboxylic acid having 8 to 12 carbon atoms and 4-methylpentanoic acid and/or cyclotene. Aspartame used was one manufactured by Ajinomoto Co., Inc.

### (Preparation of negative control aspartame solution (0.063 wt% aspartame))

A negative control aspartame solution (0.063 wt% aspartame solution) was prepared by dissolving aspartame in filtered water.

### (Preparation of saturated aliphatic monocarboxylic acid having 8 to 12 carbon atoms (octanoic acid, nonanoic acid, undecanoic acid, dodecanoic acid)-containing aspartame solution)

Each propylene glycol solution of octanoic acid, nonanoic acid, decanoic acid, undecanoic acid, or dodecanoic acid was added at the concentration shown in Table 22-1 to the negative control aspartame solution to obtain samples of each concentration of octanoic acid-containing aspartame solution, nonanoic acid-containing aspartame solution, undecanoic acid-containing aspartame solution, and dodecanoic acid-containing aspartame solution.

### (Preparation of 4-methylpentanoic acid and octanoic acid-containing aspartame solution)

4-Methylpentanoic acid and octanoic acid solution (solvent: propylene glycol) were added at the concentrations shown in Table 22-2 to the negative control aspartame solution to obtain sample No. 22-1.

### (Preparation of cyclotene and octanoic acid-containing aspartame solution)

Cyclotene and octanoic acid solution (solvent: propylene glycol) were added at the concentrations shown in Table 22-2 to the negative control aspartame solution to obtain sample No. 22-2.

### (Preparation of 4-methylpentanoic acid, cyclotene, and octanoic acid-containing aspartame solution)

4-Methylpentanoic acid, cyclotene, and octanoic acid solution (solvent: propylene glycol) were added at the concentrations shown in Table 22-2 to the negative control aspartame solution to obtain sample No. 22-3.

### (Preparation of 4-methylpentanoic acid and nonanoic acid-containing aspartame solution)

4-Methylpentanoic acid and nonanoic acid solution (solvent: propylene glycol) were added at the concentration shown in Table 22-2 to the negative control aspartame solution to obtain sample No. 22-4.

### (Preparation of cyclotene and nonanoic acid-containing aspartame solution)

Cyclotene and nonanoic acid solution (solvent: propylene glycol) were added at the concentrations shown in Table 22-2 to the negative control aspartame solution to obtain sample No. 22-5.

### (Preparation of 4-methylpentanoic acid, cyclotene, and nonanoic acid-containing aspartame solution)

4-Methylpentanoic acid, cyclotene, and nonanoic acid solution (solvent: propylene glycol) were added at the concentrations shown in Table 22-2 to the negative control aspartame solution to obtain sample No. 22-6.

### (Preparation of 4-methylpentanoic acid and undecanoic acid-containing aspartame solution)

4-Methylpentanoic acid and undecanoic acid solution (solvent: propylene glycol) were added at the concentrations shown in Table 22-2 to the negative control aspartame solution to obtain sample No. 22-7.

### (Preparation of cyclotene and undecanoic acid-containing aspartame solution)

Cyclotene and undecanoic acid solution (solvent: propylene glycol) were added at the concentrations shown in Table 22-2 to the negative control aspartame solution to obtain sample No. 22-8.

### (Preparation of 4-methylpentanoic acid, cyclotene, and undecanoic acid-containing aspartame solution)

4-Methylpentanoic acid, cyclotene, and undecanoic acid solution (solvent: propylene glycol) were added at the concentrations shown in Table 22-2 to the negative control aspartame solution to obtain sample No. 22-9.

### (Preparation of 4-methylpentanoic acid and dodecanoic acid-containing aspartame solution)

4-Methylpentanoic acid and dodecanoic acid solution (solvent: propylene glycol) were added at the concentrations shown in Table 22-2 to the negative control aspartame solution to obtain sample No. 22-10.

### (Preparation of cyclotene and dodecanoic acid-containing aspartame solution)

Cyclotene and dodecanoic acid solution (solvent: propylene glycol) were added at the concentrations shown in Table 22-2 to the negative control aspartame solution to obtain sample No. 22-11.

### (Preparation of 4-methylpentanoic acid, cyclotene, and dodecanoic acid-containing aspartame solution)

4-Methylpentanoic acid, cyclotene, and dodecanoic acid solution (solvent: propylene glycol) were added at the concentrations shown in Table 22-2 to the negative control aspartame solution to obtain sample No. 22-12.

The amount of propylene glycol to be added was adjusted to be the same amount for all samples.

### (Sensory evaluation)

A sensory evaluation of sweetness intensity was performed for each sample by a panel of four experts according to the following evaluation criteria.

Sweetness intensity was evaluated by 0.0 to 10.0 point based on the following reference samples (negative control (hereinafter referred to as NC) (0.0 point); reference 1 (hereinafter referred to as R1) (3.2 points), reference 2 (hereinafter referred to as R2) (5.0 points); reference 3 (hereinafter referred to as R3) (10.0 points)). The average score (rounded to two decimal places) of each expert panelist was calculated. An average score of 3.0 points or more was considered to be functional.
NC (0.0 point): 0.063 wt% aspartame solution (solvent: filtered water)
R1 (3.2 points): 0.063 wt% aspartame solution (solvent: filtered water)+decanoic acid (10 ppb)
R2 (5.0 points): 0.066 wt% aspartame solution (solvent: filtered water)
R3 (10.0 points): 0.069 wt% aspartame solution (solvent: filtered water)

A smell was considered to be added when two or more panel members detected a smell derived from the compound.

The results are shown in Tables 22-1, 22-2.

**[Table 22-1]**

| addition concentration (ppb) | octanoic acid | | nonanoic acid | | undecanoic acid | | dodecanoic acid | |
|---|---|---|---|---|---|---|---|---|
| | sweetness intensity | smell added | sweetness intensity | smell added | sweetness intensity | smell added | sweetness intensity | smell added |
| 0.001 | 0.6 | | 0.8 | | 1.3 | | 1.7 | |
| 0.01 | 1.4 | | 2.0 | | 2.1 | | 2.2 | |
| 0.1 | 2.2 | | 2.7 | | 2.8 | | 2.7 | |
| 1 | 2.9 | | 3.4 | | 3.2 | | 3.3 | |
| 10 | 3.4 | | 4.5 | | 3.8 | | 4.2 | |
| 100 | 3.9 | | 4.9 | | 4.1 | | 4.9 | |
| 1000 | 4.3 | added | 5.4 | | 4.7 | | 5.5 | |
| 10000 | 4.6 | added | 5.9 | added | 5.5 | added | 6.1 | |

(In Table, the numerical value of sweetness intensity indicates the score (average score) of the sensory evaluation.)

**[Table 22-2]**

| sample No. | 4-methylpentanoic acid concentration (ppb) | cyclotene concentration (ppb) | octa-noic acid concentration (ppb) | nonanoic acid concentration (ppb) | undecanoic acid concentration (ppb) | dodecanoic acid concentration (ppb) | sweetness intensity | smell added |
|---|---|---|---|---|---|---|---|---|
| 22-1 | 0.1 | | 0.001 | | | | 5.0 | |
| 22-2 | | 0.001 | 0.001 | | | | 5.4 | |
| 22-3 | 0.1 | 0.001 | 0.001 | | | | 6.5 | |
| 22-4 | 0.1 | | | 0.001 | | | 4.5 | |
| 22-5 | | 0.001 | | 0.001 | | | 5.1 | |
| 22-6 | 0.1 | 0.001 | | 0.001 | | | 5.8 | |
| 22-7 | 0.1 | | | | 0.001 | | 5.7 | |
| 22-8 | | 0.001 | | | 0.001 | | 6.3 | |
| 22-9 | 0.1 | 0.001 | | | 0.001 | | 6.9 | |
| 22-10 | 0.1 | | | | | 0.001 | 5.1 | |
| 22-11 | | 0.001 | | | | 0.001 | 5.8 | |
| 22-12 | 0.1 | 0.001 | | | | 0.001 | 6.6 | |

(In Table, the numerical value of sweetness intensity indicates the score (average score) of the sensory evaluation.)

From the results of Table 22-1, when a sweetness intensity score (average) of 3.0 points or more is effective for sweetness enhancement, in examples in which any one of octanoic acid, nonanoic acid, undecanoic acid, and dodecanoic acid was added alone, a sweetness-enhancing effect was confirmed at an octanoic acid concentration of 10 ppb or more, a nonanoic acid concentration of 1 ppb or more, an undecanoic acid concentration of 1 ppb or more, and a dodecanoic acid concentration 1 ppb or more.

None of the samples had any smell derived from the compounds except when the octanoic acid concentration was 1000 ppb or 10000 ppb, when the nonanoic acid concentration was 10000 ppb, and when the undecanoic acid concentration was 10000 ppb.

From the results of Table 22-2, the following was confirmed.

In sample No. 22-1, the sweetness intensity score exceeded the sum of the score of sample No. 11-1 (4-methylpentanoic acid 0.1 ppb added alone) shown in Table 11, and the score of octanoic acid 0.001 ppb added alone shown in Table 22-1, and was 3.0 points or more, which confirmed that a combination of 4-methylpentanoic acid and octanoic acid synergistically enhances the sweetness intensity.

In sample No. 22-2, the sweetness intensity score exceeded the sum of the score of sample No. 11-3 (cyclotene 0.001 ppb added alone) shown in Table 11, and the score of octanoic acid 0.001 ppb added alone shown in Table 22-1, and was 3.0 points or more, which confirmed that a combination of cyclotene and octanoic acid synergistically enhances the sweetness intensity.

In sample No. 22-3, the sweetness intensity score exceeded the sum of the score of sample No. 11-1 (4-methylpentanoic acid 0.1 ppb added alone) shown in Table 11, the score of sample No. 11-3 (cyclotene 0.001 ppb added alone) shown in Table 11, and the score of octanoic acid 0.001 ppb added alone shown in Table 22-1, and was 3.0 points or more, which confirmed that a combination of 4-methylpentanoic acid, cyclotene, and octanoic acid synergistically enhances the sweetness intensity.

In sample No. 22-4, the sweetness intensity score exceeded the sum of the score of sample No. 11-1 (4-methylpentanoic acid 0.1 ppb added alone) shown in Table 11, and the score of nonanoic acid 0.001 ppb added alone shown in Table 22-1, and was 3.0 points or more, which confirmed that a combination of 4-methylpentanoic acid and nonanoic acid synergistically enhances the sweetness intensity.

In sample No. 22-5, the sweetness intensity score exceeded the sum of the score of sample No. 11-3 (cyclotene 0.001 ppb added alone) shown in Table 11, and the score of nonanoic acid 0.001 ppb added alone shown in Table 22-1, and was 3.0 points or more, which confirmed that a combination of cyclotene and nonanoic acid synergistically enhances the sweetness intensity.

In sample No. 22-6, the sweetness intensity score exceeded the sum of the score of sample No. 11-1 (4-methylpentanoic acid 0.1 ppb added alone) shown in Table 11, the score of sample No. 11-3 (cyclotene 0.001 ppb added alone) shown in Table 11, and the score of nonanoic acid 0.001 ppb added alone shown in Table 22-1, and was 3.0 points or more, which confirmed that a combination of 4-methylpentanoic acid, cyclotene, and nonanoic acid synergistically enhances the sweetness intensity.

In sample No. 22-7, the sweetness intensity score exceeded the sum of the score of sample No. 11-1 (4-methylpentanoic acid 0.1 ppb added alone) shown in Table 11, and the score of undecanoic acid 0.001 ppb added alone shown in Table 22-1, and was 3.0 points or more, which confirmed that a combination of 4-methylpentanoic acid and undecanoic acid synergistically enhances the sweetness intensity.

In sample No. 22-8, the sweetness intensity score exceeded the sum of the score of sample No. 11-3 (cyclotene 0.001 ppb added alone) shown in Table 11, and the score of undecanoic acid 0.001 ppb added alone shown in Table 22-1, and was 3.0 points or more, which confirmed that a combination of cyclotene and undecanoic acid synergistically enhances the sweetness intensity.

In sample No. 22-9, the sweetness intensity score exceeded the sum of the score of sample No. 11-1 (4-methylpentanoic acid 0.1 ppb added alone) shown in Table 11, the score of sample No. 11-3 (cyclotene 0.001 ppb added alone) shown in Table 11, and the score of undecanoic acid 0.001 ppb added alone shown in Table 22-1, and was 3.0 points or more, which confirmed that a combination of 4-methylpentanoic acid, cyclotene, and undecanoic acid synergistically enhances the sweetness intensity.

In sample No. 22-10, the sweetness intensity score exceeded the sum of the score of sample No. 11-1 (4-methylpentanoic acid 0.1 ppb added alone) shown in Table 11, and the score of dodecanoic acid 0.001 ppb added alone shown in Table 22-1, and was 3.0 points or more, which confirmed that a combination of 4-methylpentanoic acid and dodecanoic acid synergistically enhances the sweetness intensity.

In sample No. 22-11, the sweetness intensity score exceeded the sum of the score of sample No. 11-3 (cyclotene 0.001 ppb added alone) shown in Table 11, and the score of dodecanoic acid 0.001 ppb added alone shown in Table 22-1, and was 3.0 points or more, which confirmed that a combination of cyclotene and dodecanoic acid synergistically enhances the sweetness intensity.

In sample No. 22-12, the sweetness intensity score exceeded the sum of the score of sample No. 11-1 (4-methylpentanoic acid 0.1 ppb added alone) shown in Table 11, the score of sample No. 11-3 (cyclotene 0.001 ppb added alone) shown in Table 11, and the score of dodecanoic acid 0.001 ppb added alone shown in Table 22-1, and was 3.0 points or more, which confirmed that a combination of 4-methylpentanoic acid, cyclotene, and dodecanoic acid synergistically enhances the sweetness intensity.

None of the samples had any smell derived from the compounds.

### [Experimental Example 23] Sucralose sweetness-enhancing effect by adding any one of 4-methylpentanoic acid, cyclotene, and decanoic acid alone, or two or three of these in combination

The following experiment was conducted in order to clarify the sucralose sweetness-enhancing effect by adding any one of 4-methylpentanoic acid, cyclotene, and decanoic acid alone, or two or three of these in combination. The sucralose used was one manufactured by San-Ei Gen F.F.I., Inc.

### (Preparation of negative control sucralose solution (0.0140 wt% sucralose))

A negative control sucralose solution (0.0140 wt% sucralose solution) was prepared by dissolving sucralose in filtered water.

### (Preparation of 4-methylpentanoic acid-containing sucralose solutions (sample Nos. 23-1, 23-2))

A 4-methylpentanoic acid solution (solvent: propylene glycol) was added at the concentration shown in Table 23 to the negative control sucralose solution to obtain sample Nos. 23-1, 23-2.

### (Preparation of cyclotene-containing sucralose solutions (sample Nos. 23-3, 23-4))

A cyclotene solution (solvent: propylene glycol) was added at the concentration shown in Table 23 to the negative control sucralose solution to obtain sample Nos. 23-3, 23-4.

### (Preparation of decanoic acid-containing sucralose solutions (sample Nos. 23-5, 23-6))

A decanoic acid solution (solvent: propylene glycol) was added at the concentration shown in Table 23 to the negative control sucralose solution to obtain sample Nos. 23-5, 23-6.

### (Preparation of 4-methylpentanoic acid and cyclotene-containing sucralose solution (sample No. 23-7))

4-Methylpentanoic acid and cyclotene solution (solvent: propylene glycol) were added at the concentrations shown in Table 23 to the negative control sucralose solution to obtain sample No. 23-7.

### (Preparation of 4-methylpentanoic acid and decanoic acid-containing sucralose solution (sample No. 23-8))

4-Methylpentanoic acid and decanoic acid solution (solvent: propylene glycol) were added at the concentrations shown in Table 23 to the negative control sucralose solution to obtain sample No. 23-8.

### (Preparation of cyclotene and decanoic acid-containing sucralose solution (sample No. 23-9))

Cyclotene and decanoic acid solution (solvent: propylene glycol) were added at the concentrations shown in Table 23 to the negative control sucralose solution to obtain sample No. 23-9.

### (Preparation of 4-methylpentanoic acid, cyclotene, and decanoic acid-containing sucralose solution (sample No. 23-10))

4-Methylpentanoic acid, cyclotene, and decanoic acid solution (solvent: propylene glycol) were added at the concentrations shown in Table 23 to the negative control sucralose solution to obtain sample No. 23-10.

The amount of propylene glycol to be added was adjusted to be the same amount for all samples (sample Nos. 23-1 to 23-10).

### (Sensory evaluation)

A sensory evaluation of sweetness intensity was performed for each sample by a panel of four experts according to the following evaluation criteria.

Sweetness intensity was evaluated by 0.0 to 10.0 point based on the following reference samples (negative control (hereinafter referred to as NC) (0.0 point); reference 1 (hereinafter referred to as R1) (3.0 points), reference 2 (hereinafter referred to as R2) (5.0 points); reference 3 (hereinafter referred to as R3) (10.0 points)). The average score (rounded to two decimal places) of each expert panelist was calculated. An average score of 3.0 points or more was considered to be functional.
NC (0.0 point): 0.0140 wt% sucralose solution (solvent: filtered water)
R1 (3.0 points): 0.0164 wt% sucralose solution (solvent: filtered water)
R2 (5.0 points): 0.0180 wt% sucralose solution (solvent: filtered water)
R3 (10.0 points): 0.0220 wt% sucralose solution (solvent: filtered water)

A smell was considered to be added when two or more panel members detected a smell derived from the compound.

The results are shown in Table 23.

**[Table 23]**

| sample No. | 4-methylpentanoic acid concentration (ppb) | cyclotene concentration (ppb) | decanoic acid concentration (ppb) | sweetness intensity | smell added |
|---|---|---|---|---|---|
| 23-1 | 0.1 | | | 0.8 | |
| 23-2 | 100 | | | 2.4 | |
| 23-3 | | 0.001 | | 2.2 | |
| 23-4 | | 10 | | 3.2 | |
| 23-5 | | | 0.001 | 2.1 | |
| 23-6 | | | 10 | 3.0 | |
| 23-7 | 0.1 | 0.001 | | 3.6 | |
| 23-8 | 0.1 | | 0.001 | 3.8 | |
| 23-9 | | 0.001 | 0.001 | 4.6 | |
| 23-10 | 0.1 | 0.001 | 0.001 | 5.2 | |

(In Table, the numerical value of sweetness intensity indicates the score (average score) of the sensory evaluation.)

From the results of Table 23, when a sweetness intensity score (average) of 3.0 points or more is effective for sweetness enhancement, in examples in which any one of cyclotene and decanoic acid was added alone, a sweetness-enhancing effect was confirmed at a cyclotene concentration of 10 ppb or more (sample No. 23-4), and a decanoic acid concentration of 10 ppb (sample No. 23-6).

In addition, from the results of Table 23, in sample No. 23-7, the sweetness intensity score exceeded the sum of the score of sample No. 23-1 (4-methylpentanoic acid 0.1 ppb added alone), and the score of sample No. 23-3 (cyclotene 0.001 ppb added alone), and was 3.0 points or more, which confirmed that a combination of 4-methylpentanoic acid and cyclotene synergistically enhances the sweetness intensity.

In addition, from the results of Table 23, in sample No. 23-8, the sweetness intensity score exceeded the sum of the score of sample No. 23-1 (4-methylpentanoic acid 0.1 ppb added alone), and the score of sample No. 23-5 (decanoic acid 0.001 ppb added alone), and was 3.0 points or more, which confirmed that a combination of 4-methylpentanoic acid and decanoic acid synergistically enhances the sweetness intensity.

In addition, from the results of Table 23, in sample No. 25-9, the sweetness intensity score exceeded the sum of the score of sample No. 23-3 (cyclotene 0.001 ppb added alone), and the score of sample No. 23-5(decanoic acid 0.001 ppb added alone), and was 3.0 points or more, which confirmed that a combination of cyclotene and decanoic acid synergistically enhances the sweetness intensity.

In addition, from the results of Table 23, in sample No. 23-10, the sweetness intensity score exceeded the sum of the score of sample No. 23-1 (4-methylpentanoic acid 0.1 ppb added alone), the score of sample No. 23-3 (cyclotene 0.001 ppb added alone), and the score of sample No. 23-5 (decanoic acid 0.001 ppb added alone), and was 3.0 points or more, which confirmed that a combination of 4-methylpentanoic acid, cyclotene, and decanoic acid synergistically enhances the sweetness intensity.

None of the samples had any smell derived from the compounds.

### [Experimental Example 24] Sucralose sweetness-enhancing effect by adding saturated aliphatic monocarboxylic acid having 8 to 12 carbon atoms (octanoic acid, nonanoic acid, undecanoic acid, dodecanoic acid) alone, or combination of saturated aliphatic monocarboxylic acid having 8 to 12 carbon atoms and 4-methylpentanoic acid and/or cyclotene

The following experiment was conducted in order to clarify the sucralose sweetness-enhancing effect by adding saturated aliphatic monocarboxylic acid having 8 to 12 carbon atoms (octanoic acid, nonanoic acid, undecanoic acid, dodecanoic acid) alone, or a combination of saturated aliphatic monocarboxylic acid having 8 to 12 carbon atoms and 4-methylpentanoic acid and/or cyclotene. Sucralose used was one manufactured by San-Ei Gen F.F.I., Inc.

### (Preparation of negative control sucralose solution (0.0140 wt% sucralose))

A negative control sucralose solution (0.0140 wt% sucralose solution) was prepared by dissolving sucralose in filtered water.

### (Preparation of sucralose solution containing saturated aliphatic monocarboxylic acid having 8 to 12 carbon atoms (octanoic acid, nonanoic acid, undecanoic acid, dodecanoic acid))

Each propylene glycol solution of octanoic acid, nonanoic acid, undecanoic acid, or dodecanoic acid was added at the concentration shown in Table 24-1 to the negative control sucralose solution to obtain samples of each concentration of octanoic acid-containing sucralose solution, nonanoic acid-containing sucralose solution, undecanoic acid-containing sucralose solution, and dodecanoic acid-containing sucralose solution.

### (Preparation of 4-methylpentanoic acid and octanoic acid-containing sucralose solution)

4-Methylpentanoic acid and octanoic acid solution (solvent: propylene glycol) were added at the concentrations shown in Table 24-2 to the negative control sucralose solution to obtain sample No. 24-1.

### (Preparation of cyclotene and octanoic acid-containing sucralose solution)

Cyclotene and octanoic acid solution (solvent: propylene glycol) were added at the concentrations shown in Table 24-2 to the negative control sucralose solution to obtain sample No. 24-2.

### (Preparation of 4-methylpentanoic acid, cyclotene, and octanoic acid-containing sucralose solution)

4-Methylpentanoic acid, cyclotene, and octanoic acid solution (solvent: propylene glycol) were added at the concentrations shown in Table 24-2 to the negative control sucralose solution to obtain sample No. 24-3.

### (Preparation of 4-methylpentanoic acid and nonanoic acid-containing sucralose solution)

4-Methylpentanoic acid and nonanoic acid solution (solvent: propylene glycol) were added at the concentrations shown in Table 24-2 to the negative control sucralose solution to obtain sample No. 24-4.

### (Preparation of cyclotene and nonanoic acid-containing sucralose solution)

Cyclotene and nonanoic acid solution (solvent: propylene glycol) were added at the concentrations shown in Table 24-2 to the negative control sucralose solution to obtain sample No. 24-5.

### (Preparation of 4-methylpentanoic acid, cyclotene and nonanoic acid-containing sucralose solution)

4-Methylpentanoic acid, cyclotene, and nonanoic acid solution (solvent: propylene glycol) were added at the concentrations shown in Table 24-2 to the negative control sucralose solution to obtain sample No. 24-6.

### (Preparation of 4-methylpentanoic acid and undecanoic acid-containing sucralose solution)

4-Methylpentanoic acid and undecanoic acid solution (solvent: propylene glycol) were added at the concentrations shown in Table 24-2 to the negative control sucralose solution to obtain sample No. 24-7.

### (Preparation of cyclotene and undecanoic acid-containing sucralose solution)

Cyclotene and undecanoic acid solution (solvent: propylene glycol) were added at the concentrations shown in Table 24-2 to the negative control sucralose solution to obtain sample No. 24-8.

### (Preparation of 4-methylpentanoic acid, cyclotene, and undecanoic acid-containing sucralose solution)

4-Methylpentanoic acid, cyclotene, and undecanoic acid solution (solvent: propylene glycol) were added at the concentrations shown in Table 24-2 to the negative control sucralose solution to obtain sample No. 24-9.

### (Preparation of 4-methylpentanoic acid and dodecanoic acid-containing sucralose solution)

4-Methylpentanoic acid and dodecanoic acid solution (solvent: propylene glycol) were added at the concentrations shown in Table 24-2 to the negative control sucralose solution to obtain sample No. 24-10.

### (Preparation of cyclotene and dodecanoic acid-containing sucralose solution)

Cyclotene and dodecanoic acid solution (solvent: propylene glycol) were added at the concentrations shown in Table 24-2 to the negative control sucralose solution to obtain sample No. 24-11.

### (Preparation of 4-methylpentanoic acid, cyclotene, and dodecanoic acid-containing sucralose solution)

4-Methylpentanoic acid, cyclotene, and dodecanoic acid solution (solvent: propylene glycol) were added at the concentrations shown in Table 24-2 to the negative control sucralose solution to obtain sample No. 24-12.

The amount of propylene glycol to be added was adjusted to be the same amount for all samples.

### (Sensory evaluation)

A sensory evaluation of sweetness intensity was performed for each sample by a panel of four experts according to the same evaluation criteria as in Experimental Example 23.

A smell was considered to be added when two or more panel members detected a smell derived from the compound.

The results are shown in Tables 24-1, 24-2.

**[Table 24-1]**

| addition concentration (ppb) | octanoic acid | | nonanoic acid | | undecanoic acid | | dodecanoic acid | |
|---|---|---|---|---|---|---|---|---|
| | sweetness intensity | smell added | sweetness intensity | smell added | sweetness intensity | smell added | sweetness intensity | smell added |
| 0.001 | 0.5 | | 1.3 | | 0.9 | | 1.0 | |
| 0.01 | 1.3 | | 1.8 | | 1.3 | | 1.6 | |
| 0.1 | 1.8 | | 2.4 | | 1.7 | | 2.0 | |
| 1 | 2.3 | | 3.0 | | 2.1 | | 2.5 | |
| 10 | 2.9 | | 3.5 | | 2.8 | | 3.0 | |
| 100 | 3.3 | | 3.9 | | 3.1 | | 3.5 | |
| 1000 | 4.0 | | 4.3 | | 3.4 | | 3.9 | |
| 10000 | 4.5 | | 4.2 | | 3.2 | added | 3.7 | added |

(In Table, the numerical value of sweetness intensity indicates the score (average score) of the sensory evaluation.)

**[Table 24-2]**

| sample No. | 4-methylpentanoic acid concentration (ppb) | cyclotene concentration (ppb) | octanoic acid concentration (ppb) | nonanoic acid concentration (ppb) | undecanoic acid concentration (ppb) | dodecanoic acid concentration (ppb) | sweetness intensity | smell added |
|---|---|---|---|---|---|---|---|---|
| 24-1 | 0.1 | | 0.1 | | | | 3.1 | |
| 24-2 | | 0.001 | 0.1 | | | | 3.6 | |
| 24-3 | 0.1 | 0.001 | 0.1 | | | | 4.1 | |
| 24-4 | 0.1 | | | 0.01 | | | 2.6 | |
| 24-5 | | 0.001 | | 0.01 | | | 4.0 | |
| 24-6 | 0.1 | 0.001 | | 0.01 | | | 4.8 | |
| 24-7 | 0.1 | | | | 0.1 | | 2.5 | |
| 24-8 | | 0.001 | | | 0.1 | | 3.2 | |
| 24-9 | 0.1 | 0.001 | | | 0.1 | | 3.7 | |
| 24-10 | 0.1 | | | | | 0.01 | 3.0 | |
| 24-11 | | 0.001 | | | | 0.01 | 4.1 | |
| 24-12 | 0.1 | 0.001 | | | | 0.01 | 4.9 | |

(In Table, the numerical value of sweetness intensity indicates the score (average score) of the sensory evaluation.)

From the results of Table 24-1, when a sweetness intensity score (average) of 3.0 points or more is effective for sweetness enhancement, in examples in which any one of octanoic acid, nonanoic acid, undecanoic acid, and dodecanoic acid was added alone, a sweetness-enhancing effect was confirmed at an octanoic acid concentration of 100 ppb or more, a nonanoic acid concentration of 1 ppb or more, an undecanoic acid concentration of 100 ppb or more, and a dodecanoic acid concentration of 10 ppb or more.

None of the samples had any smell derived from the compounds except when the undecanoic acid concentration was 10000 ppb, and when the dodecanoic acid concentration was 10000 ppb.

From the results of Table 24-2, the following was confirmed.

In sample No. 24-1, the sweetness intensity score exceeded the sum of the score of sample No. 23-1 (4-methylpentanoic acid 0.1 ppb added alone) shown in Table 23, and the score of octanoic acid 0.1 ppb added alone shown in Table 24-1, and was 3.0 points or more, which confirmed that a combination of 4-methylpentanoic acid and octanoic acid synergistically enhances the sweetness intensity.

In sample No. 24-10, the sweetness intensity score exceeded the sum of the score of sample No. 23-1 (4-methylpentanoic acid 0.1 ppb added alone) shown in Table 23, and the score of dodecanoic acid 0.01 ppb added alone) shown in Table 24-1, and was 3.0 points or more, which confirmed that a combination of 4-methylpentanoic acid and dodecanoic acid synergistically enhances the sweetness intensity.

In sample No. 24-11, the sweetness intensity score exceeded the sum of the score of sample No. 23-3 (cyclotene 0.001 ppb added alone) shown in Table 23, and the score of dodecanoic acid 0.01 ppb added alone shown in Table 24-1, and was 3.0 points or more, which confirmed that a combination of cyclotene and dodecanoic acid synergistically enhances the sweetness intensity.

In sample No. 24-12, the sweetness intensity score exceeded the sum of the score of sample No. 23-1 (4-methylpentanoic acid 0.1 ppb added alone) shown in Table 23, the score of sample No. 23-3 (cyclotene 0.001 ppb added alone) shown in Table 23, and the score of dodecanoic acid 0.01 ppb added alone) shown in Table 24-1, and was 3.0 points or more, which confirmed that a combination of 4-methylpentanoic acid, cyclotene, and dodecanoic acid synergistically enhances the sweetness intensity.

None of the samples had any smell derived from the compounds.

### [Experimental Example 25] Sucrose sweetness-enhancing effect by adding any one of 4-methylpentanoic acid, cyclotene, and decanoic acid alone, or two or three of these in combination

The following experiment was conducted in order to clarify the sucrose sweetness-enhancing effect by adding any one of 4-methylpentanoic acid, cyclotene, and decanoic acid alone, or two or three of these in combination.

### (Preparation of negative control sucrose solution (7.0% sucrose solution))

A negative control sucrose solution (0.7 wt% sucrose solution) was prepared by dissolving sucrose in filtered water.

### (Preparation of 4-methylpentanoic acid-containing sucrose solutions (sample Nos. 25-1, 25-2))

A 4-methylpentanoic acid solution (solvent: propylene glycol) was added at the concentration shown in Table 25 to the negative control sucrose solution to obtain sample Nos. 25-1, 25-2.

### (Preparation of cyclotene-containing sucrose solutions (sample Nos. 25-3, 25-4))

A cyclotene solution (solvent: propylene glycol) was added at the concentration shown in Table 25 to the negative control sucrose solution to obtain sample Nos. 25-3, 25-4.

### (Preparation of decanoic acid-containing sucrose solution (sample No. 25-5, 25-6))

A decanoic acid solution (solvent: propylene glycol) was added at the concentration shown in Table 25 to the negative control sucrose solution to obtain sample Nos. 25-5, 25-6.

### (Preparation of 4-methylpentanoic acid and cyclotene-containing sucrose solution (sample No. 25-7))

4-Methylpentanoic acid and cyclotene solution (solvent: propylene glycol) were added at the concentrations shown in Table 25 to the negative control sucrose solution to obtain sample No. 25-7.

### (Preparation of 4-methylpentanoic acid and decanoic acid-containing sucrose solution (sample No. 25-8))

4-Methylpentanoic acid and decanoic acid solution (solvent: propylene glycol) were added at the concentrations shown in Table 25 to the negative control sucrose solution to obtain sample No. 25-8.

### (Preparation of cyclotene and decanoic acid-containing sucrose solution (sample No. 25-9))

Cyclotene and decanoic acid solution (solvent: propylene glycol) were added at the concentrations shown in Table 25 to the negative control sucrose solution to obtain sample No. 25-9.

### (Preparation of 4-methylpentanoic acid, cyclotene, and decanoic acid-containing sucrose solution (sample No. 25-10))

4-Methylpentanoic acid, cyclotene, and decanoic acid solution (solvent: propylene glycol) were added at the concentrations shown in Table 25 to the negative control sucrose solution to obtain sample No. 25-10.

The amount of propylene glycol to be added was adjusted to be the same amount for all samples (sample Nos. 25-1 to 25-10).

### (Sensory evaluation)

A sensory evaluation of sweetness intensity was performed for each sample by a panel of four experts according to the following evaluation criteria.

Sweetness intensity was evaluated by 0.0 to 10.0 points based on the following reference samples (negative control (hereinafter referred to as NC) (0.0 point); reference 1 (hereinafter referred to as R1) (3.0 points), reference 2 (hereinafter referred to as R2) (5.0 points); reference 3 (hereinafter referred to as R3) (10.0 points)). The average score (rounded to two decimal places) of each expert panelist was calculated. An average score of 3.0 points or more was considered to be functional.
NC (0.0 point): 7.0 wt% sucrose solution (solvent: filtered water)
R1 (3.0 points): 7.3 wt% sucrose solution (solvent: filtered water)
R2 (5.0 points): 7.5 wt% sucrose solution (solvent: filtered water)
R3 (10.0 points): 8.0 wt% sucrose solution (solvent: filtered water)

A smell was considered to be added when two or more panel members detected a smell derived from the compound.

The results are shown in Table 25.

**[Table 25]**

| sample No. | 4-methylpentanoic acid concentration (ppb) | cyclotene concentration (ppb) | decanoic acid concentration (ppb) | sweetness intensity | smell added |
|---|---|---|---|---|---|
| 25-1 | 0.1 | | | 0.6 | |
| 25-2 | 100 | | | 2.7 | |
| 25-3 | | 0.001 | | 1.1 | |
| 25-4 | | 10 | | 2.9 | |
| 25-5 | | | 0.001 | 1.7 | |
| 25-6 | | | 10 | 3.3 | |
| 25-7 | 0.1 | 0.001 | | 3.8 | |
| 25-8 | 0.1 | | 0.001 | 3.8 | |
| 25-9 | | 0.001 | 0.001 | 4.2 | |
| 25-10 | 0.1 | 0.001 | 0.001 | 5.4 | |

(In Table, the numerical value of sweetness intensity indicates the score (average score) of the sensory evaluation.)

From the results of Table 25, when a sweetness intensity score (average) of 3.0 points or more is effective for sweetness enhancement, in examples in which decanoic acid was added alone, a sweetness-enhancing effect was confirmed at a decanoic acid concentration of 10 ppb (sample No. 25-6).

In addition, from the results of Table 25, in sample No. 25-7, the sweetness intensity score exceeded the sum of the score of sample No. 25-1 (4-methylpentanoic acid 0.1 ppb added alone), and the score of sample No. 25-3 (cyclotene 0.001 ppb added alone), and was 3.0 points or more, which confirmed that a combination of 4-methylpentanoic acid and cyclotene synergistically enhances the sweetness intensity.

In addition, from the results of Table 25, in sample No. 25-8, the sweetness intensity score exceeded the sum of the score of sample No. 25-1 (4-methylpentanoic acid 0.1 ppb added alone), and the score of sample No. 25-5 (decanoic acid 0.001 ppb added alone), and was 3.0 points or more, which confirmed that a combination of 4-methylpentanoic acid and decanoic acid synergistically enhances the sweetness intensity.

In addition, from the results of Table 25, in sample No. 25-9, the sweetness intensity score exceeded the sum of the score of sample No. 25-3 (cyclotene 0.001 ppb added alone), and the score of sample No. 25-5 (decanoic acid 0.001 ppb added alone), and was 3.0 points or more, which confirmed that a combination of cyclotene and decanoic acid synergistically enhances the sweetness intensity.

In addition, from the results of Table 25, in sample No. 25-10, the sweetness intensity score exceeded the sum of the score of sample No. 25-1 (4-methylpentanoic acid 0.1 ppb added alone), the score of sample No. 25-3 (cyclotene 0.001 ppb added alone), and the score of sample No. 25-5 (decanoic acid 0.001 ppb added alone), and was 3.0 points or more, which confirmed that a combination of 4-methylpentanoic acid, cyclotene, and decanoic acid synergistically enhances the sweetness intensity.

None of the samples had any smell derived from the compounds.

### [Experimental Example 26] Sucrose sweetness-enhancing effect by adding naringenin, and any one, two, or three of 4-methylpentanoic acid, cyclotene, and decanoic acid in combination

The following experiment was conducted in order to clarify the sucrose sweetness-enhancing effect by adding naringenin, and any one, two, or three of 4-methylpentanoic acid, cyclotene, and decanoic acid in combination.

### (Preparation of negative control sucrose solution (7.0% sucrose solution))

A negative control sucrose solution (7.0% sucrose solution) was prepared by dissolving sucrose in filtered water.

### (Preparation of naringenin-containing sucrose solution)

A naringenin solution (solvent: propylene glycol) was added at the concentration shown in Table 26-1 to the negative control sucrose solution to obtain samples of each concentration of naringenin-containing sucrose solution.

4-Methylpentanoic acid and naringenin solution (solvent: propylene glycol) were added at the concentrations shown in Table 26-2 to the negative control sucrose solution to obtain sample No. 26-1.

### (Preparation of cyclotene and naringenin-containing sucrose solution)

Cyclotene and naringenin solution (solvent: propylene glycol) were added at the concentrations shown in Table 26-2 to the negative control sucrose solution to obtain sample No. 26-2.

### (Preparation of decanoic acid and naringenin-containing sucrose solution)

Decanoic acid and naringenin solution (solvent: propylene glycol) were added at the concentrations shown in Table 26-2 to the negative control sucrose solution to obtain sample No. 26-3.

### (Preparation of 4-methylpentanoic acid, cyclotene, and naringenin-containing sucrose solution)

4-Methylpentanoic acid, cyclotene, and naringenin solution (solvent: propylene glycol) were added at the concentrations shown in Table 26-2 to the negative control sucrose solution to obtain sample No. 26-4.

### (Preparation of 4-methylpentanoic acid, decanoic acid, and naringenin-containing sucrose solution)

4-Methylpentanoic acid, decanoic acid, and naringenin solution (solvent: propylene glycol) were added at the concentrations shown in Table 26-2 to the negative control sucrose solution to obtain sample No. 26-5.

### (Preparation of cyclotene, decanoic acid, and naringenin-containing sucrose solution)

Cyclotene, decanoic acid, and naringenin solution (solvent: propylene glycol) were added at the concentrations shown in Table 26-2 to the negative control sucrose solution to obtain sample No. 26-6.

### (Preparation of 4-methylpentanoic acid, cyclotene, decanoic acid, and naringenin-containing sucrose solution)

4-Methylpentanoic acid, cyclotene, decanoic acid, and naringenin solution (solvent: propylene glycol) were added at the concentrations shown in Table 26-2 to the negative control sucrose solution to obtain sample No. 26-7.

The amount of propylene glycol to be added was adjusted to be the same amount for all samples.

### (Sensory evaluation)

A sensory evaluation of sweetness intensity was performed for each sample by a panel of four experts according to the same evaluation criteria as in Experimental Example 25.

A smell was considered to be added when two or more panel members detected a smell derived from the compound.

The results are shown in Tables 26-1, 26-2.

**[Table 26-1]**

| addition concentration (ppm) | naringenin | |
|---|---|---|
| | sweetness intensity | smell added |
| 1 | 1.1 | |
| 5 | 1.7 | |
| 10 | 2.6 | |
| 15 | 3.6 | |
| 30 | 4.6 | |
| 50 | 5.8 | |

(In Table, the numerical value of sweetness intensity indicates the score (average score) of the sensory evaluation.)

**[Table 26-2]**

| sample No. | 4-methylpentanoic acid concentration (ppb) | cyclotene concentration (ppb) | decanoic acid concentration (ppb) | naringenin concentration (ppm) | sweetness intensity | smell added |
|---|---|---|---|---|---|---|
| 26-1 | 0.1 | | | 10 | 3.3 | |
| 26-2 | | 0.001 | | 10 | 3.8 | |
| 26-3 | | | 0.001 | 10 | 4.3 | |
| 26-4 | 0.1 | 0.001 | | 10 | 6.5 | |
| 26-5 | 0.1 | | 0.001 | 10 | 6.6 | |
| 26-6 | | 0.001 | 0.001 | 10 | 6.9 | |
| 26-7 | 0.1 | 0.001 | 0.001 | 10 | 8.2 | |

(In Table, the numerical value of sweetness intensity indicates the score (average score) of the sensory evaluation.)

From the results of Table 26-1, when a sweetness intensity score (average) of 3.0 points or more is effective for sweetness enhancement, in examples in which naringenin was added alone, a sweetness-enhancing effect was confirmed at a naringenin concentration of 15 ppm or more.

None of the samples had any smell derived from the compounds.

From the results of Table 26-2, the following was confirmed.

In sample No. 26-1, the sweetness intensity score exceeded the sum of the score of sample No. 25-1 (4-methylpentanoic acid 0.1 ppb added alone) shown in Table 25, and the score of naringenin 10 ppm added alone shown in Table 26-1, and was 3.0 points or more, which confirmed that a combination of 4-methylpentanoic acid and naringenin synergistically enhances the sweetness intensity.

In sample No. 26-2, the sweetness intensity score exceeded the sum of the score of sample No. 25-3 (cyclotene 0.001 ppb added alone) shown in Table 25, and the score of naringenin 10 ppm added alone shown in Table 26-1, and was 3.0 points or more, which confirmed that a combination of cyclotene and naringenin synergistically enhances the sweetness intensity.

In sample No. 26-4, the sweetness intensity score exceeded the sum of the score of sample No. 25-1 (4-methylpentanoic acid 0.1 ppb added alone) shown in Table 25, the score of sample No. 25-3 (cyclotene 0.001 ppb added alone) shown in Table 25, and the score of naringenin 10 ppm added alone shown in Table 26-1, and was 3.0 points or more, which confirmed that a combination of 4-methylpentanoic acid, cyclotene, and naringenin synergistically enhances the sweetness intensity.

In sample No. 26-5, the sweetness intensity score exceeded the sum of the score of sample No. 25-1 (4-methylpentanoic acid 0.1 ppb added alone) shown in Table 25, the score of sample No. 12-5 (decanoic acid 0.001 ppb added alone) shown in Table 25, and the score of naringenin 10 ppm added alone shown in Table 26-1, and was 3.0 points or more, which confirmed that a combination of 4-methylpentanoic acid, decanoic acid, and naringenin synergistically enhances the sweetness intensity.

In sample No. 26-6, the sweetness intensity score exceeded the sum of the score of sample No. 25-3 (cyclotene 0.001 ppb added alone) shown in Table 25, the score of sample No. 25-5 (decanoic acid 0.001 ppb added alone) shown in Table 25, and the score of naringenin 10 ppm added alone shown in Table 26-1, and was 3.0 points or more, which confirmed that a combination of cyclotene, decanoic acid, and naringenin synergistically enhances the sweetness intensity.

In sample No. 26-7, the sweetness intensity score exceeded the sum of the score of sample No. 25-1 (4-methylpentanoic acid 0.1 ppb added alone) shown in Table 25, the score of sample No. 25-3 (cyclotene 0.001 ppb added alone) shown in Table 25, the score of sample No. 25-5 (decanoic acid 0.001 ppb added alone) shown in Table 25, and the score of naringenin 10 ppm added alone shown in Table 26-1, and was 3.0 points or more, which confirmed that a combination of 4-methylpentanoic acid, cyclotene, dodecanoic acid, and naringenin synergistically enhances the sweetness intensity.

None of the samples had any smell derived from the compounds.

### [Experimental Example 27] Sucrose sweetness-enhancing effect by adding glutamylvalylglycine, and any one, two, or three of 4-methylpentanoic acid, cyclotene, and decanoic acid in combination

The following experiment was conducted in order to clarify the sucrose sweetness-enhancing effect by adding glutamylvalylglycine, and any one, two, or three of 4-methylpentanoic acid, cyclotene, and decanoic acid in combination.

### (Preparation of negative control sucrose solution (7.0% sucrose solution))

A negative control sucrose solution (7.0% sucrose solution) was prepared by dissolving sucrose in filtered water.

### (Preparation of glutamylvalylglycine-containing sucrose solution)

A glutamylvalylglycine solution (solvent: propylene glycol) was added at the concentration shown in Table 27-1 to the negative control sucrose solution to obtain each concentration of glutamylvalylglycine containing sucrose solutions.

### (Preparation of 4-methylpentanoic acid and glutamylvalylglycine-containing sucrose solution)

4-Methylpentanoic acid and glutamylvalylglycine solution (solvent: propylene glycol) were added at the concentrations shown in Table 27-2 to the negative control sucrose solution to obtain sample Nos. 27-1, 27-2.

### (Preparation of cyclotene and glutamylvalylglycine-containing sucrose solution)

Cyclotene and glutamylvalylglycine solution (solvent: propylene glycol) were added at the concentrations shown in Table 27-2 to the negative control sucrose solution to obtain sample Nos. 27-3, 27-4.

### (Preparation of decanoic acid and glutamylvalylglycine-containing sucrose solution)

Decanoic acid and glutamylvalylglycine solution (solvent: propylene glycol) were added at the concentrations shown in Table 27-2 to the negative control sucrose solution to obtain sample Nos. 27-5, 27-6.

### (Preparation of 4-methylpentanoic acid, cyclotene, and glutamylvalylglycine-containing sucrose solution)

4-Methylpentanoic acid, cyclotene, and glutamylvalylglycine solution (solvent: propylene glycol) were added at the concentrations shown in Table 27-2 to the negative control sucrose solution to obtain sample Nos. 27-7, 27-8.

### (Preparation of 4-methylpentanoic acid, decanoic acid, and glutamylvalylglycine-containing sucrose solution)

4-Methylpentanoic acid, decanoic acid, and glutamylvalylglycine solution (solvent: propylene glycol) were added at the concentrations shown in Table 27-2 to the negative control sucrose solution to obtain sample Nos. 27-9, 27-10.

### (Preparation of cyclotene, decanoic acid, and glutamylvalylglycine-containing sucrose solution)

Cyclotene, decanoic acid, and glutamylvalylglycine solution (solvent: propylene glycol) were added at the concentrations shown in Table 27-2 to the negative control sucrose solution to obtain sample Nos. 27-11, 27-12.

### (Preparation of 4-methylpentanoic acid, cyclotene, decanoic acid, and glutamylvalylglycine-containing sucrose solution)

4-Methylpentanoic acid, cyclotene, decanoic acid, and glutamylvalylglycine solution (solvent: propylene glycol) were added at the concentrations shown in Table 27-2 to the negative control sucrose solution to obtain sample Nos. 27-13, 27-14.

The amount of propylene glycol to be added was adjusted to be the same amount for all samples.

### (Sensory evaluation)

A sensory evaluation of sweetness intensity was performed for each sample by a panel of four experts according to the same evaluation criteria as in Experimental Example 25.

A smell was considered to be added when two or more panel members detected a smell derived from the compound.

The results are shown in Tables 27-1, 27-2.

**[Table 27-1]**

| addition concentration (ppm) | glutamylvalylglycine | |
|---|---|---|
| | sweetness intensity | smell added |
| 0.001 | 0.6 | |
| 0.01 | 1.0 | |
| 0.05 | 1.7 | |
| 0.1 | 2.3 | |
| 0.5 | 2.5 | |
| 1 | 2.9 | |
| 10 | 3.3 | |

(In Table, the numerical value of sweetness intensity indicates the score (average score) of the sensory evaluation.)

**[Table 27-2]**

| sample No. | 4-methylpentanoic acid concentration (ppb) | cyclotene concentration (ppb) | decanoic acid concentration (ppb) | glutamyl-valyl-glycine concentration (ppm) | sweetness intensity | smell added |
|---|---|---|---|---|---|---|
| 27-1 | 0.1 | | | 0.1 | 2.9 | |
| 27-2 | 0.1 | | | 0.5 | 3.2 | |
| 27-3 | | 0.001 | | 0.1 | 2.8 | |
| 27-4 | | 0.001 | | 0.5 | 3.2 | |
| 27-5 | | | 0.001 | 0.1 | 3.4 | |
| 27-6 | | | 0.001 | 0.5 | 4.2 | |
| 27-7 | 0.1 | 0.001 | | 0.1 | 4.7 | |
| 27-8 | 0.1 | 0.001 | | 0.5 | 5.0 | |
| 27-9 | 0.1 | | 0.001 | 0.1 | 5.2 | |
| 27-10 | 0.1 | | 0.001 | 0.5 | 5.4 | |
| 27-11 | | 0.001 | 0.001 | 0.1 | 5.7 | |
| 27-12 | | 0.001 | 0.001 | 0.5 | 5.7 | |
| 27-13 | 0.1 | 0.001 | 0.001 | 0.1 | 6.4 | |
| 27-14 | 0.1 | 0.001 | 0.001 | 0.5 | 6.8 | |

(In Table, the numerical value of sweetness intensity indicates the score (average score) of the sensory evaluation.)

From the results of Table 27-1, when a sweetness intensity score (average) of 3.0 points or more is effective for sweetness enhancement, in examples in which glutamylvalylglycine was added alone, a sweetness-enhancing effect was confirmed at a glutamylvalylglycine concentration of 10 ppm or more.

None of the samples had any smell derived from the compounds.

From the results of Table 27-2, the following was confirmed.

In sample No. 27-2, the sweetness intensity score exceeded the sum of the score of sample No. 25-1 (4-methylpentanoic acid 0.1 ppb added alone) shown in Table 25, and the score of glutamylvalylglycine 0.5 ppm added alone shown in Table 27-1, and was 3.0 points or more, which confirmed that a combination of 4-methylpentanoic acid and glutamylvalylglycine synergistically enhances the sweetness intensity.

In sample No. 27-7, the sweetness intensity score exceeded the sum of the score of sample No. 25-1 (4-methylpentanoic acid 0.1 ppb added alone) shown in Table 25, the score of sample No. 25-3 (cyclotene 0.001 ppb added alone) shown in Table 25, and the score of glutamylvalylglycine 0.1 ppm added alone shown in Table 27-1, and was 3.0 points or more, which confirmed that a combination of 4-methylpentanoic acid, cyclotene, and glutamylvalylglycine synergistically enhances the sweetness intensity.

In sample No. 27-8, the sweetness intensity score exceeded the sum of the score of sample No. 25-1 (4-methylpentanoic acid 0.1 ppb added alone) shown in Table 25, the score of sample No. 25-3 (cyclotene 0.001 ppb added alone) shown in Table 25, and the score of glutamylvalylglycine 0.5 ppm added alone shown in Table 27-1, and was 3.0 points or more, which confirmed that a combination of 4-methylpentanoic acid, cyclotene, and glutamylvalylglycine synergistically enhances the sweetness intensity.

In sample No. 27-9, the sweetness intensity score exceeded the sum of the score of sample No. 25-1 (4-methylpentanoic acid 0.1 ppb added alone) shown in Table 25, the score of sample No. 25-5 (decanoic acid 0.001 ppb added alone) shown in Table 25, and the score of glutamylvalylglycine 0.1 ppm added alone shown in Table 27-1, and was 3.0 points or more, which confirmed that a combination of 4-methylpentanoic acid, decanoic acid, and glutamylvalylglycine synergistically enhances the sweetness intensity.

In sample No. 27-10, the sweetness intensity score exceeded the sum of the score of sample No. 25-1 (4-methylpentanoic acid 0.1 ppb added alone) shown in Table 25, the score of sample No. 25-5 (decanoic acid 0.001 ppb added alone) shown in Table 25, and the score of glutamylvalylglycine 0.5 ppm added alone shown in Table 27-1, and was 3.0 points or more, which confirmed that a combination of 4-methylpentanoic acid, decanoic acid, and glutamylvalylglycine synergistically enhances the sweetness intensity.

In sample No. 27-11, the sweetness intensity score exceeded the sum of the score of sample No. 25-3 (cyclotene 0.001 ppb added alone) shown in Table 25, the score of sample No. 25-5 (decanoic acid 0.001 ppb added alone) shown in Table 25, and the score of glutamylvalylglycine 0.1 ppm added alone shown in Table 27-1, and was 3.0 points or more, which confirmed that a combination of cyclotene, decanoic acid, and glutamylvalylglycine synergistically enhances the sweetness intensity.

In sample No. 27-12, the sweetness intensity score exceeded the sum of the score of sample No. 25-3 (cyclotene 0.001 ppb added alone) shown in Table 25, the score of sample No. 25-5 (decanoic acid 0.001 ppb added alone) shown in Table 25, and the score of glutamylvalylglycine 0.5 ppm added alone shown in Table 27-1, and was 3.0 points or more, which confirmed that a combination of cyclotene, decanoic acid, and glutamylvalylglycine synergistically enhances the sweetness intensity.

In sample No. 27-13, the sweetness intensity score exceeded the sum of the score of sample No. 25-1 (4-methylpentanoic acid 0.1 ppb added alone) shown in Table 25, the score of sample No. 25-3 (cyclotene 0.001 ppb added alone) shown in Table 25, the score of sample No. 25-5 (decanoic acid 0.001 ppb added alone) shown in Table 25, and the score of glutamylvalylglycine 0.1 ppm added alone shown in Table 27-1, and was 3.0 points or more, which confirmed that a combination of 4-methylpentanoic acid, cyclotene, dodecanoic acid, and glutamylvalylglycine synergistically enhances the sweetness intensity.

In sample No. 27-14, the sweetness intensity score exceeded the sum of the score of sample No. 25-1 (4-methylpentanoic acid 0.1 ppb added alone) shown in Table 25, the score of sample No. 25-3 (cyclotene 0.001 ppb added alone) shown in Table 25, the score of sample No. 25-5 (decanoic acid 0.001 ppb added alone) shown in Table 25, and the score of glutamylvalylglycine 0.5 ppm added alone shown in Table 27-1, and was 3.0 points or more, which confirmed that a combination of 4-methylpentanoic acid, cyclotene, dodecanoic acid, and glutamylvalylglycine synergistically enhances the sweetness intensity.

None of the samples had any smell derived from the compounds.

### [Experimental Example 28] Sweetness enhancing effect in sucrose-containing orange juice by adding combination of 4-methylpentanoic acid, cyclotene, and decanoic acid, or a combination of said combination with glutamylvalylglycine or naringenin

The following experiment was conducted in order to clarify the sweetness-enhancing effect in sucrose-containing orange juice by adding a combination of 4-methylpentanoic acid, cyclotene, and decanoic acid, or a combination of said combination with glutamylvalylglycine or naringenin.

### (Preparation of sucrose-containing orange juice (reference drink))

The starting materials were mixed according to the blending rate in Table 28-1 to prepare each of sucrose-containing orange juice as reference drinks (negative control orange juice (containing sucrose 8.0%), orange juice of reference 1 (containing sucrose 8.5%), orange juice of reference 2 (containing sucrose 8.5%), orange juice of reference 3 (containing sucrose 9.0%)).

### (Preparation of 4-methylpentanoic acid-containing orange juice (sucrose-containing))

A 4-methylpentanoic acid solution (solvent: propylene glycol) was added at the concentration shown in Table 28-2 to the negative control orange juice to obtain sample No. 28-1.

### (Preparation of cyclotene-containing orange juice (sucrose-containing))

A cyclotene solution (solvent: propylene glycol) was added at the concentration shown in Table 28-2 to the negative control orange juice to obtain sample No. 28-2.

### (Preparation of decanoic acid-containing orange juice (sucrose-containing))

A decanoic acid solution (solvent: propylene glycol) was added at the concentration shown in Table 28-2 to the negative control orange juice to obtain sample No. 28-3.

### (Preparation of glutamylvalylglycine-containing orange juice (sucrose-containing))

A glutamylvalylglycine acid solution (solvent: propylene glycol) was added at the concentration shown in Table 28-2 to the negative control orange juice to obtain sample No. 28-4.

### (Preparation of naringenin-containing orange juice (sucrose-containing))

A naringenin solution (solvent: propylene glycol) was added at the concentration shown in Table 28-2 to the negative control orange juice to obtain sample No. 28-5.

### (Preparation of 4-methylpentanoic acid, cyclotene, and decanoic acid-containing orange juice (sucrose-containing))

4-Methylpentanoic acid, cyclotene, and decanoic acid solution (solvent: propylene glycol) were added at the concentrations shown in Table 28-2 to the negative control orange juice to obtain sample No. 28-6.

### (Preparation of 4-methylpentanoic acid, cyclotene, decanoic acid, and glutamylvalylglycine-containing orange juice (sucrose-containing))

4-Methylpentanoic acid, cyclotene, decanoic acid, and glutamylvalylglycine solution (solvent: propylene glycol) were added at the concentrations shown in Table 28-2 to the negative control orange juice to obtain sample No. 28-7.

### (Preparation of 4-methylpentanoic acid, cyclotene, decanoic acid, and naringenin-containing orange juice (sucrose-containing))

4-Methylpentanoic acid, cyclotene, decanoic acid, and naringenin solution (solvent: propylene glycol) were added at the concentrations shown in Table 28-2 to the negative control orange juice to obtain sample No. 28-8.

The amount of propylene glycol to be added was adjusted to be the same amount for all samples (sample Nos. 28-1 to 28-8).

### (Sensory evaluation)

A sensory evaluation of the presence or absence of sweetness intensity enhancement was performed for each sample by a panel of four experts according to the following evaluation criteria.

### (Evaluation criteria)

Sweetness intensity was evaluated by 0.0 to 10.0 point based on the aforementioned reference samples (negative control (sucrose 8.0%-containing orange juice) (0.0 point); reference 1 (sucrose 8.3%-containing orange juice) (3.0 points); reference 2 (sucrose 8.5%-containing orange juice) (5.0 points); reference 3 (sucrose 9.0%-containing orange juice) (10.0 points)). The average score (rounded to two decimal places) of each expert panelist was calculated. An average score of 3.0 points or more was considered to be functional. A smell was considered to be added when two or more panel members detected a smell derived from the compound.

**[Table 28-1]**

| orange juice blend | | | | |
|---|---|---|---|---|
| starting material | negative control (0.0 point) | reference 1 (3.0 points) | reference 2 (5.0 points) | reference 3 (10.0 points) |
| "Orange cloudy juice" OYAMA (Bx65) | 1.7 | 1.7 | 1.7 | 1.7 |
| sucrose | 8 | 8.3 | 8.5 | 9 |
| citric acid | 0.3 | 0.3 | 0.3 | 0.3 |
| ion exchange water | 90 | 89.7 | 89.5 | 89 |
| total | 100 | 100 | 100 | 100 |

**[Table 28-2]**

| sample No. | 4-methylpentanoic acid concentration (ppb) | cyclotene concentration (ppb) | decanoic acid concentration (ppb) | glutamylvalylglycine concentration (ppm) | naringenin concentration (ppm) | sweetness intensity | smell added |
|---|---|---|---|---|---|---|---|
| 28-1 | 0.1 | | | | | 0.6 | |
| 28-2 | | 0.001 | | | | 1.5 | |
| 28-3 | | | 0.001 | | | 1.6 | |
| 28-4 | | | | 0.5 | | 1.4 | |
| 28-5 | | | | | 10 | 2.0 | |
| 28-6 | 0.1 | 0.001 | 0.001 | | | 4.1 | |
| 28-7 | 0.1 | 0.001 | 0.001 | 0.5 | | 5.9 | |
| 28-8 | 0.1 | 0.001 | 0.001 | | 10 | 6.3 | |

(In Table, the numerical value of sweetness intensity indicates the score (average score) of the sensory evaluation.)

From the results of Table 28-2, the following was confirmed.

In sample No. 28-6, the sweetness intensity score exceeded the sum of the score of sample No. 28-1 (4-methylpentanoic acid 0.1 ppb added alone) shown in Table 28-2, the score of sample No. 28-2 (cyclotene 0.001 ppb added alone) shown in Table 28-2, and the score of sample No. 28-3 (decanoic acid 0.001 ppb added alone) shown in Table 28-2, and was 3.0 points or more, which confirmed that a combination of 4-methylpentanoic acid, cyclotene, and decanoic acid synergistically enhances the sweetness intensity.

In sample No. 28-7, the sweetness intensity score exceeded the sum of the score of sample No. 28-1 (4-methylpentanoic acid 0.1 ppb added alone) shown in Table 28-2, the score of sample No. 28-2 (cyclotene 0.001 ppb added alone) shown in Table 28-2, the score of sample No. 28-3 (decanoic acid 0.001 ppb added alone) shown in Table 28-2, and the score of sample No. 28-4 (glutamylvalylglycine 0.5 ppm added alone) shown in Table 28-2, and was 3.0 points or more, which confirmed that a combination of 4-methylpentanoic acid, cyclotene, decanoic acid, and glutamylvalylglycine synergistically enhances the sweetness intensity.

In sample No. 28-8, the sweetness intensity score exceeded the sum of the score of sample No. 28-1 (4-methylpentanoic acid 0.1 ppb added alone) shown in Table 28-2, the score of sample No. 28-2 (cyclotene 0.001 ppb added alone) shown in Table 28-2, the score of sample No. 28-3 (decanoic acid 0.001 ppb added alone) shown in Table 28-2, and the score of sample No. 28-4 (naringenin 10 ppm) shown in Table 28-2, and was 3.0 points or more, which confirmed that a combination of 4-methylpentanoic acid, cyclotene, decanoic acid, and naringenin synergistically enhances the sweetness intensity.

None of the samples had any smell derived from the compounds.

### [Industrial Applicability]

According to the present invention, a sweetness and/or flavor enhancer, a food or drink containing the enhancer, and a method for enhancing sweetness and/or flavor of a food or drink, which can afford a sense of satisfaction at the time of eating even when the amount of sugar in the food or drink has been reduced, can be provided.

This application is based on patent application No. 2022-177647 filed in Japan, the contents of which are encompassed in full herein.

## Claims

1. A sweetness and/or flavor enhancer comprising any of the following (1) to (21) as an active ingredient:
(1) 4-methylpentanoic acid or a salt thereof
(2) cyclotene
(3) saturated aliphatic monocarboxylic acid having 8 to 12 carbon atoms or a salt thereof
(4) 4-methylpentanoic acid or a salt thereof, and cyclotene
(5) 4-methylpentanoic acid or a salt thereof, and saturated aliphatic monocarboxylic acid having 8 to 12 carbon atoms or a salt thereof
(6) cyclotene, and saturated aliphatic monocarboxylic acid having 8 to 12 carbon atoms or a salt thereof
(7) 4-methylpentanoic acid or a salt thereof, cyclotene, and saturated aliphatic monocarboxylic acid having 8 to 12 carbon atoms or a salt thereof
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine.

2. The enhancer according to claim 1, wherein the active ingredient is the (1) 4-methylpentanoic acid or a salt thereof, and the enhancer is to be added to a food or drink comprising a component that imparts sweetness and/or a component that imparts flavor such that the content of the 4-methylpentanoic acid or a salt thereof in the food or drink is 0.001 weight ppb or more.

3. The enhancer according to claim 1, wherein the active ingredient is the (2) cyclotene, and the enhancer is to be added to a food or drink comprising a component that imparts sweetness and/or a component that imparts flavor such that the content of the cyclotene in the food or drink is 0.001 weight ppb or more.

4. The enhancer according to claim 1, wherein the active ingredient is the (3) saturated aliphatic monocarboxylic acid having 8 to 12 carbon atoms or a salt thereof, and the enhancer is to be added to a food or drink comprising a component that imparts sweetness and/or a component that imparts flavor such that the content of the saturated aliphatic monocarboxylic acid having 8 to 12 carbon atoms or a salt thereof in the food or drink is 0.001 weight ppb or more.

5. The enhancer according to claim 1, wherein the active ingredient is the (4) 4-methylpentanoic acid or a salt thereof, and cyclotene, and the enhancer is to be added to a food or drink comprising a component that imparts sweetness and/or a component that imparts flavor such that the content of the 4-methylpentanoic acid or a salt thereof in the food or drink is 0.0001 weight ppb or more, and the content of the cyclotene in the food or drink is 0.0001 weight ppb or more.

6. The enhancer according to claim 1, wherein the active ingredient is the (5) 4-methylpentanoic acid or a salt thereof, and saturated aliphatic monocarboxylic acid having 8 to 12 carbon atoms or a salt thereof, and the enhancer is to be added to a food or drink comprising a component that imparts sweetness and/or a component that imparts flavor such that the content of the 4-methylpentanoic acid or a salt thereof in the food or drink is 0.0001 weight ppb or more, and the content of the saturated aliphatic monocarboxylic acid having 8 to 12 carbon atoms or a salt thereof in the food or drink is 0.0001 weight ppb or more.

7. The enhancer according to claim 1, wherein the active ingredient is the (6) cyclotene, and saturated aliphatic monocarboxylic acid having 8 to 12 carbon atoms or a salt thereof, and the enhancer is to be added to a food or drink comprising a component that imparts sweetness and/or a component that imparts flavor such that the content of the cyclotene in the food or drink is 0.0001 weight ppb or more, and the content of the saturated aliphatic monocarboxylic acid having 8 to 12 carbon atoms or a salt thereof in the food or drink is 0.0001 weight ppb or more.

8. The enhancer according to claim 1, wherein the active ingredient is the (7) 4-methylpentanoic acid or a salt thereof, cyclotene, and saturated aliphatic monocarboxylic acid having 8 to 12 carbon atoms or a salt thereof, and the enhancer is to be added to a food or drink comprising a component that imparts sweetness and/or a component that imparts flavor such that the content of the 4-methylpentanoic acid or a salt thereof in the food or drink is 0.0001 weight ppb or more, the content of the cyclotene in the food or drink is 0.0001 weight ppb or more, and the content of the saturated aliphatic monocarboxylic acid having 8 to 12 carbon atoms or a salt thereof in the food or drink is 0.0001 weight ppb or more.

9. The enhancer according to claim 1, wherein the active ingredient is the (8) 4-methylpentanoic acid or a salt thereof, and naringenin, and the enhancer is to be added to a food or drink comprising a component that imparts sweetness and/or a component that imparts flavor such that the content of the 4-methylpentanoic acid or a salt thereof in the food or drink is 0.0001 weight ppb or more, and the content of the naringenin in the food or drink is 0.001 weight ppm or more.

10. The enhancer according to claim 1, wherein the active ingredient is the (9) 4-methylpentanoic acid or a salt thereof, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more, and the content of the glutamylvalylglycine in the food or drink is 0.001 weight ppm or more.

11. The enhancer according to claim 1, wherein the active ingredient is the (10) cyclotene, and naringenin, and the enhancer is to be added to a food or drink comprising a component that imparts sweetness and/or a component that imparts flavor such that the content of the cyclotene in the food or drink is 0.000001 weight ppb or more, and the content of the naringenin in the food or drink is 0.001 weight ppm or more.

12. The enhancer according to claim 1, wherein the active ingredient is the (11) cyclotene, and glutamylvalylglycine, and the enhancer is to be added to a food or drink comprising a component that imparts sweetness and/or a component that imparts flavor such that the content of the cyclotene in the food or drink is 0.000001 weight ppb or more, and the content of the glutamylvalylglycine in the food or drink is 0.001 weight ppm or more.

13. The enhancer according to claim 1, wherein the active ingredient is the (12) saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the saturated aliphatic monocarboxylic acid having 8 to 12 carbon atoms or a salt thereof in the food or drink is 0.000001 weight ppb or more, and the content of the naringenin in the food or drink is 0.001 weight ppm or more.

14. The enhancer according to claim 1, wherein the active ingredient is the (13) saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the saturated aliphatic monocarboxylic acid having 8 to 12 carbon atoms or a salt thereof in the food or drink is 0.000001 weight ppb or more, and the content of the glutamylvalylglycine in the food or drink is 0.001 weight ppm or more.

15. The enhancer according to claim 1, wherein the active ingredient is the (14) 4-methylpentanoic acid or a salt thereof, cyclotene, and naringenin, and the enhancer is to be added to a food or drink comprising a component that imparts sweetness and/or a component that imparts flavor such that the content of the 4-methylpentanoic acid or a salt thereof in the food or drink is 0.0001 weight ppb or more, the content of the cyclotene in the food or drink is 0.000001 weight ppb or more, and the content of the naringenin in the food or drink is 0.001 weight ppm or more.

16. The enhancer according to claim 1, wherein the active ingredient is the (15) 4-methylpentanoic acid or a salt thereof, cyclotene, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more, the content of the cyclotene in the food or drink is 0.000001 weight ppb or more, and the content of the glutamylvalylglycine in the food or drink is 0.001 weight ppm or more.

17. The enhancer according to claim 1, wherein the active ingredient is the (16) 4-methylpentanoic acid or a salt thereof, saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the 4-methylpentanoic acid or a salt thereof in the food or drink is 0.0001 weight ppb or more, the content of the saturated aliphatic monocarboxylic acid having 8 to 12 carbon atoms or a salt thereof in the food or drink is 0.000001 weight ppb or more, and the content of the naringenin in the food or drink is 0.001 weight ppm or more.

18. The enhancer according to claim 1, wherein the active ingredient is the (17) 4-methylpentanoic acid or a salt thereof, saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more, the content of the saturated aliphatic monocarboxylic acid having 8 to 12 carbon atoms or a salt thereof in the food or drink is 0.000001 weight ppb or more, and the content of the glutamylvalylglycine in the food or drink is 0.001 weight ppm or more.

19. The enhancer according to claim 1, wherein the active ingredient is the (18) cyclotene, saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the cyclotene in the food or drink is 0.000001 weight ppb or more, the content of the saturated aliphatic monocarboxylic acid having 8 to 12 carbon atoms or a salt thereof in the food or drink is 0.000001 weight ppb or more, and the content of the naringenin in the food or drink is 0.001 weight ppm or more.

20. The enhancer according to claim 1, wherein the active ingredient is the (19) cyclotene, saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the cyclotene in the food or drink is 0.000001 weight ppb or more, the content of the saturated aliphatic monocarboxylic acid having 8 to 12 carbon atoms or a salt thereof in the food or drink is 0.000001 weight ppb or more, and the content of the glutamylvalylglycine in the food or drink is 0.001 weight ppm or more.

21. The enhancer according to claim 1, wherein the active ingredient is the (20) 4-methylpentanoic acid or a salt thereof, cyclotene, saturated aliphatic monocarboxylic acid having 8 to 12 carbon atoms or a salt thereof, and naringenin, and the enhancer is to be added to a food or drink comprising a component that imparts sweetness and/or a component that imparts flavor such that the content of the 4-methylpentanoic acid or a salt thereof in the food or drink is 0.0001 weight ppb or more, the content of the cyclotene in the food or drink is 0.000001 weight ppb or more, the content of the saturated aliphatic monocarboxylic acid having 8 to 12 carbon atoms or a salt thereof in the food or drink is 0.000001 weight ppb or more, and the content of the naringenin in the food or drink is 0.001 weight ppm or more.

22. The enhancer according to claim 1, wherein the active ingredient is the (21) 4-methylpentanoic acid or a salt thereof, cyclotene, saturated aliphatic monocarboxylic acid having 8 to 12 carbon atoms or a salt thereof, and glutamylvalylglycine, and the enhancer is to be added to a food or drink comprising a component that imparts sweetness and/or a component that imparts flavor such that the content of the 4-methylpentanoic acid or a salt thereof in the food or drink is 0.0001 weight ppb or more, the content of the cyclotene in the food or drink is 0.000001 weight ppb or more, the content of the saturated aliphatic monocarboxylic acid having 8 to 12 carbon atoms or a salt thereof in the food or drink is 0.000001 weight ppb or more, and the content of the glutamylvalylglycine in the food or drink is 0.001 weight ppm or more.

23. The enhancer according to claim 1, wherein the enhancer is used for addition to a food or drink comprising a component that imparts sweetness and/or a component that imparts flavor,
the component that imparts flavor is juice obtained from fruits, and
the enhancement of flavor is enhancement of a fruit flavor.

24. The enhancer according to claim 1, wherein the enhancer is used for addition to a food or drink comprising a component that imparts sweetness and/or a component that imparts flavor,
the component that imparts flavor is a coffee bean extract, and
the enhancement of flavor is enhancement of a coffee flavor.

25. The enhancer according to claim 1, wherein the enhancer is used for addition to a food or drink comprising a component that imparts sweetness and/or a component that imparts flavor,
the component that imparts flavor is a tea extract, and
the enhancement of flavor is enhancement of a tea flavor.

26. The enhancer according to claim 1, wherein the enhancer is used for addition to a food or drink comprising a component that imparts sweetness and/or a component that imparts flavor,
the component that imparts flavor is a component that imparts a milk flavor, and
the enhancement of flavor is enhancement of a milk flavor.

27. A food or drink comprising the enhancer according to any one of claims 1 to 26, and a component that imparts sweetness and/or a component that imparts flavor.

28. A composition comprising at least one selected from the group consisting of (1) 4-methylpentanoic acid or a salt thereof, (2) cyclotene, and (3) saturated aliphatic monocarboxylic acid having 8 to 12 carbon atoms or a salt thereof, and naringenin or glutamylvalylglycine.

29. A method for enhancing sweetness and/or flavor of a food or drink comprising a component that imparts sweetness and/or a component that imparts flavor, comprising adding any of the following (1) to (21) to the food or drink:
(1) 4-methylpentanoic acid or a salt thereof
(2) cyclotene
(3) saturated aliphatic monocarboxylic acid having 8 to 12 carbon atoms or a salt thereof
(4) 4-methylpentanoic acid or a salt thereof, and cyclotene
(5) 4-methylpentanoic acid or a salt thereof, and saturated aliphatic monocarboxylic acid having 8 to 12 carbon atoms or a salt thereof
(6) cyclotene, and saturated aliphatic monocarboxylic acid having 8 to 12 carbon atoms or a salt thereof
(7) 4-methylpentanoic acid or a salt thereof, cyclotene, and saturated aliphatic monocarboxylic acid having 8 to 12 carbon atoms or a salt thereof
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine.

30. A method for producing a sweetness and/or flavor enhancer, comprising a step of mixing any of the following active ingredients (1) to (21), and a base:
(1) 4-methylpentanoic acid or a salt thereof
(2) cyclotene
(3) saturated aliphatic monocarboxylic acid having 8 to 12 carbon atoms or a salt thereof
(4) 4-methylpentanoic acid or a salt thereof, and cyclotene
(5) 4-methylpentanoic acid or a salt thereof, and saturated aliphatic monocarboxylic acid having 8 to 12 carbon atoms or a salt thereof
(6) cyclotene, and saturated aliphatic monocarboxylic acid having 8 to 12 carbon atoms or a salt thereof
(7) 4-methylpentanoic acid or a salt thereof, cyclotene, and saturated aliphatic monocarboxylic acid having 8 to 12 carbon atoms or a salt thereof
(8) 4-methylpentanoic acid or a salt thereof, and naringenin
(9) 4-methylpentanoic acid or a salt thereof, and glutamylvalylglycine
(10) cyclotene, and naringenin
(11) cyclotene, and glutamylvalylglycine
(12) saturated aliphatic monocarboxylic acid having 8 to 12 carbon atoms or a salt thereof, and naringenin
(13) saturated aliphatic monocarboxylic acid having 8 to 12 carbon atoms or a salt thereof, and glutamylvalylglycine
(14) 4-methylpentanoic acid or a salt thereof, cyclotene, and naringenin
(15) 4-methylpentanoic acid or a salt thereof, cyclotene, and glutamylvalylglycine
(16) 4-methylpentanoic acid or a salt thereof, saturated aliphatic monocarboxylic acid having 8 to 12 carbon atoms or a salt thereof, and naringenin
(17) 4-methylpentanoic acid or a salt thereof, saturated aliphatic monocarboxylic acid having 8 to 12 carbon atoms or a salt thereof, and glutamylvalylglycine
(18) cyclotene, saturated aliphatic monocarboxylic acid having 8 to 12 carbon atoms or a salt thereof, and naringenin
(19) cyclotene, saturated aliphatic monocarboxylic acid having 8 to 12 carbon atoms or a salt thereof, and glutamylvalylglycine
(20) 4-methylpentanoic acid or a salt thereof, cyclotene, saturated aliphatic monocarboxylic acid having 8 to 12 carbon atoms or a salt thereof, and naringenin
(21) 4-methylpentanoic acid or a salt thereof, cyclotene, saturated aliphatic monocarboxylic acid having 8 to 12 carbon atoms or a salt thereof, and glutamylvalylglycine.

31. A method for producing a food or drink, comprising a step of adding the enhancer according to any one of claims 1 to 26 to a food or drink comprising a component that imparts sweetness and/or a component that imparts flavor.
